# EUROPEAN PATENT APPLICATION

(11) **EP 1 248 465 A1**
(43) Date of publication of application: **09.10.2002**
(21) Application number: 00977947.1
(22) Date of filing: 24.11.2000
(51) Int. Cl.: H04N 7/18, H04N 5/225, H04N 5/232, G06T 1/00

(54) **DATA ACQUISITION SYSTEM, ARTIFICIAL EYE, VISION DEVICE, IMAGE SENSOR AND ASSOCIATED DEVICE**

(30) Priority: 30.11.1999 JP 33936099; 27.12.1999 JP 36922099; 31.01.2000 JP 2000021315; 09.03.2000 JP 2000064544; 13.03.2000 JP 2000068155; 13.04.2000 JP 2000111675; 11.05.2000 JP 2000138125; 12.06.2000 JP 2000174616; 04.08.2000 JP 2000236461; 23.10.2000 JP 2000322422
(71) Applicant: Ecchandes Inc., Gamagori-shi, Aichi 443-0057 (JP)
(72) Inventor: Ajioka, Yoshiaki, Gamagori-shi, Aichi 443-0057 (JP)
(74) Representative: Calderbank, Thomas Roger
(86) International application number: JP0008334
(87) International publication number: WO01041448

(57) **Abstract**

A data acquisition system comprises one or more artificial eyes (1) and one or more user terminal (4) connecting via a network, as shown in FIG.1. The artificial eye (1) comprises a moving camera (10), a visual device (2) and a communication device (7), as shown in FIG.10. Since the moving camera (10) can take a high resolution image of an object in a wide area, by the visual device's (2) controlling pan, tilt, roll and zoom of the moving camera (10) searching the object, as shown in FIG.14, a user can find out the object more quickly and correctly. In addition, since the visual device (2) recognizes type of the object, the communication device (7) can send only an animation image representing the specific type of objects.

## Description

### FIELD OF THE INVENTION

The present invention relates to a data aquisition system using some artificial eyes tracking objects and generating images representing only the objects, whose visual device can generate a normalized image of the objects, type, position, size and the number of the objects from an animation image taken by a moving camera which has a mechanism of pan, tilt, roll and zoom, whose visual device controls the moving camera as the objects are taken widely at the center of an animation image, and whose communication device sends an image of object areas separated from the background by the visual device to some user terminals via cable and wireless communication networks.

### BACKGROUND OF THE INVENTION

Many photographic devices using moving cameras have been researched (refer to Published Unexamined Japanese Patent Application No. S63-54699, Published Unexamined Japanese Patent Application No. H3-164341, Published Unexamined Japanese Patent Application No. H5-297325). Especially, 1ms visual feedback system has been recently developed as a photographic device tracking a fast moving object (refer to Yoshihiro Nakabo, Idaku Ishii, Masatoshi Ishikawa, "1ms target tracking system using massively parallel processing vision", Journal of the Robotics Society of Japan, Vol.15, No.3, pp.417-421, 1997). However, since these moving cameras use a driving system based on conventional motors, there are some problems that camera equipments are too large, range of their operation is limited, and so on.

A spherical multi-DOF(Degree of Freedom) motor is useful to solve these problems (e.g., refer to Published Unexamined Japanese Patent Application No. H6-210585, Nikkan Kougyou Shinbun, p.6, Dec. 15, 1999). Furthermore, mechanism and control of the multi-DOF motor become simpler, by using an ultrasonic motor instead of a conventional motor in the multi-DOF motor (refer to Published Unexamined Japanese Patent Application No. S62-228392, Shigeki Toyama, Development of spherical ultrasonic motor, Tribologists, Vol.40, No.8, pp.627-631, 1995, Published Unexamined Japanese Patent Application No. H7-80793, Published Unexamined Japanese Patent Application No. H9-54356, Published Unexamined Japanese Patent Application No. H11-18459, Keisuke Sasae, Yasuo Ohtsuki, Osamu Miki, Yoshimitsu Kurosaki, Development of a friction-type multi-D.O.F motor driven by piezoelectric actuators Kawasaki Technical Review, Vol.136, Summary, 1998-01, [online]. Kawasaki Heavy Industries, Ltd. [retrieved on 2001-01-20]. Retrieved from Internet: <URL:http://www.khi.co.jp/tech/nj136g07.htm>). A moving camera using this ultrasonic motor has also been developed (refer to Published Unexamined Japanese Patent Application No. H11-84526). In addition, a multi-DOF piezoactuator which does not use a conventional ultrasonic motor is also developed (refer to Japanese Patent Application No.2000-243635). A small moving camera possible to be installed in a cellular phone can be made since the multi-DOF motor consumes low power and a control device becomes simpler if this piezoactuator is used.

On the other hand, some vision chips or image sensors for processing an image taken by a camera have also been developed as follows; CLIP4 (refer to M.J.B.Duff, "CLIP4:A large scale integrated circuit array parallel processor", Proc. IJCPR-3, Vol.4, pp.728-733, 1976), MPP (refer to K.E.Batcher, "MPP:A high-speed image processor", L.Snyder, L.H.Jamieson, D.B.Gannon, H.J.Siegel, ed., Algorithmicallyspecialized parallel computers, pp.59-68, Academic Press, 1985), *S*³*PE* (Simple and Smart Sensory Processing Element) Vision Chip (refer to Takashi Komuro, Shinsuke Suzuki, Idaku Ishii, Masatoshi Ishikawa, Design of massively parallel vision chip using general-purpose processing elements, IEICE Transaction, Vol.J81-D-I, No.2, pp.70-76, 1998), Artificial Retinal LSI (refer to Published Unexamined Japanese Patent Application No. H6-139361, Published Unexamined Japanese Patent Application No. H11-177889), Generic Visual Perception Processor (GVPP) (refer to Vision Chip's Circuitry Has Its Eye Out For You. TechWeb News, 1997-09-13. [online]. CMP Media Inc., 1999. [retrieved on 1999-12-19]. Retrieved from the Internet: <URL:http://www.techweb.com/wire/news/1997/09/0913vision.html>), Vision Chip (refer to 'Eye' Chip Tracks Movement. Wired News, 1999-04-10. [online]. Wired Ventures Inc. and affiliated companies, 1999. [retrieved on 1999-12-19]. Retrieved from the Internet: <URL:http://www.wired.com/news/news/technology/story/19046.html>), and so on. These can carry out some kinds of simple processing like edge detection and optical flow detection, but they have many problems as follows; they use some 1-bit operation circuits, they use some analog circuits, they carry out only multiply-accumulate operation, they use some SIMD(Single Instruction Stream Multi Data Stream)-type multi processors which must synchronize in a whole LSI (Large Scale Integrated Circuit), it is very difficult for them to realize some kinds of image processing in a vision chip because their architecture and some algorithms of the image processing are inconsistent, they have a restriction that objects and photographic environment are limited to what it is easy to form into binary values, and so on. In addition, although *S*³*PE* can track a fast moving object by being connected to a moving camera, *S*³*PE* is influenced by its photographic environment and velocity of the moving object, and also must carry out image processing for a still object and image processing for the moving object by two different device, respectively. Moreover, although a wireless image communication device sending an image of an object detected by an artificial retinal LSI has been developed, applications of this device are limited to a monitoring equipment using a fixed camera, and so on, because this device does not have a function for controlling a moving camera.

Generally speaking, many problems of such vision chips are caused by implementation technology of LSI, especially the degree of accumulation. In short, they say a vision chip can carry out more functional image processing for an animation image the number of whose pixels is more if an LSI can accumulate more transistors. Recently, however, LSIs which are fast and have much transistors have been developed by rapid progress of LSI technology. As concerns the degree of accumulation of LSIs, since the LSIs have more and more transistors not only by technology detailing the design rule but also by developing three dimensional LSI technology, especially technology of making wafers revailing (e.g., refer to Published Unexamined Japanese Patent Application No. H5-160340, Published Unexamined Japanese Patent Application No. H6-268154, Koyanagi,M., Kurino,H., Lee,K-W., Sakuma,K., Miyakawa,N., Itani,H., "Future System-on-Silicon LSI Chips", IEEE MICRO, Vol.18, No.4, pp.17-22, 1998), some digital circuits implemented in some separated LSIs in past come to be implemented in an LSI easily. Moreover, since technology stacking many chips (e.g., refer to Nikkei Microdevices, June 2000, pp.62-79, Nikkei Microdevices June 2000, pp.157-164, Nikkei Microdevices June 2000, pp.176) has been developed, LSI designers come to be able to design electronic circuits more easily than by convensional three dimensional LSI technology. In addition, LSI designers can shorten wiring length by using three dimensional LSI technology. As a result, they come to be able to design LSIs easily.

As the actual problem concerning rather design and manufacturing of an LSI, it is suggested that the higher the frequency of a clock signal becomes, the more and more serious the clock skew and propagation delay time of signals become. The reason why many vision chips using analog circuits are researched is that it becomes difficult for the clock signal to synchronize a whole LSI, and moreover the calorific value of the LSI increases because the degree of accumulation of the LSI does not reach to the necessary amount, rather the frequency of the clock signal must come to be higher in order for digital circuits to carry out processing in continuously variant environtment in real time. Of course, the factor that it is difficult for the clock signal to synchronize a whole LSI is exactly that the conventional vision chips carry out such global processing as threshold calculation, histgram calculation and segmentation.

Then, this inventor has been developed a visual device for controlling a moving camera and image processing (e.g., refer to Published Unexamined Japanese Patent Application No. H11-253634, PCT Publication Number WO 00/16259, Japanese Patent Applicaiton No.2000-269500). This visual device is a device which finds some objects and carries out image processing for the objects, by controlling mechanism of pan, tilt and zoom. almost all image procressings which the visual device carries out are some kinds of local processing, which are carried out by array operation units arranged in the shape of a two dimensional lattice. In a case that the array operation units are implemented in an LSI, each array operation unit has been designed as it can communicate to an adjoining array operation unit asynchronously. Thus, since wiring pattern becomes very simple and wiring length becomes short, the LSI can decrease power consumption, while it increases implementation area of transistors. Furthermore, all array operation units do not always have to be synchronized. In a case that the size of the LSI is large, note that some clock signals whose periods are equivalent and some reset signals whose phases seldom shift each other must be supplied to all array operation units.

Considering these facts, an image sensor which combines the visual device with some photodetectors like a photodiode comes to be developed, based on presently usable technology of large scale integrated circuits and three dimensional large scale integrated circuits. In addition, a moving camera controlled by the visual device comes to be made by installing this image sensor in a multi-DOF motor.

Recently, moreover, the research realizing the artificial vision was presented, by sending some electronic signals of an edge image to some visual areas in an occipital lobe of a human brain directly by an electrode array terminal, after detecting the edge from an image taken by a fixed CCD camera attached in the glasses by sobel filter (refer to Computer Helps Blind Man 'See'. Wired News, 2000-01-17. [online]. Wired Ventures Inc. and affiliated companies, 2000. [retrieved on 2000-01-20]. Retrieved from the Internet: <URL:http://www.wired.com/news/technology/0,1282,33691,00.html>). Since patiant's view is extremely narrow, he must find out an object by shaking his head, and can read a character whose size is only almost five centimeters at a position where he is 1.5 meters away from the character. Because of success of this research, however, it is guessed that an embedding-type artificial eye realizing the artificial vision whose view is wide and whose resolution is high comes to be requested by many blind persons and many visually handicapped persons.

Considering these facts, an artificial eye comes to be made, for example, in which a moving camera carrying a multi-DOF motor controlled by a visual device can find out an object, and the visual device can send a normalized image, type, position, size and variance of the position of the object taken by the moving camera to a brain directly.

Now, we have come to be able to send an animation image to a remote place, by progress of the Internet technology centerring on high-speed cable communication and wide-band wireless communication technology. Especially, an environment in which everyone always can send the animation image cheaply from anywhere comes to be ready, because some IMT-2000 (DS-CDMA and MC-CDMA) and Bluetooth-compatible cellular phones have been sold (e.g., refer to Published Unexamined Japanese Patent Application No. H6-233020, Published Unexamined Japanese Patent Application No. H7-312783, Published Unexamined Japanese Patent Application No. H8-163085, Published Unexamined Japanese Patent Application No. H8-294030, Published Unexamined Japanese Patent Application No. H11-346364).

Considering these facts, a communication device comes to send an animation image representing a specific object to a remote place, since a moving camera carrying a multi-DOF motor controlled by a visual device take the animation image of the object and the visual device judges type of the object.

Finally, some high-performance voice synthesis devices (refer to Published Unexamined Japanese Patent Application No. H5-53595, Published Unexamined Japanese Patent Application No. H5-94196, Published Unexamined Japanese Patent Application No. H5-108084) and some high-performance voice recognition devices (refer to Published Unexamined Japanese Patent Application No. H5-2399, Published Unexamined Japanese Patent Application No. H5-11798, Published Unexamined Japanese Patent Application No. H5-19787) have been recently developed, a user comes to be able to use a navigation system easily via his voice, by assembling these devices in the navigation system with a speaker and a microphone (refer to Published Unexamined Japanese Patent Application No. H6-20196, Published Unexamined Japanese Patent Application No. H8-35846, Published Unexamined Japanese Patent Application No. H11-276516).

Considering these facts, a user comes to be able to control a visual device via his voice, by using a voice recognition device, and he also comes to be able to know type of objects recognized by the visual device via mechanical voice.

In the present invention, a moving camera sends an animation image representing objects to a remote user terminal, even though the moving camera is always controlled from a remote place, by using a visual device controlling the moving camera. In addition, the visual device and some photodetectors are implemented in an LSI which are installed in the moving camera.

### SUMMARY OF THE INVENTION

The invention described in claim 1 is a data acquisition system comprising one or more artificial eyes and one or more user terminals connected to a communication network, wherein said artificial eyes have moving cameras, visual devices and communication devices, wherein said moving cameras have mechanism carrying out at least one of pan, tilt, roll and zoom, wherein said visual devices carry out: capturing digital images from animation images taken by said moving cameras; generating type, position and the number of objects in said digital images; controlling said mechanism carrying out at least one of said pan, said tilt, said roll and said zoom, wherein said communication devices comprise: sending at least one of said digital images, said type, said position and said number to said user terminals; receiving control commands corresponding to said pan, said tilt, said roll and said zoom from said user terminals, and sending said control commands to said visual devices, wherein said user terminals comprise central control devices, displays and control buttons, wherein said central control devices receive at least one of said digital images, said type, said position and said number from said communication devices, wherein said displays display at least one of said digital images, said type, said position and said number, wherein said user terminals generate said control commands assigned to said control buttons, wherein said central control devices send said control commands to said communication devices. The artificial eye can take the animation image representing the objects whose size is suitable at the center, by using the moving camera having the mechanism carrying out at least one of the pan, the tilt, the roll and the zoom. The visual device generates the type, the position and the number of the objects from the digital images, and controls the moving camera according to the position. The communication network comprises cable technology like USB (Universal Serial Bus), Ethernet, ISDN (Integrated Services Digital Network), xDSL (Digital Subscriber Line), ATM (Asynchronous Transfer Mode), Frame Relay and so on, and wireless technology like IMT-2000 (DS-CDMA and MC-CDMA), Bluetooth and so on. The communication device has mechanism sending the digital images, the type, the position and the number to the communication network, and receiving the control commands from it. The user terminal adopts a computer having the display and the control buttons, a cellular phone, a personal digital assistant, a navigation system and so on. The central control device has communication function to the communication network, and outputs the type, the position and the number to the display, and moreover inputs the control commands from the control buttons. In the present invention, the user does not have to control the moving camera finely, because the visual device always controls the moving camera. In addition, in the present invention, since the visual device recognizes type of the object in an image taken by the moving camera, the aritificial eye can send information on the object which the user would like to know to the user terminal. In short, since the user terminal can output the information to the display only when the image of the object which the user would like to know was taken, the user does not always have to pay attention to the display, and the artificial eye does not always occupy the communication network. Since the present invention releases the user from controlling the moving camera, many problems on photography of the objects and communication are solved very well.

The invention described in claim 2 is a data acquisition system comprising one or more artificial eyes, a data base and one or more user terminals, wherein said artificial eyes have moving cameras, visual devices and communication devices, wherein said moving cameras have mechanism carrying out at least one of pan, tilt, roll and zoom, wherein said visual devices carry out: capturing digital images from animation images taken by said moving cameras; generating type, position and the number of objects in said digital images; wherein said communication devices send at least one of said digital images, said type, said position and said number to said data base, wherein said data base comprises: accumulating said digital images, said type, said position and said number; generating statistical data from said digital images, said type, said position and said number; searching said digital images, said type, said position, said number and said statistical data, by using search keys; wherein said user terminals comprise central control devices, displays and control buttons, wherein said central control devices receive at least one of said digital images, said type, said position, said number and said statistical data from said communication devices, wherein said displays display at least one of said digital images, said type, said position, said number and said statistical data, wherein said user terminals generate said search keys directed by said control buttons, wherein said central control devices send said search keys to said communication devices. The artificial eye can take the animation image representing the objects whose size is suitable at the center, by using the moving camera having the mechanism carrying out at least one of the pan, the tilt, the roll and the zoom. The visual device generates the type, the position and the number of the objects from the digital images, and controls the moving camera according to the position. The communication network comprises cable technology like USB (Universal Serial Bus), Ethernet, ISDN (Integrated Services Digital Network), xDSL (Digital Subscriber Line), ATM (Asynchronous Transfer Mode), Frame Relay and so on, and wireless technology like IMT-2000 (DS-CDMA and MC-CDMA), Bluetooth and so on. The communication device has mechanism sending the digital images, the type, the position and the number to the communication network. The database calcurates the statistical data by the digital images, the type, the position and the number, by using mathematical methods like average, distribution, principal component analysis, finite element method, linear planning method, Beyesian estimation and so on. The database adopts relational database and object-oriented database having database makeup language like SQL (Structure Query Language). The user terminal adopts a computer having the display and the control buttons, a cellular phone, a personal digital assistant, a navigation system and so on. The central control device has communication function to the communication network, and outputs the type, the position, the number and the statisitical data to the display and moreover inputs the search keys from the control buttons. In the present invention, the user can get the statistical data corresponding to the search keys like the type, a domain, a location, a season, a day, a time and so on, because the database stores the digital images, the type, the position and the number for a long time. In the present invention, therefore, many problems on counting and prediction of the objects are solved very well.

The invention described in claim 3 is a data acquisition system according to claim 1 or 2, wherein said user terminals have at least one of a voice synthesis device having a speaker and a voice recognition device having a microphone, said voice synthesis device converts said type, said position, said number and said statistical data to a voice signal, and said voice recognition device converts a voice collected by said microphone to said control commands and said search keys. The user terminal adopts a computer having the display, the speaker, the control buttons and the microphone, a cellular phone, a personal digital assistant, a navigation system and so on. The central control device has communication function to the communication network, and outputs the type, the position, the number and the statisitical data to the display and the voice synthesis device, and moreover inputs the search keys from the control buttons and the voice recognition device. The voice synthesis device converts the type, the position, the number and the statistical data to the voice signal, and output to the speaker. The voice recognition device converts the voice collected by the microphone to the control commands and the search keys. A user of the present invention can use the user terminal even though he does not use the display and the control buttons. In the present invention, therefore, many problems on user interface are solved very well.

The invention described in claim 4 is an artificial eye having a moving camera and a visual device, wherein said moving camera has at least one of mechanisms carrying out pan, tilt, roll and zoom, and said visual device comprises: means for capturing digital images from an animation image taken by said moving camera; means for distinguishing type of objects in said digital images; means for detecting position, size and inclination of said objects; means for counting the number of said objects; means for controlling said mechanisms carrying out said pan, said tilt, said roll and said zoom; and means for outputting said digital images, said type, said position and said number. The moving camera can realize the mechanism carrying out the pan, the tilt, the roll and the zoom, by combining some cylinders and a one-axis motor, or by using a multi-frexibility motor. The moving camera can take the animation image representing the objects at the center, whose size is necessary for recognizing the objects. The visual device segments the objects from the digital images, distinguishes the type, detects the position, the size and the inclination, and counts the number, by carrying out local and parallel image processing like an edge-information generation means, an edge-information formation means, a figure/ground separation means, a position/size detection means, a position/size/inclination detection means and a pattern matching means. In addition, the visual device controls the pan, the tilt, the roll and the zoom of the moving camera, by using the position, and moreover controls them, by using control commands inputted from an external part. Even in both cases that the position of the objects is not clear beforehand and the objects are moving, the present invention can turn the moving camera to the objects. Since the present invention releases a user of the present invention from controlling the moving camera, many problems on photography of the objects are solved very well.

The invention described in claim 5 is an artificial eye according to claim 4, having a communication device, wherein said communication device comprises: means for compressing said digital images; and means for sending compressed said digital images, said type, said position and said number via a communication network. The communication device sends the compressed digital images, the type, the position and the number to the communication network, and receives the control commands from it. In order to compress the digital images, the communication device selects the digital images representing the specific type of the objects, by using the type distinguished by the visual device. Furthermore, the communication device can send the selected digital images whose areas except the objects are masked. In addition, the communication device can also reduce the amount of data of the digital images, by using image compression technology like MPEG (Moving Picture Experts Group) and JPEG (Joint Photographic coding Experts Group). The present invention can send only the digital images representing the objects to the communication network. Since the present invention reduce load of the communication network and moreover it can tell a user of the present invention the existence of the objects, many problems on photography of the objects and communication are solved very well.

The invention described in claim 6 is an artificial eye according to claim 4, having a stimulus generating device, an electrode array terminal, a connector and a battery, wherein said stimulus generating device converts a normalized image, said type, said position, said size and variance of said position of said objects to electric stimuli, and said electrode array terminal tells said electric stimuli to a brain via said connector. The stimulus generating device can convert the normalized image, the type, the position, the size and the variance of the position of the objects to such the electric stimuli as neurons can excite suitably, by using a D/A converter. Platinum is adopted for electrodes of the electrode array terminal, and the electrode array terminal are embedded in an occipital lobe, a temporal lobe, a parietal lobe, a frontal lobe and so on of the brain. A battery repeatable to charge like a lithium ion battery, and a battery whose electric discharge time is long like a fuel cell are adopted for the battery. A user of the present invention can remove and exchange the moving camera, the visual device, the stimulus generating device and the battery, by separating the connector. Since the present invention converts the normalized image, the type, the position, the size and the variance of the position of the objects found out by the moving camera and the visual device to the electric stimuli, followed by sending directly the electric stimuli to the brain of the user, the user can recognize the objects after finding out them easily without it is confused by the size of the objects in the digital images and environment surround the objects. Since the present invention can make the user recognize the objects by high probability in a short time, many problems on artificial vision are solved very well.

The invention described in claim 7 is an artificial eye according to claim 4, 5 or 6, wherein said moving camera carries an image sensor that accumulates photodetectors, A/D converters and said visual device. The photodetectors are realized by photodiodes, and CCD (Charge Coupled Device) or CMOS (Complementary Metal Oxide Semiconductor). The photodetectors, the A/D converters and the visual device are accumulated on the image sensor by using LSI (Large Scale Integrated Circuit) technology and three-dimensional LSI technology. In the present invention, since the digital images can be sent from the A/D converters to the visual device every pixel in parallel, the A/D converters and the visual device can make a electronic circuit for sending the digital images simple. Since the present invention can reduce the number of electronic parts, moreover size of the artificial eye, many problems on manufacturing the artificial vision are solved very well.

The invention described in claim 8 is a visual device, wherein each of array operation units arranged in the shape of a lattice comprises: means for initializing said array operation unit; means for finishing processing if there is no binary information to be inputted; means for inputting said binary information; means for transforming said binary information into redundant information; means for calculating gravity center from neighbors of a band-pixel value in a redundant-information image representing said redundant information, and converting a transfer value derived from said gravity center to a band-pixel value of a transfer-value image by operating imagery of position; means for transferring each of band-pixel values in a transfer-source redundant-information image representing transfer-source redundant information to transfer position, according to said transfer value, for each transfer source; means for transferring said band-pixel value in said redundant-information image to said transfer position, according to said transfer value; means for updating each of said band-pixel values in said transfer-source redundant-information image to a summation of a summation of all of said band-pixel values in said transfer-source redundant-information image which have already been transferred and a value corresponding to said band-pixel value in said redundant-information image which have already been transferred, for each of said transfer-sources; means for updating said band-pixel value in said redundant-information image to a summation of all of said band-pixel values in said redundant-information image which have already been transferred; means for calculating an inclination angle from all of said band-pixel values in said transfer-source redundant-information image; and means for outputting said band-pixel value in said redundant-information image and said inclination angle. In short, this is the enforcement form of an algorithm for realizing a function offered by the array operation units by using digital technology. After the array operation units were arranged in the shape of a lattice, followed by connecting the neighbor array operation units each to each, and by initializing each parameter in the array operation units, the present invention inputs a binary image consisting of the binary information every pixel if desired, and carries out a sequence of processes from calculating gravity center to outputting the redundant-information image and the inclination angle, one by one. The present invention repeats a sequence of these processes until the binary image comes not to be inputted. Since the present invention can work the array operation units in parallel, many problems on detection of position, size and inclination are solved very well.

The invention described in claim 9 is a visual device including array operation units arranged in the shape of a lattice, each of which has a processor, a memory and a plurality of controllers comprising; means for distinguishing said array operation unit that sends data transmitted between said array operation units; and means for distinguishing type of said data transmitted, wherein each of said array operation units communicates a plurality of said data simultaneously to said adjoining array operation unit, by connecting each of said controllers to one of said controllers in said adjoining array operation unit by signal lines. Since the processor controls the some controllers in the array operation unit, The array operation unit can transmit efficiently the some data in the memory to the memory in the adjoining array operation units. Since the present invention can transmit the many data for a short time, many problems on performance of the visual device carrying out many kinds of local and parallel image processing are solved very well.

The invention described in claim 10 is a visual device according to claim 9, wherein said signal lines between said array operation units do not cross, by stacking all of said controllers in each of said array operation units. Since a designer of an LSI (Large Scale Integrated Circuit) can stack all of the controllers by using three-dimensional LSI technology, each of all of the stacked controllers comes to be arranged in the shape of a lattice. In this case, the signal lines between the controllers do not cross by connecting the adjoining controllers implemented in layers, whose height is the same, by the signal lines. Since the present invention can make wiring patterns of the signal lines in all of the layers equal, and moreover it can make wiring length of the signal lines short, many problems on designing and manufacturing of three-dimensional LSIs are solved very well.

The invention described in claim 11 is a visual device comprising a plurality of virtual array operation units arranged in the shape of a lattice, each of which has a processor, a memory and a plurality of controllers, each of which has a front input register set that has one or more front input registers which are shift registers and one or more counters, wherein, in each of said virtual array operation units, said processor carries out programs of a plurality of array operation units arranged in the shape of a lattice; said controller communicates with said controllers in said adjoining virtual array operation units; said shift register inputs a plurality of result data arranged in the shape of a lattice in order and memorizes them; said counter counts the number of said result data; and said processor selects one of said result data and inputs it. In the present invention, the number of the controllers is more than or equal to the maximum number of height and width of the array operation units arranged in the shape of a lattice. Some of the array operation units arranged in the shape of a lattice, which are adjoining with the virtual array operation units, are classified into upper, lower, left and right communication directions, and they are corresponded to one of the controllers which is different from each other every direction. If the virtual array operation unit can distinguish which direction the controller belongs in and which number of the controllers it inputted calculation data from, the virtual array operation unit can distinguish which of the array operation units the calculation data is outputted from. In the present invention, a front input register has the shift register, whose capacity is enough for storing the result data which all of the array operation units output, and the counter, and the shift register stores the result data inputted in fixed turn as turn. Threfore, in the case that the result data of some of the array operation units arranged in the shape of a lattice are communicated between two of the virtual array operation units, the order of the result data can be remained. The initial value of the counter is set to the number of the array operation units. Whenever the array operation units output the result data, the counter counts down. Thus, when all of the result data are outputted from the array operation units, a value of the counter comes to be zero. In this time, the controller sets FRONT INPUT SEND to one. After the processor read all of the result data in the shift register, the processor sets FRONT INPUT SEND STATUS to zero. The present invention can implement some of the array operation units in one of the virtual array operation units as a program. Since the present invention can realize many of the array operation units in spite of a little amount of hardware, many problems on manufacturing the visual device are solved very well.

The invention described in claim 12 is an image sensor including functional blocks arranged in the shape of a lattice, in each of which, there are one or more photodetectors, one or more A/D converters and one or more array operation units; said photodetectors and said A/D converters are connected one by one; all of said array operation units input digital signals from at least one of all of said A/D converters and all of said array operation units; and all of said array operation units input clock signals, wherein said array operation units carry out image processing for an animation image taken by said photodetectors, by connecting said array operation units between said adjoining functional blocks one by one. The photodetectors are realized by photodiodes, and CCD (Charge Coupled Device) or CMOS (Complementary Metal Oxide Semiconductor). The photodetectors, the A/D converters and the array operation units are accumulated on the image sensor by using LSI (Large Scale Integrated Circuit) technology and three-dimensional LSI technology. Since a designer of the image sensor can stack the array operation units in the functional block by using the three-dimensional LSI technology, the designer does not have to cross signal lines of the array operation units between the functional blocks. In the present invention, the digital signals are sent from the A/D converters to the array operation units in the image sensor, the A/D converters and the array operation units can make digital circuits for sending the digital signals simple, moreover it can send the digital signals fast. In the present invention, since the array operation units also communicate asynchronously with the array operation units in the adjoining functional blocks, the clock signals only have to synchronize the array operation units in the functional block, in spite of the number of the functional blocks in the image sensor. Since the present invention can reduce the number of electrical parts and the complexity of wiring, moreover it can work the image sensor fast, many problems on designing and manufacturing the image sensor are solved very well.

The invention described in claim 13 is an image sensor including functional blocks arranged in the shape of a lattice, in each of which, there are a plurality of photodetectors, a plurality of A/D converters, one or more parallel/serial converters and one or more virtual array operation units; said photodetectors and said A/D converters are connected one by one; said A/D converters and said parallel/serial converter are connected every band of photodetectors; all of said virtual array operation units input digital signals from at least one of all of said parallel/serial converters and all of said virtual array operation units; and all of said virtual array operation units input clock signals, wherein said virtual array operation units carry out image processing for an animation image taken by said photodetectors, by connecting said virtual array operation units between said adjoining functional blocks one by one. The photodetectors are realized by CCD (Charge Coupled Device) and CMOS (Complementary Metal Oxide Semiconductor). The photodetectors, the A/D converters, the parallel/serial converters and the virtual array operation units are accumulated on the image sensor by using LSI (Large Scale Integrated Circuit) technology and three-dimensional LSI technology. Since a designer of the image sensor can stack the virtual array operation units in the functional block by using the three-dimensional LSI technology, the designer does not have to cross signal lines of the virtual array operation units between the functional blocks. In the present invention, the digital signals are sent from the parallel/serial converters to the virtual array operation units in the image sensor, the parallel/serial converters and the virtual array operation units can make digital circuits for sending the digital signals simple, moreover it can send the digital signals fast. In the present invention, since the virtual array operation units also communicate asynchronously with the virtual array operation units in the adjoining functional blocks, the clock signals only have to synchronize the virtual array operation units in the functional block, in spite of the number of the functional blocks in the image sensor. Since the present invention can reduce the number of electrical parts and the complexity of wiring, moreover it can work the image sensor fast, many problems on designing and manufacturing the image sensor are solved very well.

The invention described in claim 14 is an image sensor according to claim 12 or 13, in which each of said functional blocks includes: a synchronous oscillation circuit generating said clock signal; and an interblocked counter counting the number of pulses of said clock signal, wherein the first interblocked device comprises said synchronous oscillation circuits arranged in the shape of a lattice, by connecting them with said adjoining synchronous oscillation circuits, respectively, and the second interblocked device comprises said interblocked counters arranged in the shape of a lattice, by connecting them with said adjoining interblocked counters, respectively. An astable multi-vibrator and a crystal oscillator is adopted for the synchronous oscillation circuit. Since the synchronous oscillation circuit can synchronized with the adjoining synchronous oscillation circuits each other, the clock signals generated by all of the synchronous oscillation circuits syncronize. Since the clock signals are supplied to only inside of the functional blocks, the present invention can reduce problems on fan-out and clock squeue. A binary counter is adopted for the interblocked counter. Since the interblocked counter interblocks with the adjoining interblocked counters each other, the numbers of the pulses counted by all of the interblocked counters coincides. Since the interblocked counters can gate inputting of a reset signal, all of the functional blocks can be reseted simultaneously. Since the present invention can decrease power consumption, moreover it can work the image sensor fast, many problems on designing and manufacturing the image sensor are solved very well.

The invention described in claim 15 is an interblocked device comprising interblocked counters arranged in the shape of a square lattice and in the shape of a hexagonal lattice, each of said interblocked counters includes: a synchronous counter; a NOT gate for end-value judgment; a latch circuit for interblocking; a NOR gate for interblocking; and a NOR gate for counting, wherein count numbers of all of said interblocked counters coincide, by stopping counting of said adjoining interblocked counters by an interblocked signal outputted by said NOT gate for end-value judgement in each of said interblocked counters. The interblocked counter generates the interblocked signal by inverting a ripple carry out signal of the synchronous counter, using the NOT gate for end-value judgement. In a case that the interblocked signal is high level, the synchronous counter counts and resets the latch circuit for interblocking because the NOR gate for counting generates an enable signal from the interblocked signal. In a case that the interblocked signal is low level, the synchronous once stops. After the NOR gate for interblocking unifies external interblocked signals, the latch circuit for interblocking memorizes a unified result. the latch circuit for interblocking starts working the synchronous counter, by controlling the NOR gate for counting according to the unified result. Therefore, the synchronous counter starts counting, by interblocking the interblocked signals inputted from an external part. The present invention can coincide the count numbers of all of the interblocked counters, by connecting some of the interblocked counters each other. Especially, in distributing a clock signal to a whole of LSI (Large Scale Integrated Circuit), the higher the frequency of the clock signal becomes, the more serious the propagation delay time of the clock signal becomes. However, even though the interblocked counters are distributed in the LSI, the count numbers of all of the interblocked counters can coincide. Therefore, many problems on synchronization of the LSI are solved very well.

The invention described in claim 16 is an interblocked device according to claim 15, wherein each of said interblocked counters has said NOR gate for end-value judgement that judge an end value of said count number, and each of said synchronous counters has: synchronous clear means; and synchronous load means. In a case that the synchronous counter is an up counter, output of the up counter is connected to the NOR gate for end-value judgement which judges maximum value of the count number, output of the NOR gate for end-value judgement is connected to the NOT gate for end-value judgement. In a case that the synchronous counter is a down counter, output of the down counter is connected to the NOR gate for end-value judgement which judges minimum value of the count number, output of the NOR gate for end-value judgement is connected to the NOT gate for end-value judgement. Output of the NOT gate for end-value judgement is connected the latch circuit for interblocking and the NOR gate for counting, moreover a clear terminal controlling the clear means and a load terminal controlling the load means. In addition, the load means inputs an initial value of the count number. Since the synchronous counter can set any initial value to the count number, the synchronous counter can count from the initial value to the end value. Since the present invention can design freely cycles of the interblocked counter, it becomes for us to adjust timing of electronic circuits. Thus, many problems on synchronization of the LSI are solved very well.

The invention described in claim 17 is an interblocked device according to claim 15 or 16, wherein one or more said interblocked counters have: a decoder for signal distribution; a latch circuit for signal distribution; a NOR gate for signal distribution; and a flip-flop circuit for signal distribution, and form an input signal into a signal whose cycles are positive times of a clock signal. Since all of the count numbers of the interblocked counters arranged in a whole of LSI coincide in the present invention, the decoders for signal distribution can output the same timing signals simultaneously. Moreover, a time between a count start time and a count end time directed by different two of the timing signals comes to be a time which is positive time of a cycle of the clock signal. Suppose that the input signal is memorized by the latch circuit for signal distribution. The input signal at the count start time is decided by NOR gate for signal distribution, and is memorized by the flip-flop circuit for signal distribution until the count end time. Once reaching the count end time, the flip-flop circuit for signal distribution is reseted by the decoder for signal distribution. The present invention, therefore, can distribute the input signal synchronized with the clock signal to any place of the LSI, only considering the longest propagation delay time of the clock signal. Thus, many problems on designing the LSI are solved very well.

The invention described in claim 18 is an interblocked device comprising synchronous oscillation circuits arranged in the shape of a square lattice and in the shape of a hexagonal lattice, each of said synchronous oscillation circuits includes: two NOR gates for oscillation; two resistors for oscillation; two capacitors for oscillation; two latch circuits for oscillation; two NOR gates for synchronization; and a NOR gate for initialization, wherein phases of said clock signals of all said synchronous oscillation circuits coincide, by shifting said phases of said clock signals of said adjoining synchronous oscillation circuits by synchronous signals outputted from said capacitors for oscillation in each of said synchronous oscillation circuits. In an oscillation part of the synchronous oscillation circuit, the two NOR gates for oscillation and the two capacitors for oscillation are connected circularly, and an input and an output of the NOR gate for oscillation is connected by the resistor for oscillation, respectively. The oscillation part self-oscillates and the clock signal is outputted from the NOR gate for oscillation. The oscillation part is classified into two groups, A-side and B-side. A synchronous part of the synchronous oscillation circuit is classifed into two groups, the A-side and the B-side, corresponding to the oscillation part. Even in both of the A-side and B-side of the oscillation part, the latch circuit for synchronization memorizes a unified result after the NOR gate for synchronization unified the synchronous signals inputted from an external part. The latch circuit for synchronization makes phase and cycle of the synchronous signals of the synchronous oscillation circuit coincide with the phase and the cycle of the synchronous signals inputted from an external part, respectively, by controlling the NOR gate for oscillation according to the unified result. In a case that the synchronous signals of the synchronous oscillation circuit and the synchronous signals inputted from an external part are irregular, like a time of a power supply injection, the NOR gate for initialization fixes output of the NOR gate for oscillation in the A-side to low level, and decides the phase of the synchronous signal. The present invention can synchronize the synchronous signals of all of the synchronous oscillation circuits, by connecting some of the synchronous oscillation circuits each other. Especially, in distributing a clock signal to a whole of LSI (Large Scale Integrated Circuit), the higher the frequency of the clock signal becomes, the more serious the propagation delay time of the clock signal becomes. However, even though the synchronous oscillation circuits are distributed in the LSI, digital circuits in the whole LSI can synchronize. Therefore, many problems on synchronization of the LSI are solved very well.

The invention described in claim 19 is an interblocked device according to claim 18, wherein each of said synchronous oscillation circuits includes two input resistors. In a case that the NOR gates are made by CMOS (Complementary Metal Oxide Semiconductor), the CMOS may be destroyed if current stored in the capacitors for oscillation flows into inputs of the NOR gates. The present invention protects the CMOS of the NOR gates, by appending the input resistor to each oscillation part of A-side and B-side. In addition, suppose that resistance of the input resistors becomes large. Since the current flowing into the NOR gates decreases, a time constant decided by the resistor for oscillation and the capacitor for oscillation becomes more exact. Therefore, it is much easy for cycles of the clock signals of all of the synchronous oscillation circuits to coincide. Thus, many problems on synchronization of digital circuits using the CMOS are solved very well.

### BRIEF DESCRIPTION OF THE DRAWINGS

FIG.1 is an explanation view for a data acquisition system sending information generated by some artificial eyes to some user terminals.
FIG.2 is an explanation view for a cellular phone installing an artificial eye.
FIG.3 is an explanation view in a case that a moving camera and a visual device are set on a rear part of a car.
FIG.4 is an explanation view in a case that a moving camera and a visual device are set on a rear part of a wheelchair.
FIG.5 is an explanation view for a data acquisition system in which some monitoring terminals always supervise information genereted by some artificial eyes, and the monitoring terminals send the information to some user terminals if desired.
FIG.6 is an explanation view for a data acquisition system in which a database stores information generated by some artificial eyes, and some user terminals search the database properly.
FIG.7 is an explanation view for a record in a database recording some environmental data consisting of type and position of some objects, the number of objects and a digital image collected from a visual device controlling a moving camera.
FIG.8 is an explanation view for a data acquisition system in which a database stores information genereted by some artificial eyes, some monitoring terminals search the database properly, and the monitoring terminals send the information to some user terminals if desired.
FIG.9 is a block diagram of a data acquisition system consisting of an artificial eye and a user terminal.
FIG.10 is an explanation view for an artificial eye having a moving camera, a visual device and a communication device.
FIG.11 is a block diagram of a communication device installed in an artificial eye.
FIG.12 is a flow chart appearing an algorithm of an image compression means in this enforcement form.
FIG.13 is an explanation view for an artificial eye having a moving camera, a visual device, a stimulus generating device, an electrode array terminal, a connector and a battery.
FIG.14 is a block diagram of a visual device which controls a moving camera, finds out some objects and counts the number of the objects.
FIG.15 is an explanation view for an image coordinate in a case that a moving camera rotated as the light axis of its lens is a center of rotation.
FIG.16 is a block diagram of some array operation units arranged in the shape of a lattice.
FIG.17 is an explanation view for eight numbers of eight neighbors ordered counter-clockwisely.
FIG.18 is a flow chart appearing an algorithm of an image memorization means in this enforcement form.
FIG.19 is an explanation view for generating color information for some specific colors in a digital image.
FIG.20 is a flow chart appearing an algorithm of a color-information generation means in this enforcement form.
FIG.21 is an explanation view for generating rough edge information, using a digital image.
FIG.22 is a flow chart appearing an algorithm of an edge-information generation means in this enforcement form.
FIG.23 is an explanation view for forming rough edge information into formed edge information, using a digital image.
FIG.24 is a flow chart appearing an algorithm of an edge-information formation means in this enforcement form.
FIG.25 is an explanation view for forming low-resolution rough edge information generated from a low-resolution digital image into formed edge information.
FIG.26 is an explanation view for forming formed edge information after cutting an area of low-resolution rough edge information generated from a low-resolution digital image.
FIG.27 is an explanation view for detecting position and size of objects in an edge-information image.
FIG.28 is a flow chart appearing an algorithm of a position/size detection means in this enforcement form.
FIG.29 is an explanation view for detecting position and size of objects in an object-area image.
FIG.30 is an explanation view for detecting position, size and inclination of objects in an object-area image.
FIG.31 is a flow chart appearing an algorithm of a position/size/inclination detection means in this enforcement form.
FIG.32 is an explanation view for detecting position, size and inclination of objects in an object-area image.
FIG.33 is an explanation view for an example of transfer-source redundant information.
FIG.34 is an explanation view for detecting position, size and inclination of texture in a color-information image.
FIG.35 is an explanation view for normalizing a segmented object area in a digital image.
FIG.36 is a flow chart appearing an algorithm of an area normalization means in this enforcement form.
FIG.37 is an explanation view for generating a masked image from a digital image, using a segmented object-area image.
FIG.38 is a flow chart appearing an algorithm of a mask means in this enforcement form.
FIG.39 is a flow chart appearing an algorithm of an image keeping means in this enforcement form.
FIG.40 is an explanation view for pattern-matching a normalized image with some template images.
FIG.41 is a flow chart appearing an algorithm of a pattern matching means in this enforcement form.
FIG.42 is an explanation view appearing a state where triangular edge information separates an inside area of triangle and an outside area of triangle.
FIG.43 is a flow chart appearing an algorithm of a figure/ground separation means in this enforcement form.
FIG.44 is an explanation view appearing a state where dashed triangular edge information separates an inside area of dashed triangle and an outside area of dashed triangle.
FIG.45 is an explanation view appearing a state where edge information of two stacked triangles separates two triangle areas and a background area.
FIG.46 is an explanation view appearing a state where dashed edge information separates two circular areas and a background area in a case that two circular object areas are overlapping.
FIG.47 is a block diagram of internal architecture of an array operation unit.
FIG.48 is a block diagram of a controller.
FIG.49 is an explanation view appearing some input and output signals of a flag decoder.
FIG.50 is an explanation view appearing some input and output signals of a flag encoder.
FIG.51 is a flow chart appearing an algorithm that a processor sends data to some adjoining array operation units via a controller.
FIG.52 is a flow chart appearing an algorithm that a controller receives data from some adjoining array operation units.
FIG.53 is a flow chart appearing an algorithm that a processor receives data from an upper input data register.
FIG.54 is an explanation view for an array operation unit whose five controllers are arranged on a plane.
FIG.55 is an explanation view for an array operation unit whose five controllers are stacked.
FIG.56 is an explanation view for regarding nine array operation units as a virtual array operation unit.
FIG.57 is an explanation view for giving three quota numbers for controllers to nine array operation units included in a virtual array operation unit, respectively.
FIG.58 is an explanation view for a shift register memorizing sequentially nine result data which nine array operation units outputted.
FIG.59 is a block diagram of a functional column in an image sensor for an artificial eye, in which some kinds of processing are carried out in separate array operation units, respectively.
FIG.60 is a block diagram of an image sensor in a case that some functional columns are arranged in the shape of a two dimensional lattice.
FIG.61 is a block diagram of a functional column in an image sensor for an artificial eye, in which all kinds of processing are carried out in an array operation unit.
FIG.62 is a block diagram of a functional column in an image sensor for an artificial eye, in which all kinds of processing are carried out in a virtual array operation unit.

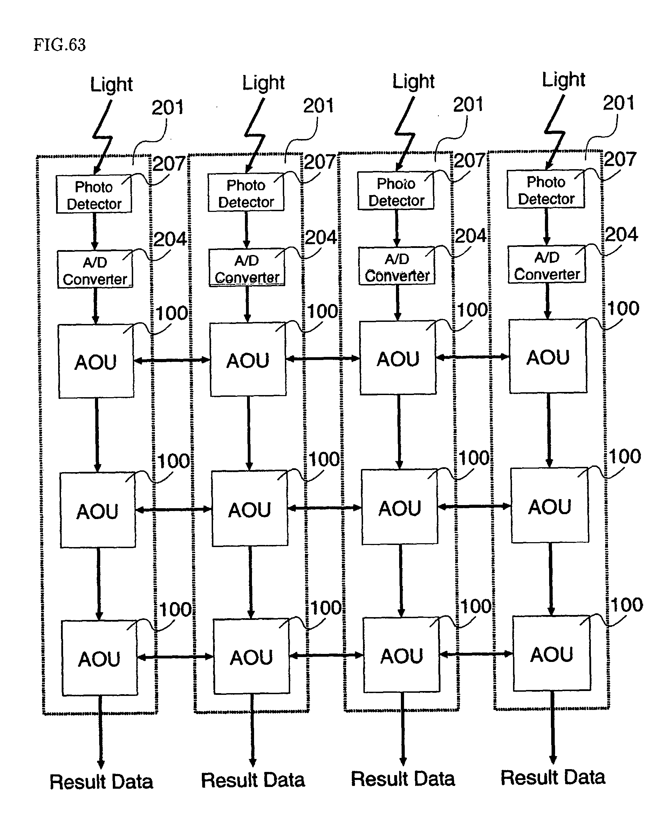

FIG.63 is a block diagram of an image sensor in a case that a functional column is implemented vertically for a mounting side of a large scale integrated circuit.
FIG.64 is a circuit diagram of a basic interblocked counter.
FIG.65 is a block diagram of a network consisting of three interblocked counters.
FIG.66 is a timing chart in a case that three interblocked counters synchronize.
FIG.67 is a timing chart in a case that a phase of one of three interblocked counters progresses.
FIG.68 is a timing chart in a case that a phase of one of three interblocked counters is overdue.
FIG.69 is a timing chart in a case that three phases of three interblocked counters are different each other.
FIG.70 is a block diagram of a network consisting of some interblocked counters arranged in the shape of a square lattice.
FIG.71 is a block diagram of a network consisting of some interblocked counters arranged in the shape of a hexagonal lattice.
FIG.72 is a circuit diagram of an interblocked signal distribution circuit generating an output signal, using third and fifth outputs of a decoder for signal distribution.
FIG.73 is a timing chart of an interblocked signal distribution circuit generating an output signal, using third and fifth outputs of a decoder for signal distribution.
FIG.74 is a circuit diagram of a basic synchronized oscillation circuit.
FIG.75 is a circuit diagram of a basic synchronized oscillation circuit in a case of using two input resistors.
FIG.76 is a circuit diagram of a basic synchronized oscillation circuit in a case of using a crystal oscillator.
FIG.77 is a block diagram of a network consisting of three synchronized oscillation circuits.
FIG.78 is a timing chart in a case that three synchronized oscillation circuits synchronize.
FIG.79 is a timing chart in a case that a phase of one of three synchronized oscillation circuits progresses.
FIG.80 is a timing chart in a case that a phase of one of three synchronized oscillation circuits is overdue.
FIG.81 is a timing chart in a case that three phases of three synchronized oscillation circuits are different each other.
FIG.82 is a timing chart in a case that a power is supplied to three synchronized oscillation circuits.
FIG.83 is a block diagram of a network consisting of some synchronized oscillation circuits arranged in the shape of a square lattice.
FIG.84 is a block diagram of a network consisting of some synchronized oscillation circuits arranged in the shape of a hexagonal lattice.
FIG.85 is a block diagram of a central control device communicating with a moving camera, a visual device, a display, a voice synthesis device and a voice recognition device.

### DETAILED DESCRIPTION

It is described below about some enforcement forms of a data acquisition system in this invention. With reference to the drawings, then, I explain the enforcement forms.

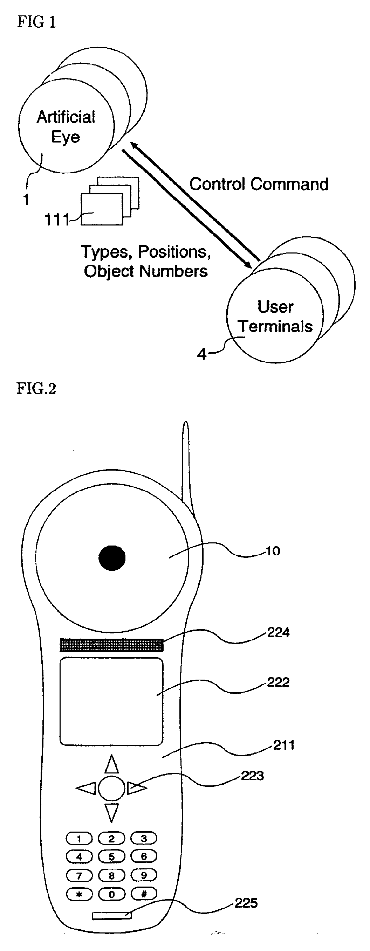

First, as shown in FIG.1, the invention described in claim 1 is a system in which one or more artificial eyes outputting an digital image 111, type, position and the number of objects, and one or more user terminals 4 displaying the digital image 111, type, position and the number of objects, and sending a control command are connected to a communication network 8. The artificial eye 1 has a moving camera 10 controlled by a visual device 2, which distinguishes the type of objects in the digital image 111 specifies the position of objects, and counts the number of objects. In addition, the visual device 2 controls pan, tilt, roll and zoom of the moving camera 10, according to the control command inputted from the user terminal 4. Each user terminal 4 can receive the digital image 111, the type, the position and the number of objects from the selected artificial eye 1, by selecting one of artificial eyes 1. The user terminal 4 consists of a central control device 221 having the communication function to the communication network 8, a display 222 displaying the digital image 111, the type, the position and the number of objects, and some control buttons 223 like cursor keys and jog dials. Since the artificial eye 1 and the user terminal 4 are connected to the communication network 8 using cable and wireless technology, the artificial eye 1 does not always have to be installed in a user's side. Furthermore, since the visual device 2 can distinguish the type of objects, the artificial eye 1 does not always have to send the digital image 111. The user, thus, does not always have to continue supervising his user terminal 4.

Now, the simplest combination in the invention described in claim 1 is a data acquisition system, in which an artificial eye 1 and a user terminal 4 are connected to a cable communication network 8, and a digital image 111, type, position and the number of objects, and a control command are always able to be communicated. For example, as shown in FIG.2, a cellular phone 211 having an artificial eye 1 is one of the above systems. This cellular phone 211 can display an animation image taken by a moving camera 10 on a display 222. Therefore, a user of the cellular phone 211 can not only display his figure on the display 222, without caring neither about direction nor magnification of the moving camera 10, but also see the situation of the circumference taken by the moving camera 10 via the display 222. When some cellular phones 211 described in the above are prepared, and each cellular phone 211 communicates the digital image 111, the type, the position, the number of objects, and the control command each other, a data acquisition system is constructed like FIG.1.

Although it was described in the above about a cellular phone 211 having both an artificial eye 1 and a user terminal 4, the artificial eye 1 and the user terminal 4 do not always have to be together if they are connected to a communication network 8. For example, suppose that a navigation system was installed in a car 321 as the user terminal 4. It is explained here about installation position of the artificial eye 1.

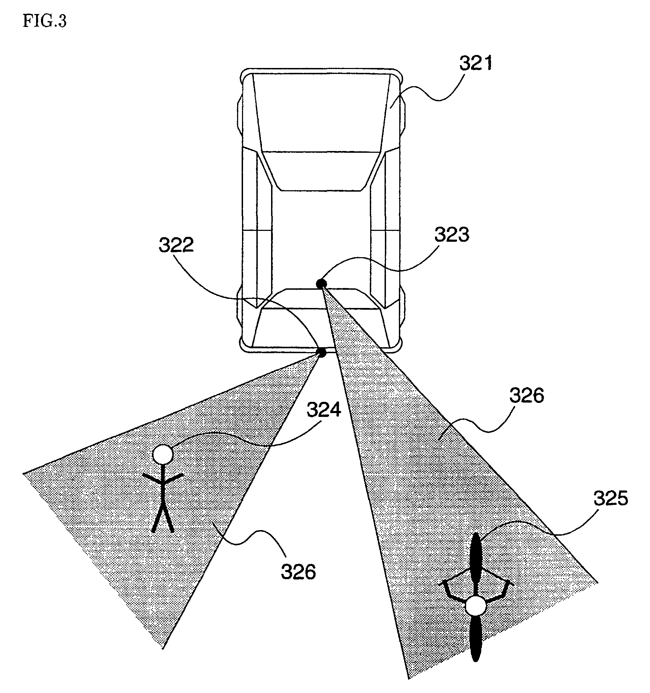

In a case that an artificial eye 1 was installed on a center of a rear bumper 322 of the car 321, as shown in FIG.3, a driver can check the place which is in his blind spot. In short, the driver can find out a pedestrian 324, a bicycle, a motorcycle 325 and another car 321 crossing the back of the car 321, and a child playing around a trunk of the car 321, because a visual device 2 changes a photographic area 326, executing pan, tilt, roll and zoom of a moving camera 10 automatically. The driver, thus, can back up the car 321 safely at a parking lot and a garage in which there are many blind spots. In addition, in a case that the artificial eye 1 was installed on a center of a rear ceiling 323 of the car 321, the driver can check many places (especially, a distance and so on) in which he is difficult to check something by a back mirror and some side mirrors, and many places to which he cannot pay attention unless he twists his body. In short, the driver can find out a pedestrian 324, a bicycle, a motorcycle 325 and another car 321 approaching from the back of the car 321, and a child playing around a trunk of the car 321, because a visual device 2 changes a photographic area 326, executing pan, tilt, roll and zoom of a moving camera 10 automatically. The driver, thus, can open a door and drive the car 321 safely.

FIG.3 shows the case that an artificial eye 1 was installed on the rear of a car 321, but some cases that the artificial eye 1 was installed on the side or the front of the car 321 are also similar to FIG.3. In a case that the artificial eye 1 was installed on a door and the side of a ceiling of the car 321, a driver can check a child playing near the door and something around margin of the road. In addition, in a case that the artificial eye 1 was installed on a center of a front bumper and the front of a ceiling of the car 321, the driver can find out a pedestrian 324, a bicycle, a motorcycle 325, another car 321 crossing the back of the car 321, and a child playing around a bonnet of the car 321. The driver, thus, can advance the car 321 safely at a parking lot, a garage and a cross of narrow roads in which there are many blind spots. Moreover, in a case that the artificial eye 1 was installed inside of the ceiling of the car 321, the driver can grasp the situation of all fellow passengers. Especially, in a case that a cellular phone 211 is used as a user terminal 4, the driver can know the situation in the car 321 even after he got off it. The driver, therefore, can run to the car 321 soon even though it was robbed. Also, the driver can know the situation of his child or his baby in a case that they stay in the car 321.

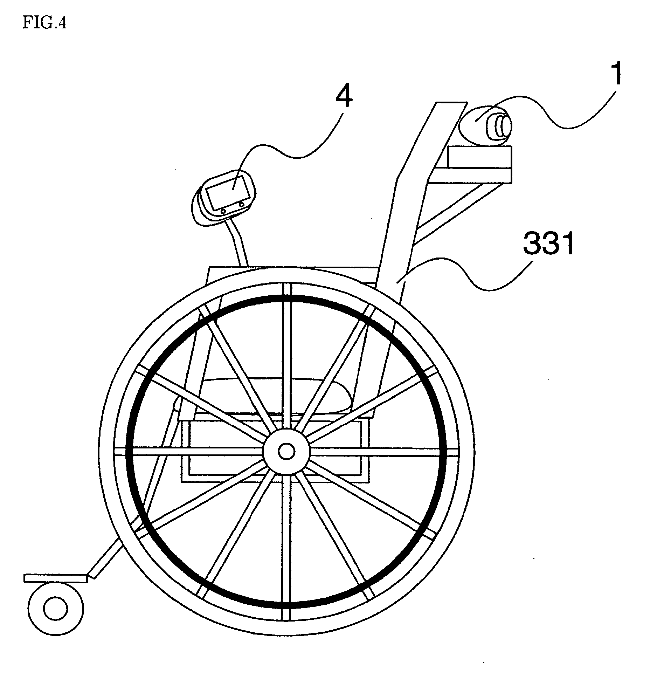

In addition, as shown in FIG.4, suppose that an artificial eye 1 is installed behind back reclining of a seat 331 of a wheelchair, and that a user terminal 4 is installed on handrail of the seat 331 of the wheelchair. A user can check an object approaching from the back of the wheelchair without twisting his body. Especially, it is difficult for the user of the wheelchair to check the back because he cannot be moved freely and he slouches his body in order to move the wheelchair. By using this invention, however, the user of the wheelchair can move safely. Moreover, a moving camera 10 can take more widely some images of signals, road signs and so on, by installing the artificial eye 1 above the seat 331, or by installing it ahead of the seat 331. In addition, even a user with weak eyesight can see an image on a display 222, by installing the user terminal 4 in the upper part of the seat 331, or by using a wearable computer as the user terminal 4.

It has been explained above about a data acquisition system in which a user of a user terminal 4 can always manage an artificial eye 1. In this data acquisition system, however, the artificial eye 1 sends a digital image 111, type, position and the number of objects to the user terminal 4, even though the user is sleeping. Furthermore, the digital image 111, the type, the position and the number of objects which the artificial eye 1 sends are not necessary for the user. As shown in FIG.5, now, suppose that some of user terminals 4 are used for a monitoring terminal 5, and a supervisor operates some monitoring terminals 5 instead of the user. The user, then, can come to use his user terminal 4 only when he wants to use it. In this case, the monitoring terminal 5 only has to transmit the digital image 111, the type, the position and the number of objects, which it received from a suitable artificial eye 1, to the user terminal 4 of the user, according to direction of the supervisor. Of course, since the user terminal 4 and the monitoring terminal 5 are a computer system, the supervisor can send explanations of the situation to the user terminal 4 easily, and can receive the direction of the user from the user terminal 4 easily, if desired, by using existing technology.

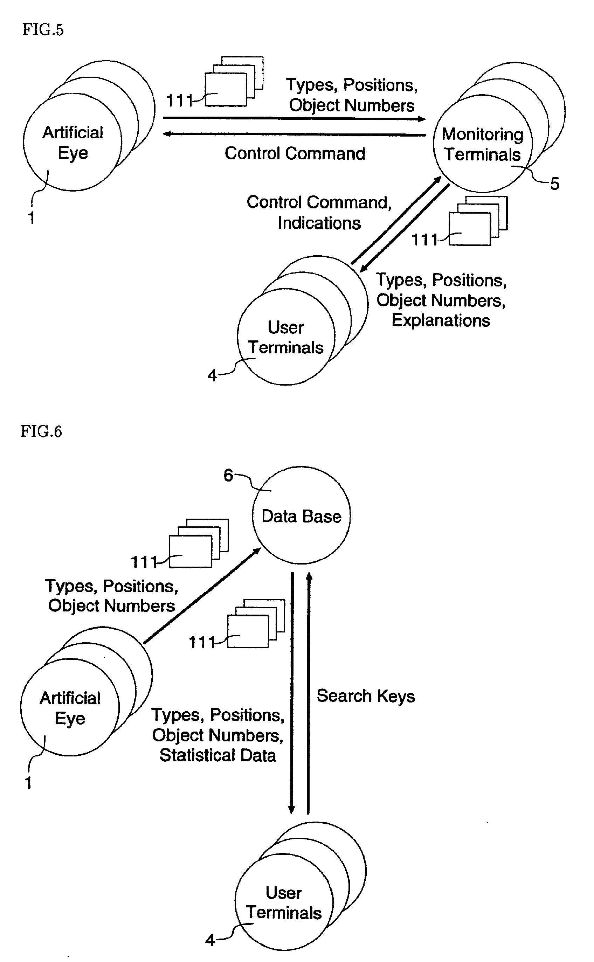

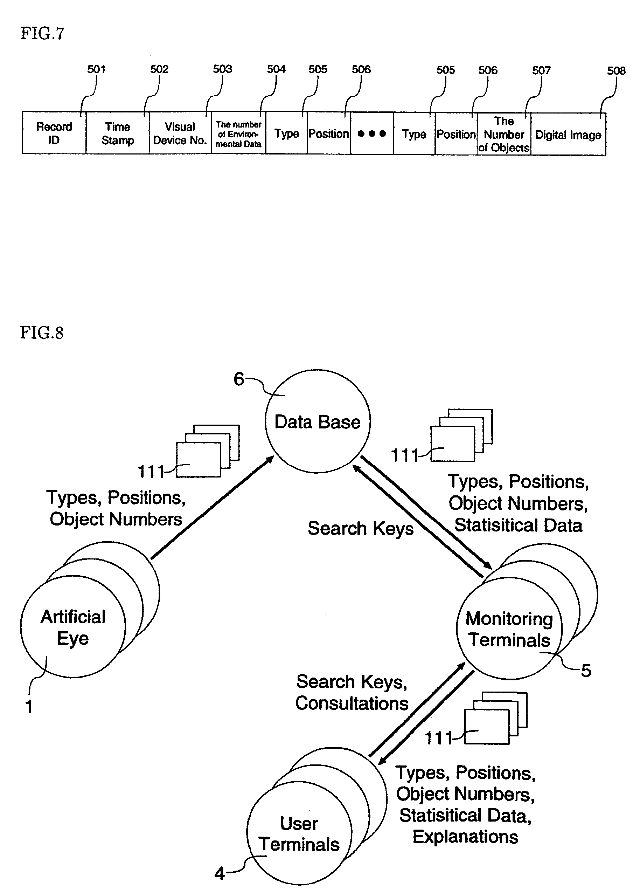

By the way, if the user of the user terminal 4 does not desire the digital image 111, the type, the position and the number of objects sent by the artificial eye 1 in real time, the user terminal 4 and the monitoring terminal 5 do not have to receive the digital image 111, the type, the position and the number of objects from the artificial eye 1 directly. For example, in a case that the data acquisition system measures the traffic of a road or a crowd of a shopping center, the user needs statistical data based on the digital image 111, the type, the position and the number of objects, rather than themselves. As shown in FIG.6, the invention described in claim 2 is a data acquisition system having such a database 6 as a relational database like SQL (Structure Query Language), an object-oriented database and so on. This database 6 records the digital image 111, the type, the position and the number of objects sent by the artificial eye 1 as a record like FIG.7, and calculates statisitical data. For example, in a case of FIG.7, the record consists of an area of record ID 501 recording a record ID which is different from other record IDs, an area of time stamp 502 recording the current time, an area of visual device number 503 recording a visual device number which an artificial eyes 1 has, an area of the number of environmental data 504 recording the number of environmental data which represents the number of combinations of the type and the position of objects, some areas of type 505 recording the type of objects, some areas of position 506 recording the position of objects, an area of the number of objects 507 recording the number of objects which a visual device 2 outputs, and an area of digital image 508 recording the digital image 111. The database 6 can calculate the number of objects, whose type is specific, taken by the aritificial eye 1 within a certain period, and can presume the movement of objects, by using this record. In addition, this database 6 searches a record by using some search keys sent from the user terminal 4, and sends some search results to the user terminal 4. Therefore, the user can get only a target digital image 111, type, position, the number and statistical data of target objects, by accessing to the database 6 if desired. The load of the user and a communication network 8, thus, can be mitigated.

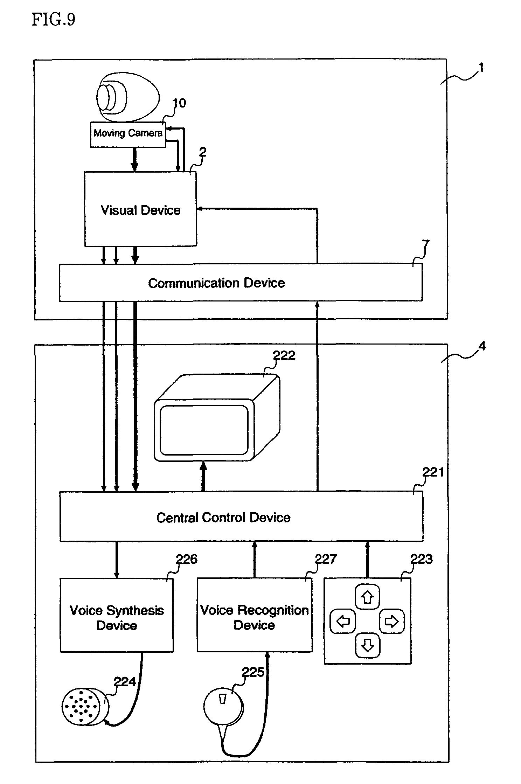

As shown in FIG.8, furthermore, suppose that some monitoring terminals 5 intervenes between some user terminals 4 and a database 6. A supervisor, then, can offer his original information and know-how to some users. For example, franchise chains like convenience stores and fast food restaurants, management consultants and so on can offer the necessary information and know-how to their series stores and customers. In addition, a broker who expects traffic and a crowd can offer information to the users. Of course, since the user terminal 4 and the monitoring terminal 5 are a computer system, the supervisor can send explanations of the situation to the user terminal 4 easily, and can receive the consultation of the user from the user terminal 4 easily, if desired, by using existing technology.

Finally, as shown in FIG.9, a user terminal 4 has at least one of a voice synthesis device 226 and a voice recognition device 227 in the invention described in claim 3. The voice synthesis device 226 converts type, position and the number of objects received by a central control device 221 to a voice signal, and outputs it via a speaker 224. The voice recognition device 227 once converts user's voice collected by a microphone 225 to a text, and outputs the text to the central control device 221. After converting this text to a control command and a search key, the central control device 221 sends them to an artificial eye 1, a database 6 and a monitoring terminal 5. Since a cellular phone 211 already has the speaker 224, the microphone 225, a processor 101 and a set of memory 102, the cellular phone 211 can carry the voice synthesis device 226 and the voice recognition device 227 easily, by installing a program of voice synthesis and a program of voice recognition in the set of memory 102. In addition, as concerns a navigation system, some systems carrying the voice synthesis device 226 and the voice recognition device 227 have been already sold. The user of the user terminal 4, thus, can hear the type, the position and the number of objects, controlling direction, inclination and magnification of a moving camera 10, without his look being taken by a display 222, and also without operating some control buttons 223 troublesomely.

It was explained above about a data acquisition system consisting of some artificial eyes 1, some user terminals 4 and a database 6 connected by a communication network 8, but a visual device 2 and a communication device 7 in the artificial eye 1 and a central control device 221 in the user terminal 4 were simply explained. It is described here about some enforcement forms of the artificial eye 1, focusing on the visual device 2 and the communication device 7, followed by explaining about an enforcement form of the central control device 221.

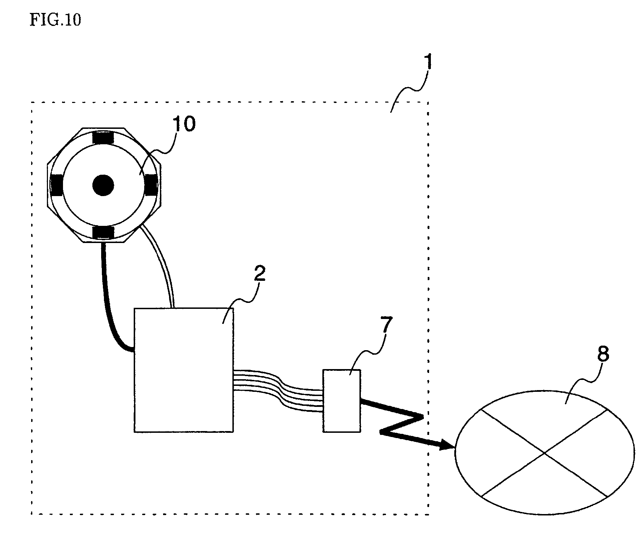

First, an artificial eye 1 connected to a communication network 8 has some compositions shown in FIG.10. Many moving cameras 10 have already been sold, and moreover even a palm-top moving camera 10 is sold. An image taken by a moving camera 10 is sent to a visual device 2 as an analog animation image or a digital animation image, without reducing the quality of a frame image. In addition, the moving camera 10 sends a signal representing its current status to the visual device 2, while the visual device 2 sends a signal controlling pan, tilt, roll and zoom of the moving camera 10 to it. Furthermore, a manufacturer of the artificial eye 1 can use a commercial elegance for the communication device 7, and also can make the commucication device 7 easily, by using a platform for communication.

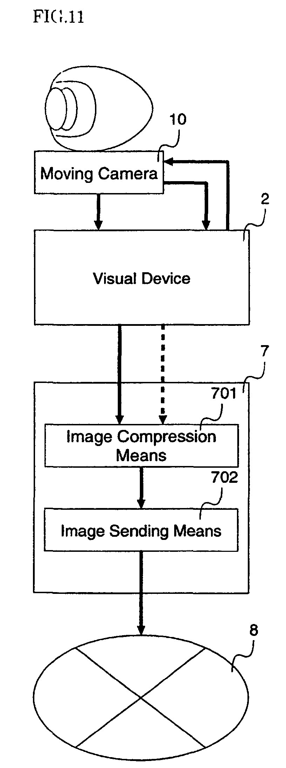

As shown in FIG.11, a communication device 7 has an image compression means 701 and an image sending means 702. The image compression means 701 inputs a digital image 111 generated by a visual device 2 from an animation image taken by a moving camera 10 (a solid line in FIG.11), and compresses the animation image and a frame image, using animation image compression technology like MPEG and still image compression technology like JPEG, followed by outputting a MPEG image and a JPEG image to the image sending means 702. The image sending means 702 can send the MPEG image and the JPEG image to a remote computer system via a communication network 8 like the Internet, by implementing a communication protocol like TCP/IP. Moreover, the communication device 7 can send the animation image taken by the moving camera 10 cheaply, without choosing a place and time, by using high-band wireless technology like DS-CDMA and MC-CDMA for the image sending device 702.

Next, an artificial eye 1 can output a masked image 148 which piled up a digital image 111 and an object-area image 142, instead of the digial image 111. Since the masked image 148 is an image made by filling up background of the digital image 111, an image compression means 701 can attain the high rate of compression even though a special function is not added to it.

As described above, an artificial eye 1 can send an animation image representing some objects, by controlling pan, tilt, roll and zoom of a moving camera 10, using a visual device 2. Only by using the above artificial eye 1, however, a digital image 111 and a masked image 148 do not always represent an object to be taken by it. Especially, it is considered that the masked image 148 does not represent the object to be taken even though the digital image 111 represents it. Therefore, we must pay attention in a case of using the masked image 148. Suppose then that an image compression means 701 uses some recognition results generated by the visual device 2 from some object areas 141 (a dash line in FIG.11). The image compression means 701 can compress only the digital image 111 and the masked image 148 representing the object to be taken, followed by outputting them to an image sending means 702.

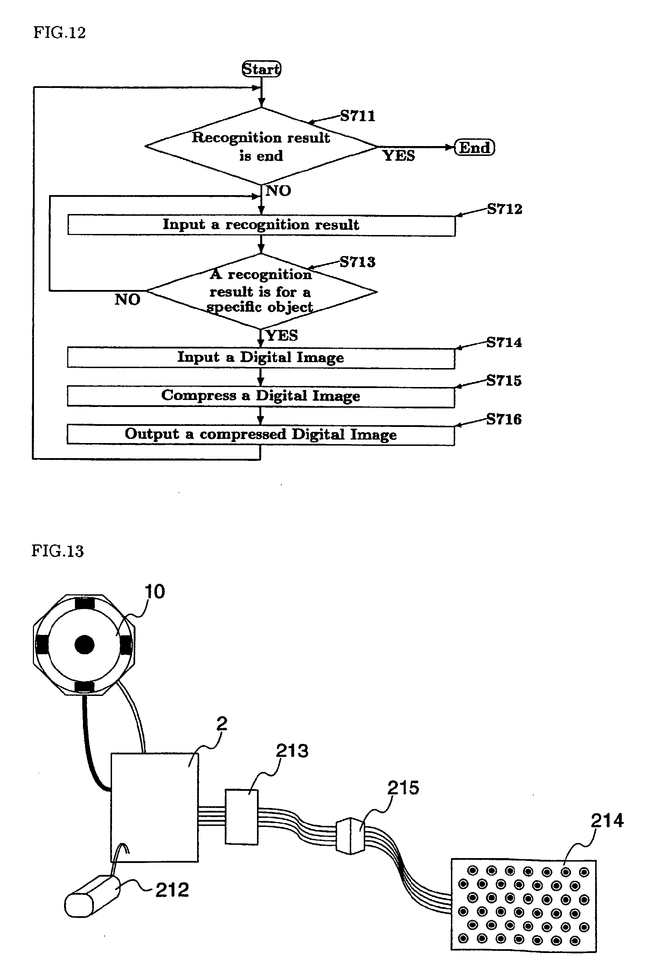

An algorithm of an image compression means 701 for a digital image 111 is represented like FIG.12.

At step 711, it is judged whether there is a recognition result inputted one by one or not. If there is not the recognition result any more (step 711: YES), this algorithm ends. If there is the recognition result (step 711: NO), this algorithm goes to step 712. Note that this algorithm can be an infinite loop if it is not necessary to judge the recognition result.

At step 712, the recognition result is inputted.

At step 713, it is judged whether the recognition result represents type of a specific object or not. If the recognition result does not represent the type of the specific object (step 713: NO), this algorithm returns to step 712. If the recognition result represents the type of the specific object (step 713: YES), this algorithm goes to step 714.

At step 714, a digital image 111 is inputted.

At step 715, a compressed digital image is generated by using compression technology like MPEG and JPEG.

At step 716, the compressed digital image is outputted. This algorithm then returns to step 711.

The image compression means 701 can compress only the digital image 111 representing the specific object. Note that an algorithm of compressing a masked image 148 is also similar to this algorithm.

Now, some moving cameras 10 using an ultrasonic motor have been developed by some research institutes and companies, and a moving camera 10, diameter of whose outer frame is less than ten centimeters, was already developed. Especially, since an ultrasonic motor does not need mechanical organization like a gear, the futher miniaturization of a moving camera 10 using the ultrasonic motor is easy. As shown in FIG.2, moreover, in a case of installing the moving camera 10 using the ultrasonic motor in a cellular phone 211, an artificial eye 1 can use a small and cheap communication device 7 and a battery 212, and moreover it can decrease power consumption of the battery 212.

By the way, a user of an artificial eye 1 can wear it, by using a moving camera 10 carrying a small multi-DOF motor like an ultrasonic motor. Recently, furthermore, technology which realizes that even a totally blind person can acquire vision has been developed, by inputting an image of a CCD (Charge Coupled Device) camera to his brain directly via a stimulus generating device 213, a connector 215 and an electrode array terminal 214. As shown in FIG.13, then, in a case that the articifial eye 1 has the moving camera 10, a visual device 2, the stimulus generating device 213, the electrode array terminal 214, the connector 215 and a battery 212, a user of the artificial eye 1 comes to be able to acquire wide vision, distinguish an approaching object, and count the number of objects.

Finally, some algorithms of a visual device 2 for general use have been already developed, but they have to be changed partially as they are suitable for an artificial eye 1. It, then, will be mainly described here about the visual device 2.

First, in a case of a visual device 2 finding out some objects, recognizing type of the objects, and counting the number of the objects (refer to Published Unexamined Japanese Patent Application No. H11-253634, Japanese Patent Application No. 2000-64544), suppose that a moving camera 10 can pan and tilt, where it has two mechanical system moving itself horizontally and vertically, respectively, and the systems input commands controlling their moving angle from an external part. Also, suppose that the moving camera 10 can zoom, where it has a mechanical system changing the zoom magnification of an image taken by it, and the system inputs commands controlling the magnification from the external part. In addition, in a case that the moving camera 10 has a multi-frexibility motor, suppose that the moving camera 10 can roll, where it has a mechanical system rotating itself, centering on a light axis of lens, and the system inputs commands controlling inclination from the external part. The moving camera 10, then, can vibrate itself frequently by the commands from the external part. Since a frame image of an animation image taken by the moving camera 10 blurs, an object in the frame image is taken as if it is vibrating. A still object, thus, is taken as if it is moving in the frame image.

Suppose here that the moving camera 10 can output the present position of itself moved by control commands of pan, tilt, roll and zoom whenever it must output the position, and its state whether it is moving or stops whenever it must output the state, too. If the visual device 2 can control pan, tilt, roll and zoom of the moving camera 10, the visual device 2 can also change direction, inclination and magnification of the moving camera 10 as the device can take an image of a moving object and a still object, whose size in the image is always suitable.

In order for the moving camera 10 to take the image of the moving object and the still object, whose size in the image is always suitable, then, the visual device uses three coordinate systems, the camera coordinate system, the image coordinate system and the environmental coordinate system, corresponding to its functions. First, the camera coordinate system is a three-dimensional ball coordinate system used by the moving camera 10, in order for the moving camera 10 to control pan, tilt and zoom in a minimum control unit, respectively. In general, the origin of the camera coordinate system is the primitive position of the moving camera, called the home position. The camera coordinate system is only a coordinate system possible to appear physical positions of the moving objects and the still objects, but the camera coordinate system can not be used for general purpose because each model of the moving camera 10 has its own camera coordinate system. Therefore, the visual system has to keep the camera coordinate system secret against other means. Second, the image coordinate system is the two-dimensional coordinate system whose unit is a pixel, and whose origin is the center of a frame image taken by the moving camera 10, that is, the light axis of lens. This system is used to appear some pixels of the frame image, where the moving objects and the still objects are. The image coordinate system is suitable for distinguishing positions of some objects in the frame image finely, but the physical positions of the moving objects and the still objects can not be appeard by only the image coordinate system. Third, the environmental coordinate system is the three-dimensional ball coordinate system used in order for the visual device 2 to appear consistently internal positions of the moving objects and the still objects. The angle for horizontal and vertical directions is represented by radian. The distance in the environmental coordinate system is represented by real numbers, whose unit is 1.0, in order to appear the product of the size of objects and the distance to them. Since the size of the objects do not change extremely for a short time, in general, we can assume that the distance to the objects is proportional to the magnification of the moving camera 10. The origin of the environmental coordinate system can be defined freely. In short, the environmental coordinate system is used to appear the relative coordinate of any two point on the environmental system itself. The visual device 2 can distinguish the moving objects and the still objects in environment, by projecting them possible to be taken by the moving camera 10 to the environmental coordinate system.

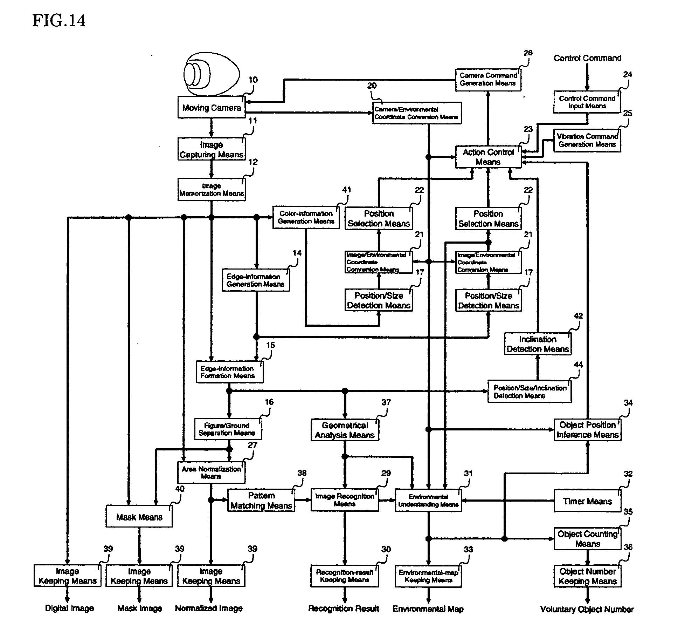

It is desired here that the camera coordinate system and the image coordinate system are converted themselves each other. Means which play such a roll are a camera/environmental coordinate conversion means 20, an image/environmental coordinate conversion means 21 and an action control means 23 (refer to FIG.14). These means derive two units of the camera coordinate system and the image coordinate system, corresponding to the specification of the moving camera 10 and the image capturing means 11, and then compute a matrix for converting from them to the environmental coordinate system. A convert matrix from the environmental coordinate system to the camera coordinate system is also derived by computing an invert matrix of the convert matrix from the camera coordinate system to the environmental coordinate system. Note that the position of the environmental coordinate system converted from the camera coordinate system is equal to the relative position from the home position of the moving camera 10, which is on the environmental coordinate system, since the origin of the camera coordinate system is the home position of the moving camera 10. On the other hand, the position of the camera coordinate system converted from the environmental coordinate system is equal to the relative position from the present position of the moving camera 10, which is on the camera coordinate system. In addition, the position is not converted to the environmental coordinate system by using only the image coordinate system because the image coordinate system is the two-dimensional coordinate system. The position of the image coordinate system can be converted to the environmental coordinate system, when the image/environmental coordinate conversion means 21 computes the convert matrix frequently, using the direction and the magnification of the moving camera 10 represented by the environmental coordinate system, and the size of areas of the moving objects and the still objects in the frame image 1. Note that the position of the environmental coordinate system converted from the image coordinate system is equal to the relative position from the center of the image.

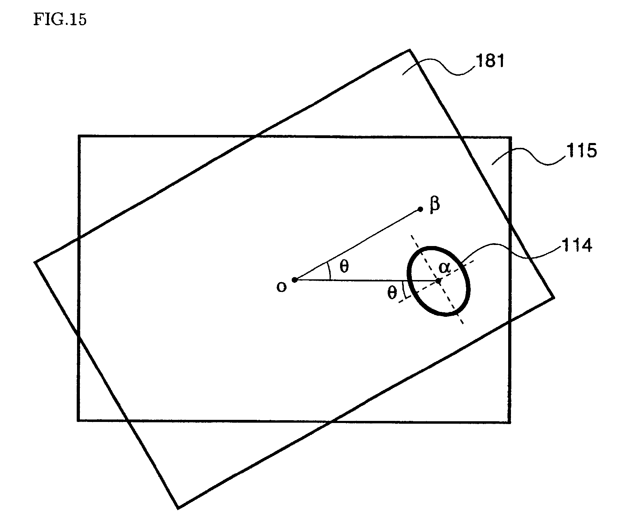

By the way, in a case that the moving camera 10 leaned, the visual device 2 can not derive a position on the environmental coordinate system as described above. For example, as shown in FIG.15, suppose that there is formed edge information 114 of an object which leaned at an angle θ counterclockwisely, at a position α in a formed edge-information image 115. If the moving camra 10 is rotated at the angle θ counterclockwisely, centering on a center *o* of the formed edge-information image 115, an edge-information formation means 15 can output a post-rotation formed edge-information image 181. In short, since the object stands straight at the point α in the post-rotation formed edge-information image 181, recognition of type of the object comes to be easy. A coordinate in the image coordinate system derived from the position α in the post-rotation formed edge-information image 181 is, however, a position rotating at the angle θ clockwisely for a coordinate in the image coordinate system which is derived from the position α in the formed edge-information image 115. Therefore, the bigger the angle θ is, or the longer the distance *o*α is, the bigger a gap between both coordinates comes to be. In order to derive the coordinate in the image coordinate system before rotating from the position α in the post-rotation formed edge-information image 181, thus, we only have to derive a position β, to which the position α in the post-rotation formed edge-information image 181 is rotated at the angle θ counterclockwisely.

Here, in the post-rotation formed edge-information image 181, let an image coordinate of the position α be (α_{*x*},α_{*y*}), and let an image coordinate of the position β be (β_{*x*}, β_{*y*}). (α_{*x*}, *α*_{*y*}) and (β_{*x*}, β_{*y*}) can be derived according to EQ.1.

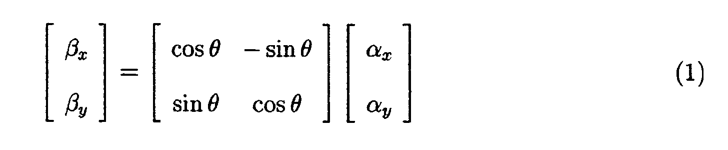

By this equation, the position β in the post-rotation formed edge-information image 181, that is, the position α in the formed edge-information image 115 can be derived from the position α in the post-rotation formed edge-information image 181. As a result, the image/environmental coordinate conversion means 21 can derive an environmental coordinate exactly from the position α in the post-rotation formed edge-information image 181.

It is described here about an enforcement forms of a visual device 2, using the camera coordinate sysytem, the image coordinate sysytem and the environmental coordinate system described above. As shown in FIG.14, the enforcement form of the visual device 2 is realized by using an image capturing means 11, which translates a photographic signal (a frame image 1) receiving from a moving camera 10 to the suitable format and size of digital image 111, an image memorization means 12, which memorizes a digital image 111 for a certain period, an image keeping means 39, which keeps the digital image 111 until it outputs the image to an output place, an edge-information generation means 14, which generates a rough edge-information image 113 of a moving object from two digital images 111, an edge-information formation means 15, which forms the rough edge-information image 113 into exacter and clearer a formed edge-information image 115, a figure/ground separation means 16, which separates areas distinguished by formed edge information 114, a mask means 40, which piles up the digital image 111 and the separated areas, an image keeping means 39, which keeps a masked image 148 until it outputs the image to an output place, an area normalization means 27, which normalizes the separated areas according to size of the image, an image keeping means 39, which keeps a normalized image 145 until it outputs the image to an output place, a geometrical analysis means 37, which analyzes rough form of the moving objects by using the formed edge-information image 115, a pattern matching means 38, which carries out pattern matching for some normalized areas of the moving objects, an image recognition means 29, which recognizes type of the moving objects from a matching-result image 147 and some geometrical analyzation results, a position/size detection means 17, which detects position and size of each area distinguished by rough edge information 112, a camera/environmental coordinate conversion means 20, which converts the camera coordinate system representing direction and magnification of the moving camera 10 to the environmental coordinate system which is a basic coordinate system of the visual device 2, an image/environmental coordinate conversion means 21, which converts some positions of the moving objects detected by the position/size detection means 17 to the environmental coordinate system, using the direction and the magnification of the moving camera 10 represented in the environmental coordinate system, a position selection means 22, which selects one of some positions of the moving objects detected by the position/size detection means 17, a timer means 32, which measures time in one milisecond unit, an environmental understanding means 31, which generates an environmental map from the direction and the magnification of the moving camera 10 represented in the environmental coordinate system, some positions of the moving objects represented in the environmental coordinate system, the type of the moving objects, the geometrical analyzation results and time, an environmental-map keeping means 33, which keeps an environmental map until it outputs the map to an output place, an object position inference means 34, which inferences a position of a moving object to recognize next, using the environmental map, a control command input means 24, which inputs a control command for controlling the direction and the magnification of the moving camera 10 from the external part, a vibration command generation means 25, which generates a command vibrating the moving camera 10, an action control means 23, which decides a position of the moving camera 10 represented in the camera coordinate system, by refering to four positions inputted from the position selection means 22, the control command input means 24, the vibration command generation means 25 and the object position inference means 34, using the direction and the magnification of the moving camera 10 represented in the environmental coordinate system, and a camera command generation means 26, which generates a command for moving the moving camera 10 to a position in the camera coordinate system decided by the action control means 23.

Suppose that the image capturing means 11 inputs a frame image of an animation image from a video camera. In a case that the animation image consists of analog signals, the means converts the frame image to digital signals by A/D conversion function. Especially, if the means can input voltage of photodetectors 207 like photodiodes directly, it may converts the voltage to suitable bits of digital signals by the A/D conversion function. In a case that the animation image consists of digital signals, on the other hand, the means expands it if it has been compressed. Otherwise, the means only inputs it. Since the means selects any frame image in the animation image, the means make a digital image 111 from the selected frame image. Since the converted digital image 111 has any size, according to suitable format, the image capturing means 11 converts the format to another format possible to refer image data every one pixel, distinguishes the domain of size desired by the visual device 2, and outputs the domain as the digital image 111. If the image capturing means 11 can output all pixels of the digital image 111 in parallel, communication from the image capturing means 11 to the image memorization means 12 can carried out every one pixel in parallel.

Suppose that the image memorization means 12 inputs the digital image 111 from the image capturing means 11. The image memorization means 12 memorizes the digital image 111 for a certain period, corresponding to time decomposition ability of the visual device 2 or computational power of each means. In short, each following means can input the same digital image 111 at the different timing, because the image memorization means 12 does not change its memorized image even though another digital image 111 is inputted in this period. In addition, since the image memorization means 12 does not carry out image processing for the digital image 111, the means remains two-dimensional topological relation for each pixel of the digital image 111. If the image memorization means 12 can output all pixels of the digital image 111 in parallel, communication from the image memorization means 12 to the image keeping means 39, the edge-information generation means 14, the color-information generation means 41 and the mask means 40 can be carried out every one pixel in parallel.

Suppose that the image keeping means 39 inputs the digital image 111 from the image memorization means 12. If an output place of the digital image 111 desires a specific format of the digital image 111, the digital image 111 is converted to the format desired by the output place of the digital image 111. The image keeping means 39 memorizes the digital image 111 for a specific period until it certainly sends the digital image 111 to the output place of the digital image 111. Since the image keeping means 39 converts the limited format of the digital image 111 by carrying out neighbor processing every one pixel, the means is suitable for parallel processing. If the image keeping means 39 can output all pixels of the digital image 111 in parallel, communication from the image keeping means 39 to the output place of the digital image 111 can be carried out every one pixel in parallel.

Suppose that the edge-information generation means 14 inputs the digital image 111 from the image memorization means 12. The edge-information generation means 14 generates a rough edge-information image 113 of the moving object by comparing it with the digital image 111 inputted beforehand. Since the edge-information generation means 14 can generate the rough edge-information image 113 by carrying out neighbor processing every one pixel, the means is suitable for parallel processing. If the edge-information generation means 14 can output all pixels of the rough edge-information image 113 in parallel, communication from the edge-information generation means 14 to the edge-information formation means 15 can be carried out every one pixel in parallel.

Suppose that the edge-information formation means 15 inputs the rough edge-information image 113 from the edge-information generation means 14. The edge-information formation means 15 generates an exacter and clearer formed edge-information image 115 than the rough edge-information image 113 of the moving object, refering to the digital image 111 memorized in the image memorization means 12. Since the edge-information formation means 15 can generate the formed edge-information image 115 by carrying out neighbor processing every one pixel, the means is suitable for parallel processing. If the edge-information formation means 15 can output all pixels of the formed edge-information image 115 in parallel, communication from the edge-information formation means 15 to the figure/ground separation means 16, the geometrical analysis means 37 and the inclination detection means 42 can be carried out every one pixel in parallel.

Suppose that the figure/ground separation means 16 inputs the formed edge-information image 115 from the edge-information formation means 15. The figure/ground separation means 16 separates some pixels within an object area 141 of the moving object and some pixels within background into some different groups, followed by outputting a separation result of each groups in turn. Note that the figure/ground separation means 16 can separate some object areas 141 into some different groups when the areas are adjoining but distinguished exactly by formed edge information 114. In short, the number of these groups may become more than or equal to three. Since the figure/ground separation means 16 can separate the object area 141 and background by carrying out neighbor processing every one pixel, the means is suitable for parallel processing. If the figure/ground separation means 16 can output all pixels of the object-area image 142 in parallel, communication from the figure/ground separation means 16 to the mask means 40 and the area normalization means 27 can be carried out every one pixel in parallel.

Suppose that the mask means 40 inputs the object-area image 142 from the figure/ground separation means 16. The mask means 40 generates a masked image 148, by filling some pixels which do not overlap with the object areas 141 refering to the digital image 111 memorized in the image memorization means 12. Since the mask means 40 can generate the masked image 148 by carrying out neighbor processing every one pixel, the means is suitable for parallel processing. If the mask means 40 can output all pixels of the masked image 148 in parallel, communication from the mask means 40 to the image keeping means 39 can be carried out every one pixel in parallel.

Suppose that the image keeping means 39 inputs the masked image 148 from the mask means 40. If an output place of the masked image 148 desires a specific format of the masked image 148, the masked image 148 is converted to the format desired by the output place of the masked image 148. The image keeping means 39 memorizes the masked image 148 for a specific period until it certainly sends the masked image 148 to the output place of the masked image 148. Since the image keeping means 39 converts the limited format of the masked image 148 by carrying out neighbor processing every one pixel, the means is suitable for parallel processing. If the image keeping means 39 can output all pixels of the digital image 111 in parallel, communication from the image keeping means 39 to the output place of the masked image 148 can be carried out every one pixel in parallel.

Suppose that the area normalization means 27 inputs the object-area image 142 and the digital image 111 from the figure/ground separation means 16 and the image capturing means 11, respectively. The area normalization means 27 generates a normalized image 145 by segmenting the segmented object area 143 from the digital image 111, and by complementing and expanding the segmented object area 143 as varying it and resizing it to the size of the digital image 111. Since the area normalization means 27 can normalize the segmented object area 143 by carrying out neighbor processing every one pixel, the means is suitable for parallel processing. If the area normalization means 27 can output all pixels of the normalized image 145 in parallel, communication from the area normalization means 27 to the pattern matching means 38 and the image keeping means 39 can be carried out every one pixel in parallel.

Suppose that the image keeping means 39 inputs the normalized image 145 from the area normalization means 27. If an output place of the normalized image 145 desires a specific format of the normalized image 145, the normalized image 145 is converted to the format desired by the output place of the normalized image 145. The image keeping means 39 memorizes the normalized image 145 for a specific period until it certainly sends the normalized image 145 to the output place of the normalized image 145. Since the image keeping means 39 converts the limited format of the normalized image 145 by carrying out neighbor processing every one pixel, the means is suitable for parallel processing. If the image keeping means 39 can output all pixels of the normalized image 145 in parallel, communication from the image keeping means 39 to the output place of the normalized image 145 can be carried out every one pixel in parallel.

Suppose that the geometrical analysis means 37 inputs the formed edge-information image 115 from the edge-information formation means 15. The geometrical analysis means 37 infers form of the moving objects in the frame image and generates a result of geometrical analysis, by carrying out such geometrical analysis as stroke extraction method, Fourier transform, Affine transform and Hough transform. In previous image recognition, an object in an image has been recognized by extracting line segments directly from the image itself or using many transform methods which are independent of position, size and so on. In spite of simple processing, then, the image recognition needs a huge number of combination of the processing. Since this causes the heavy computational complexity, the image recognition has taken much time to get a desired result. Otherwise, it could get only low quality of recognition results. In the visual device 2, however, the figure/ground separation means 16, the area normalization means 27, the pattern matching means 38 and the image recognition means 29 recognize patterns of the moving objects in the frame image in cooperation. Since the geometrical analysis means 37 analyzes roughly in a simple way such a figure as contour of the moving objects, which is no good for the figure/ground separation means 16, the area normalization means 27, the pattern matching means 38 and the image recognition means 29, using the formed edge-information image 115, the geometrical analysis means 37 can recognize the figure easily. Also, the geometrical analysis means 37 can reduce load of itself. In addition, the geometrical analysis means 37 makes the pattern matching means 38 simple, because the pattern matching means 38 does not have to recognize the figure. By using some results of geometrical analysis, furthermore, the environmental understanding means 31 generates the exact environmental map quickly. The geometrical analysis means 37 outputs the results of geometrical analysis to the image recognition means 29 and the environmental understanding means 31.

Suppose that the pattern matching means 38 inputs the normalized image 145 from the area normalization means 27. The pattern matching means 38 compares the normalized area 144 with some template images 146 every one pixel and generates a matching-result image 147, where the pattern matching means 38 can use not only some prepared template images 146 but also an inputted normalized image 145 as a template image 146, corresponding to purpose of the visual device 2. In general, since each pixel of the normalized image 145 is similar to the corresponding pixels of some different template images 146, the matching-result image 147 comes to a spot pattern consisting of some lumps. If the pattern matching means 39 can output all pixels of the matching-result image 147 in parallel, communication from the pattern matching means 38 to the image recognition means 29 can be carried out every one pixel in parallel.

Suppose that the image recognition means 29 inputs the matching-result image 147 from the pattern matching means 38. The image recognition means 29 recognizes the matching-result image 147 by using a suitable pattern recognition method, followed by outputting a recognition result, that is, type of the moving object. The image recognition means 29 can select the most matching results among the matching-result image 147, simply like majority, as a pattern recognition method. Otherwise, the image recognition means 29 can use a neural network like Perceptron which learns by back propagation method. In a case of using the neural network, in addition, an accelerator only for the neural network can perform the image recognition means 29 in parallel and fast. The image recognition means 29 outputs the recognition result of the matching-result image 147, that is, the type of the moving object to the recognition-result keeping means 30 and the environmental understanding means 31. Suppose here that the image recognition means 29 inputs the results of geometrical analysis from the geometrical analysis means 37. First, the image recognition means 29 judges whether the result corresponds to the figure of targets recognized by the image recognition means 29 or not. If the result does not correspond to the figure of the targets, the image recognition means 29 does not work. If the result corresponds to the figure of the targets, the image recognition means 29 recognizes the matching-result image 147. For example, in a case of Perceptron learning by back propagation, the image recognition means 29 can be designed as the Perceptron carries out pattern matching for the target figures effectively, if the image recognition means 29 selects learning data which the Perceptron made from the matching-result image 147, according to the result of geometrical analysis. In short, if the result of geometrical analysis corresponds to a circle, the image recognition means 29 uses only learning data of circular objects like human faces and balls. If the result of geometrical analysis corresponds to a triangle, the image recognition means 29 uses only learning data of triangular objects like road signs and a mountain range. In this case, not only the image recognition means 29 can recognize patterns of many objects in a small size of Perceptron, but also the Perceptron itself can learn the patterns effectively.

Suppose that the recognition-result keeping means 30 inputs the recognition result of the matching-result image 147 from the image recognition means 29. If an output place of the recognition result desires a specific format of signals, the recognition result is converted to the format desired by the output place of the recognition result. The recognition-result keeping means 30 memorizes the recognition result for a specific period until it certainly sends the recognition result to the output place of the recognition result.

Suppose that the position/size detection means 17 inputs the rough edge-information image 113 from the edge-information generation means 14. The position/size detection means 17 detects position and size of an area of the moving object pointed out by the rough edge information 112. Since the position/size detection means 17 can generate a redundant-information image 132 appearing a detect result of the position and the size of the area of the moving object by carrying out neighbor processing every one pixel, the means is suitable for parallel processing. If the position/size detection means 17 can output all pixels of the redundant-information image 132 in parallel, communication from the position/size detection means 17 to the image/environmental coordinate conversion means 21 can be carried out every one pixel in parallel.

The camera/environmental coordinate conversion means 20 and the image/environmental coordinate conversion means 21 convert the position of the areas of the moving objects, which is represented by the redundant-information image 132 generated by the position/size detection means 17, to the position on the environmental coordinate system. If the total number of the position of the areas of the moving objects in the frame image is more than or equal to two, this also means that there are more than or equal to two positions on the environmental coordinate system. One of the positions on the environmental coordinate system, then, must be selected in order to set the direction and the magnification of the moving camera 10 to the position of either one of the moving objects, controlling pan, tilt and zoom of the moving camera 10. The position selection means 22 selects one of the positions on the environmetal coordinate position, in terms of certain judgement standards. The judgement standards used here are as follow: First, the position selection means 22 selects the nearest object (or the biggest one) on the environmental coordinate system. The reason is that the edge-information generation means 14 may generate noise when an object is far (or small). The position selection means 22 then selects the position on the environmental coordinate system, where probability by which the object exists is higher than other positions. Second, when some positions crowed within a certain domain on the environmental coordinate system, the position selection means 22 selects one of them. This selection derives two case. One is that the edge-information generation means 14 generates some distributed rough edge information 112 for an object. Another is that there are some objects in fact. The position selection means 22 here only have to select one of these positions suitably. Third, when many positions on the environmental coordinate system represent almost same distance (or almost same size), the position selection means 22 selects the nearest position to the origin, that is, the direction of the moving camera 10. The position selection means 22 can select one of positions on the environmental coordinate system, by combining with these selections, according to use and situation of the visual device 2.

The timer means 32 outputs the present time in one millisecond unit by using a timer circuit. The timer means 32 always outputs the present time to the environmental understanding means 31.

Suppose that the environmental understanding means 31 inputs the recognition result of the object area 141 of the moving object from the image recognition means 29. The environmental understanding means 31 generates an environmental datum consisting of the recognition result, the position on the environmental coordinate system of the moving camera 10 and the present time. Suppose also that the environmental understanding means 31 inputs the position on the environmental coordinate system of all object areas 141 in the frame image from the image/environmental coordinate conversion means 21. The environmental understanding means 31 generates the same number of environmental data consisting of the recognition result, which is null data, the position adding the position on the environmental coordinate system of the moving camera 10 with the position on the environmental coordinate system of one of the object areas 141 in the frame image, and the present time as the number of the object areas 141. The environmental map is a set of the environmental data generated within a specific period from the present time, and is represented by the environmental coordinate system, whose origin is the home position of the moving camera 10. The environmental understanding means 31 appends some environmental data to the environmental map one by one, and also deletes them from the environmental map. The environmental understanding means 31 deletes some redundant environmental data from the environmental map. In this case, if the position in an environmental datum whose recognition result is null data is near to the position in other environmental data whose recognition result is not null data, the environmental understanding means 31 also deletes the environmental datum whose recognition result is null data. In the case, moreover, that the position in environmental datum whose recognition result is not null data is near to the position in other environmental data whose recognition result is not null data, the environmental understanding means 31 also deletes the former environmental datum if the recognition results of these environmental data coincide. Accuracy of the environmental map is decided by recording period of the environmental data and domain of neighbors around the position in the environmental data. After the current position on the environmental coordinate system of the moving camera 10 was appended to the environmental map, the environmental understanding means 31 outputs the environmental map to the environmental-map keeping means 33, the object counting means 35 and the object position inference means 34. Suppose here that the environmental understanding means 31 inputs the result of geometrical analysis from the geometrical analysis means 37. First, the image recognition means 29 judges whether the result corresponds to the figure of targets recognized by the image recognition means 29 or not. If the result does not correspond to the figure of the targets, the environmental understanding means 31 deletes the environmental data, which is near to the position of the moving camera 10 on the environmental coordinate system, and whose recognition result is null data, from the environmental map immediately. Since an unnecessary environmental datum is deleted from the environmental map, the object position inference means 34 and so on do not have to output some unnecessary inferred positions of objects. If the result corresponds to the figure of the targets, the environmental understanding means 31 waits the recognition result from the image recognition means 29 during a specific period.

Suppose that the environmental-map keeping means 33 inputs the environmental map from the environmental understanding means 31. If an output place of the environmental map desires a specific format of signals, the environmental map is converted to the format desired by the output place of the environmental map. The environmental-map keeping means 33 memorizes the environmental map for a specific period until it certainly sends the environmental map to the output place of the environmental map.

Suppose that the object counting means 35 inputs the environmental map from the environmental understanding means 31. The object counting means 35 counts the number of the environmental data having the recognition result, which represents some specific objects, in the environmental map and generates the voluntary object number. The recognition result in the environmental data can be selected from the type of the objects discriminated by the image recognition means 29 without limit. The object counting means 35 outputs the voluntary object number to the object-number keeping means 36. Note that the type of objects to be counted by the object counting means 35 can be specified easily from an external part, by changing the object counting means 35 according to use, if desired.

Suppose that the object-number keeping means 36 inputs the voluntary object number from the object counting means 35. The object-number keeping means 36 memorizes the voluntary object number for a specific period until it certainly sends the voluntary object number to the output place of the voluntary object number.

Suppose that the object position inference means 34 inputs the environmental map from the environmental understanding means 31. The object position inference means 34 selects one of environmental data whose recognition result is null data, and extracts the position from this environmental datum. When the present position on the environmental coordinate system of the moving camera 10, which is computed by the camera/environmental coordinate conversion means 20, is subtracted from the above position, the object position inference means 34 can compute the relative position on the environmental coordinate system of the moving objects, whose rough edge information 112 has been already generated but whose recognition result has not been decided yet, from the present position on the environmental coordinate system of the moving camera 10, which is regarded as the origin. Note that it is not necessary that the object exists at this relative position at present when the object is moving. This position, thus, is the inferred position of the moving objects, where the moving objects must exist. On the other hand, if there are no environmental data whose recognition result is null data in the recognition map, the object position inference means 34 generates a specific position on the environmental coordinate system within domain where the moving camera 10 can move. The standards for generating the specific position, here, are listed as follows: First, the object position inference means 34 generates any position by pseudo-random number. Second, the object position inference means 34 computes the position where density of the position of environmental data in the environmental map is low. Third, the object position inference means 34 generates the position within a domain where the moving camera 10 can move in a specific order, one by one. For example, the object position inference means 34 generates the position from the upper left side toward the right side one by one. When the position achieved to the right side, the position once goes down to the next row and the object position inference means 34 generates the position toward the left side one by one. After the position achieved to the left side, the position once goes down to the next row and the object position inference means 34 generates the position toward the right side one by one. The object position inference means 34 then repeats these steps. The object position inference means 34 can infer effectively the inferred position of the moving objects whose image has not been taken by the moving camera 10, by combining with these standards according to the use and the situation of the visual device 2. The object position inference means 34 outputs the inferred position of the objects to the action control means 23.

Suppose that the color-information generation means 41 inputs the digital image 111 from the image memorization means 12. The color-information generation means 41 generates a color information image 172 by selecting each pixel of the digital image 111 whose color coincides with one or more colors and color areas specified beforehand. Since the color-information generation means 14 can generate the color information 171 every one pixel, the means is suitable for parallel processing. If the color-information generation means 41 can output all pixels of the color-information image 172 in parallel, communication from the color-information generation means 41 to the position/size detection means 17 can be carried out every one pixel in parallel.

Suppose that the position/size detection means 17 inputs the color-information image 172 from the color-information generation means 41. The position/size detection means 17 detects position and size of an area of the moving object pointed out by the color information 171. Since the position/size detection means 17 can generate a redundant-information image 132 appearing a detect result of the position and the size of the area of the moving object by carrying out neighbor processing every one pixel, the means is suitable for parallel processing. If the position/size detection means 17 can output all pixels of the redundant-information image 132 in parallel, communication from the position/size detection means 17 to the image/environmental coordinate conversion means 21 can be carried out every one pixel in parallel. After this, one of positions of the moving objects in the redundant-information image 132 is selected by the image/environmental coordinate conversion means 21 and the position selection means 22, followed by outputting the position to the action control means 23.

Suppose that the position/size/inclination detection means 44 inputs the formed edge-information image 115 from the edge-information formation means 15. The position/size/inclination detection means 44 detects position and size of an area of the moving object pointed out by the formed edge information 114. Since the position/size/inclination detection means 44 can generate a redundant-information image 132 appearing a detect result of the position and the size of the area of the moving object and an inclination angle image appearing an inclination angle of the area of the moving object by carrying out neighbor processing every one pixel, the means is suitable for parallel processing. If the position/size/inclination detection means 44 can output all pixels of the redundant-information image 132 and all pixels of the inclination angle image in parallel, communication from the position/size/inclination detection means 44 to the inclination detection means 42 can be carried out every one pixel in parallel.

Suppose that the inclination detection means 42 inputs the inclination angle image from the position/size/inclination detection means 44. The inclination detection means 42 detect inclination angle whose position is nearest at the center. The moving camera 10 then can roll corresponding to the object taken now at the center of the digital image 111. The inclination detection means 42 outputs the inclination angle to the action control means 23.

Note that the visual device 2 can not only control the moving camera 10 but also distinguish type of objects and specify position of the objects, without always using all means shown in FIG.14. Manufacturers and programmers of the visual device 2, therefore, only have to select some necessary means according to some objects to be taken, desired performance, some provided computer resources and usable LSI technology, in making the visual device 2 actually.

The visual device 2, now, must carry out pan, tilt, roll and zoom of the moving camera 10 not only to the positions selected by the position selection means 22, but also to the following positions: First, this visual device 2 must vibrate the moving camera 10 in order for the moving camera 10 to take an animation image as if a still object is moving. The vibration command generation means 25, then, specifies the position to which the moving camera 10 must move as a position on the environmental coordinate system. The position specified by the vibration command generation means 25 is decided by the number like pseudo-random number within the domain where the moving camera 10 does not vibrate extremely. In addition, the visual device 2 must carry out pan, tilt, roll and zoom of the moving camera 10 when the control command is inputted from an external part. In general purpose, the moving camera 10 carries out pan, tilt, roll and zoom, comparing with its present direction and its present magnification. Once the control command input means 24 memorises a control command, the visual device 2 computes some positions on the environmental coordinate system whose origin is the present position of the moving camera 10. Note that it is easily possible to move the moving camera 10 to a certain position, by improving the control command input means 24.

In order to control pan, tilt, roll and zoom of the moving camera 10, the action control means 23 selects one of five positions, which are described above, on the environmental coordinate system. In this case, the position is selected from one of five means which may have an input position, in turn of the control command input means 24, the object position inference means 34, the position selection means 22 to originate in the edge-information generation means 14, the position selection means 22 to originate in the color-information generation means 41 and the vibration command generation means 25. The selected position on the environmental coordinate system is converted by the action control means 23 to the position on the camera coordinate system. After the converted position is translated by the camera command generation means 26 to a command which the moving camera 10 can recognize, the command is sent to the moving camera 10. The visual device 2, then, can control pan, tilt, roll and zoom of the moving camera 10.

Here, there are some models of the moving camera 10 which can send their state, that is, the direction and the magnification of the moving camera 10, and information whether the moving camera 10 is moving or stops, only when the moving camera 10 receives some special commands. After the action control means 23 selects one of three positions and outputs to the camera command generation means 26, the action control means 23 directs the camera command generation means 26 to send the command, which asks whether the moving camera 10 is moving or not, to the moving camera 10, and then waits an answer from the moving camera 10 via the camera/environmental coordinate conversion means 20. If the received answer represents moving, the action control means 23 directs the camera command generation means 26 to send the command, which asks whether the moving camera 10 is moving or not, to the moving camera 10 again. If the received answer represents stop, the action control means 23 directs the camera command generation means 26 to send the command, which asks the present direction and the present magnification of the moving camera 10, to the moving camera 10. In this period, the action control means 23 does not select one of five positions. The camera command generation means 26 sends the corresponding command to the moving camera 10, according to direction of the action control means 23. The camera/environmental coordinate conversion means 20 directly sends information whether the moving camera 10 is moving or not, to the action control means 23. Moreover, the camera/environmental coordinate conversion means 20 converts the present direction and the present magnification of the moving camera 10 on the camera coordinate system to the position on the environmental coordinate system. The visual device 2, then, can control pan, tilt, roll and zoom of the moving camera 10, investigating the state of the moving camera 10 one by one.

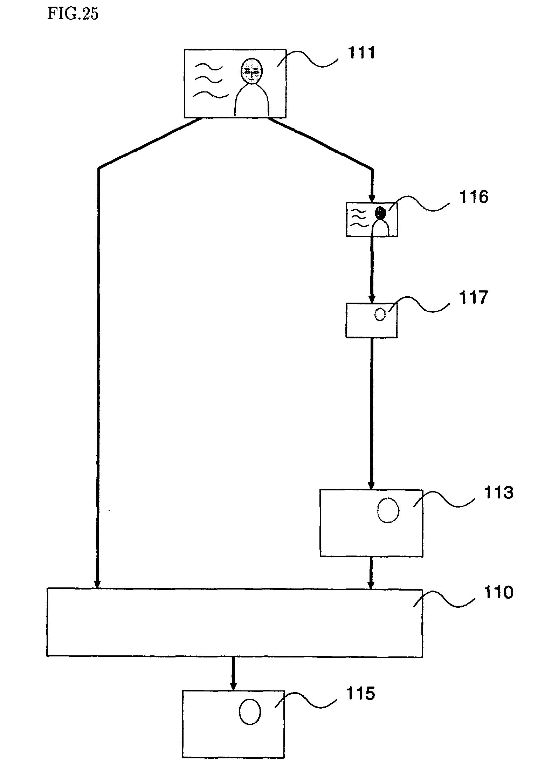

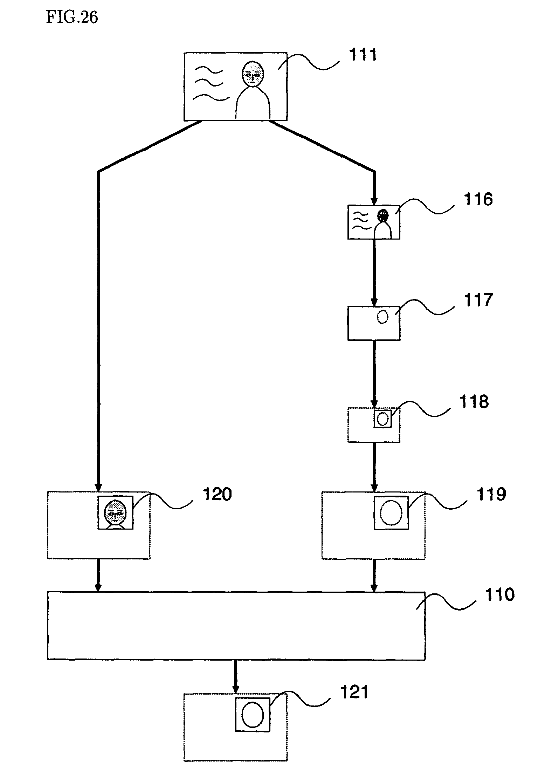

Note that it is not always desired that the resolution or the size of an image inputted by the edge-information generation means 14 and the position/sizc detection means 17 is consistent with the resolution or the size of the edge-information formation means 15, the position/size/inclination detection means 44, the figure/ground separation means 16, the area normalization means 27, the image keeping means 39 and the pattern matching means 38 in the visual device 2. For example, in the visual device 2, suppose that the edge-information generation means 14 inputs a low-resolution digital image 116, which is generated by making the resolution of the digital image 111 low. Suppose also that the edge-information formation means 15 inputs a rough edge-information image 113, which is an expanded low-resolution Rough edge-information image 117 genereted by the edge-information generation means 14 to the size of the digital image 111 in a specific method. Suppose, moreover, that the figure/ground separation means 16 and the area normalization means 27 input the digital image 111. In this case, the visual device 2 can reduce loads of the edge-information generation means 14 (refer to FIG.25). In short, the visual device 2 can accelerate control of pan, tilt, roll and zoom of the moving camera 10, which is carried out in the position/size detection means 17 or subsequent means, much more, without changing most quality of the normalized image 145 generated by the edge-information formation means 15 or some subsequent means. If this method is advanced further, the visual device 2 can reduce loads of the edge-information formation means 15 or some subsequent means in generating the normalized image 145 (refer to FIG.26). Note that the edge-information formation means 15 inputs a cut rough edge-information image 119, which is an area of the low-resolution rough edge-information image 117 generated by the edge-information generation means 14 and includes the rough edge information 112. In addition, the figure/ground separation means 16 and the area normalization means 27 inputs a cut digital image 120, which is the same domain as a cut rough edge-information image 119 and is cut from the digital image 111. If the moving camera 10 can take a frame image which shows the moving object at the center and the size of the object is suitable, by using the visual device 2, the visual device 2 can decide beforehand a cut domain of the cut rough edge-information image 119 and the cut digital image 120 from the digital image 111. By using this method, the visual device 2 with one moving camera 10 can achieve the same performance as a device finding an object with both a wide-angle camera and a high-resolution camera.

Now, the image memorization means 12, the color-information generation means 41, the edge-information generation means 14, the edge-information formation means 15, the position/size detection means 17, the position/size/inclination detection means 44, the figure/ground separation means 16, the area normalization means 27, the mask means 40, the image keeping means 39 and the pattern matching means 38 used in the visual devices 2 can be implemented by using a data processing device 110 consisting of some array operation units 100. I list below some enforcement forms of the data processing device 110 consisting of the array operation units 100, and explain about the visual device 2 with reference to the drawings.

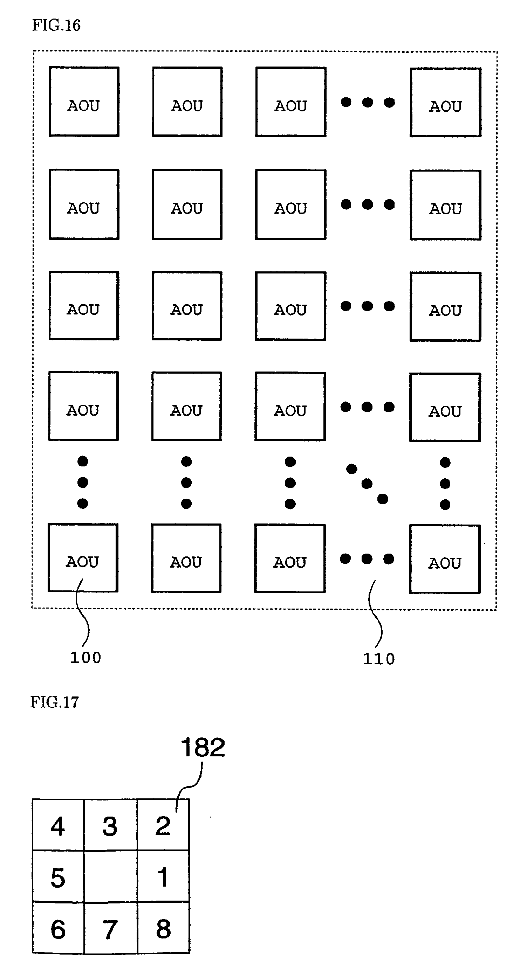

First, the array operation unit 100 generates a pixel in an output image, by using a pixel and some neighbor pixels in an input image. As shown in FIG.16, the data processing device 110 can generate the output image from the input image, when some array operation units 100 are arranged in the shape of a lattice in the data processing device 110, according to the size of the input image. Note that the array operation unit 100 is denoted as *AOU* in FIG.16. Next, the array operation unit 100 may be implemented by a specialized hardware. Otherwise, it can be implemented by a software on a general computer, too. That is, if the data processing device 110 can generate the output image from the input image, the implementation way of the array operation unit 100 is not limited. Image processing of the data processing device 110 can be appeared by describing some algorithms of the array operation unit 100. In order to describe the algorithms of the array operation unit 100, it is explained here about some equations used in the image memorization means 12, the color-information generation means 41, the edge-information generation means 14, the edge-information formation means 15, the position/size detection means 17, the position/size/inclination detection means 44, the area normalization means 27, the mask means 40, the image keeping means 39 and the pattern matching means 38 shown in FIG.14.

Suppose that any three 2^{*n*}-tone image whose width is *w*, whose heigth is *h*, whose band number is *b* are denoted as **x**, **y** and **w**. The **x**, **y** and **w** are represented as EQ.2, EQ.3 and EQ.4, using three band-pixel values *x*_{*ijk*}, *y*_{*ijk*} and *w*_{*ijk*} at a position *p*(*i*, *j*, *k*), respectively. Note that bold letters means vectors, *n* is the non-negative number, *w, h*, *b*, *i*, *j* and *k* are the natural number.$\text{x = {} {\text{x}}_{\text{ijk}} \text{|} {\text{x}}_{\text{ijk}} \text{is value at} \text{p} \text{(} \text{i} \text{,} \text{j} \text{,} \text{k} \text{), 1 ≤} \text{i} \text{≤} \text{w} \text{, 1} \text{≤j ≤ h} \text{, 1 ≤} \text{k} \text{≤} \text{b} \text{}}$$\text{y} \text{=} \text{{} {\text{y}}_{\text{ijk}} \text{|} {\text{y}}_{\text{ijk}} \text{is value at} \text{p} \text{(} \text{i} \text{,} \text{j} \text{,} \text{k} \text{), 1 ≤} \text{i ≤ w} \text{, 1 ≤} \text{j} \text{≤} \text{h} \text{, 1 ≤} \text{k ≤ b} \text{}}$$\text{w} \text{=} \text{{} {\text{w}}_{\text{ijk}} \text{|} {\text{w}}_{\text{ijk}} \text{is value at} \text{p} \text{(} \text{i} \text{,} \text{j} \text{,} \text{k} \text{), 1 ≤} \text{i ≤ w} \text{, 1} \text{≤ j} \text{≤} \text{h} \text{, 1} \text{≤ k ≤ b} \text{}}$

First, it is described here about functions on point processing for each band-pixel value in the above images.

When the image **x** is converted to a binary image, EQ.5 makes the band-pixel value of **x** binary.

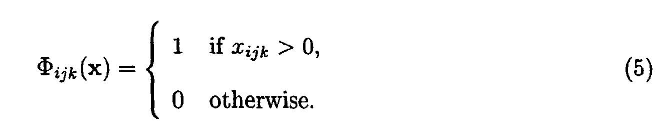

When the image **x** is converted to a band maximum-value image, EQ.6 selects the maximum value of all band values of pixel at column *i* and row *j*. Note that the number of bands of the above band maximum-value image is dealt with one for convenience since the above band maximum-value image becomes a one-band image. The third index of function *B*_{*ij*}1(**x**) is then equal to one.

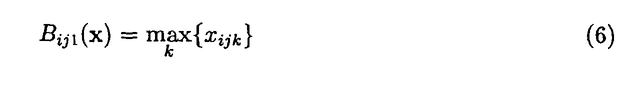

Suppose that the image **x** is a binary image. When the image **x** is inverted, EQ.7 calculates inversion.${\text{I}}_{\text{ijk}} \text{(x) = 1 -} {\text{x}}_{\text{ijk}}$

EQ.8 converts a value at a position *p*(*i*, *j*, *k*) of the image x to a logarithm of the value. Note that *e* is an offset value, and there is no problem for *e* = 1 in general because this value is used in order for a value outputted by a natural logarithmic functin to be within valid range. Subtraction between two band-pixel values can supersede division between them by this conversion. Suppose also that the image **x** is a 2^{*n*}-tone digital image 111. If a memory 102 has a look-up table including 2^{*n*} elements in spite of the number of bands, a natural logarithm function does not have to be calculated every time, and the memory 102 also does not have to memorize a standard table of logarithms.${\text{L}}_{\text{ijk}} \text{(x) = ln(} {\text{x}}_{\text{ijk}} \text{+} \text{e} \text{)}$

Now, a set *P*_{*ijk*}(*q*) of neighbor positions around *p*(*i*, *j*, *k*) is represented by EQ.9, where *q* is a progression of 4, 8, 24, 48, 80, 120, (2*r +* 1)² - 1, and *r* is a natural number. When a position outside of an image is included in the set *P*_{*ijk*}(*q*), it is superseded by the position *p*(*i*, *j*, *k*) as long as there is especially no specification. Otherwise, the position is superseded by a fictitious position, a pixel value at which is equivalent to zero, and which is not included by the image. Processing around the border is automatically carried out by this replacement. Then, the number of elements, *N*_{*ijk*}, of the set *P*_{*ijk*}(*q*) is always *q*.

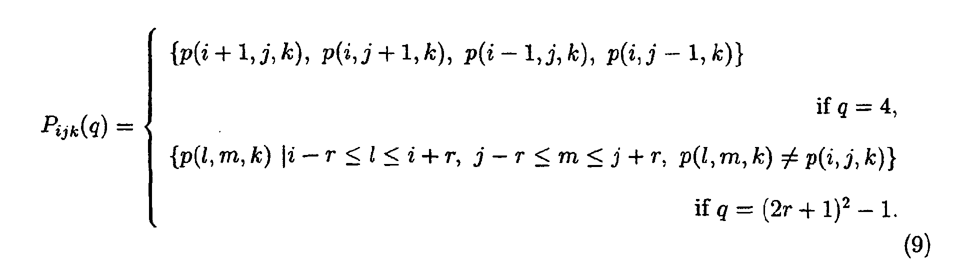

I explain here about some functions and an operator for each band-pixel value on neighbor processing, whose neighbors are included in eight neighbors 182.

Smoothing at the position *p*(*i*, *j*, *k*) of the image **x** is carried out according to EQ.10, where *int*(*v*) represents omission below decimal point for any real number *v*. Let us consider a case that this equation is implemented by a hardware. If a band-pixel value of the image **x** is an integer, a division circuit is reduced by changing a general arithmetic circuit as to perform a right-shift command two times in calculating summation of *x*_{*lmk*} if *N*_{*ijk*} = 4, or three times in calculating summation of *x*_{*lmk*} if *N*_{*ijk*} = 8.

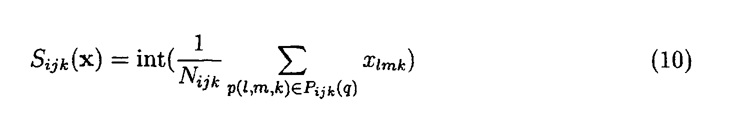

As shown in EQ.11, a Laplacian operator is just a second differential operator. Since a Laplacian operator for eight neighbors can catch a delicate change of noise, it makes many zero-points and zero crossing. The Laplacian operator for eight neighbors 182 is suitable for the present invention. Let us consider a case that this equation is implemented by a hardware. Since *N*_{*ijk*} is either four or eight, a multiple circuit is reduced by changing a general arithmetic circuit as to perform a left-shift command two times in calculating summation of *x*_{*lmk*} if *N*_{*ijk*} = 4, or three times in calculating summation of *x*_{*lmk*} if *N*_{*ijk*} *=* 8.

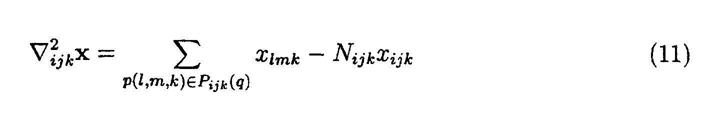

The way deriving a zero-point from a value calculated by a Laplacian operator has found a pixel value varying from positive to negative. According to EQ.12, however, the present invention finds a pixel value which shows zero crossing from negative to positive, which goes via zero such as from negative to zero and from zero to positive, and which remains zero. In the present invention, a zero-point found by EQ.12 does not suggest a place where edge exists, but represents a place where noise happens, that is, where edge does not exist. EQ.12 also makes real number binary.

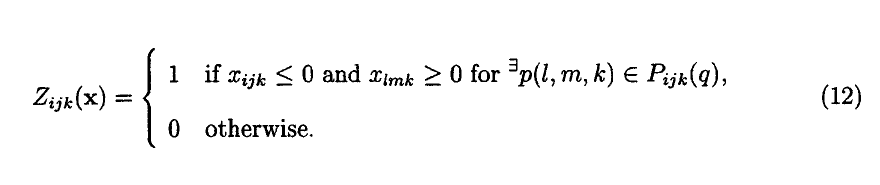

Suppose that the image **x** is any binary image. The filling a pixel with a hole in the image **x** is carried out according to EQ.13, where a parameter *f* represents the size of the hole to fill, and there is no problem for *f* = 1 in general. Since this equation for four neighbors can not detect a diagonal line in nature, the equation has to use eight neighbors 182 as much as possible.

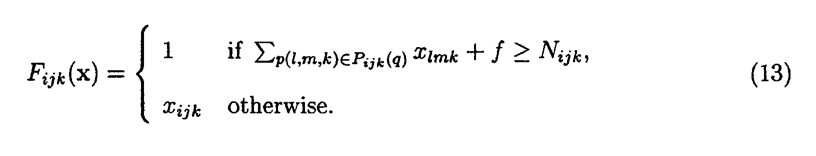

Suppose that the image **x** is any binary image. The deleting a pixel with an alone point or an alone hole in the image **x** is carried out according to EQ.14. Since this equation for four neighbors can not detect a diagonal line by nature, the equation has to use eight neighbors 182 as much as possible.

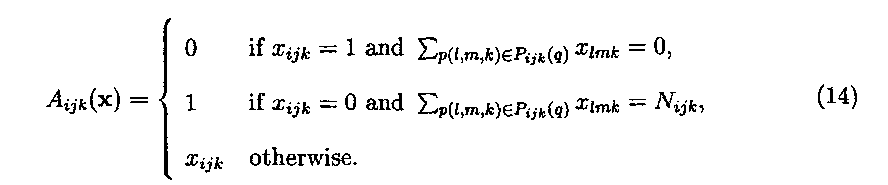

Suppose that the image **x** is any binary image. In order to detect some lines whose width is equal to one in the image **x**, EQ.15 finds a pixel making the lines, using its four neighbors.

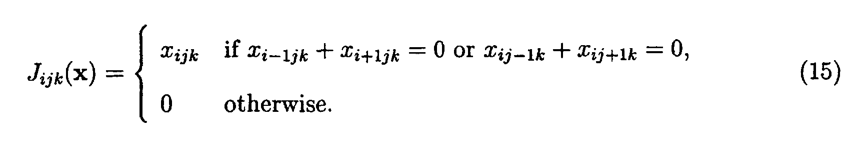

Suppose that two image **x** and **y** are binary images, and the image **y** consists of pixels representing a line whose width is equal to one in the image **x**. In order to expand the lines whose width is equal to one in the image **x**, EQ.16 change a pixel, using its four neighbors.

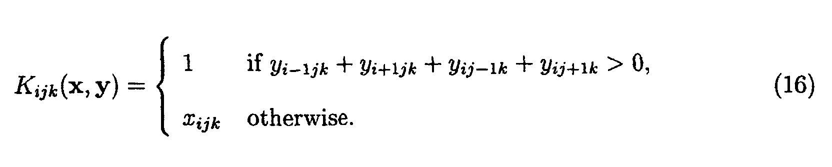

The complement of line width in a binary image can be simply described by EQ.17, using the detection of line width, EQ.15, and the expansion of line width, EQ.16.${\text{C}}_{\text{ijk}} \text{(x) =} {\text{K}}_{\text{ijk}} \text{(x,J(x))}$

Next, I explain here about some functions and operators on neighbor processing for each band-pixel value of an image.

Suppose that there are two image **x** and **y**. A maximum-value image between them is derived by EQ.18.

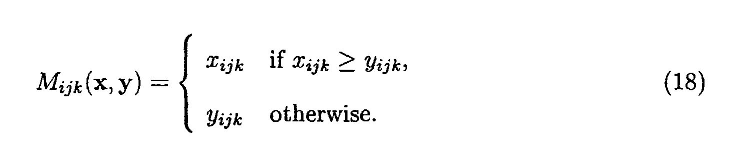

Suppose that there are two image **x** and **y**. A difference between them is calculated by EQ.19.${\text{D}}_{\text{ijk}} \text{(x, y) =} {\text{x}}_{\text{ijk}} \text{-} {\text{y}}_{\text{ijk}}$

The enhancement of a binary image can be simply described by EQ.20, using the Laplacian operator, EQ.11, and the difference, EQ.19.${\text{E}}_{\text{ijk}} \text{(x) =} {\text{D}}_{\text{ijk}} \text{(x} {\text{, ∇}}_{\text{ijk}}^{\text{2}} \text{x)}$

Suppose that there are two image **x** and **y**, and the image **y** is a one-band binary image. EQ.21 can mask each band-pixel value of the image **x** by a band-pixel value of the image **y**.${\text{O}}_{\text{ijk}} \text{(x,y) =} {\text{x}}_{\text{ijk}} {\text{y}}_{\text{ij}} {\text{}}_{\text{1}}$

Suppose that there are two image **x** and **y**, and they are both binary. The image **y** can be operated orthopedically according to EQ.22, based on the image **x**.

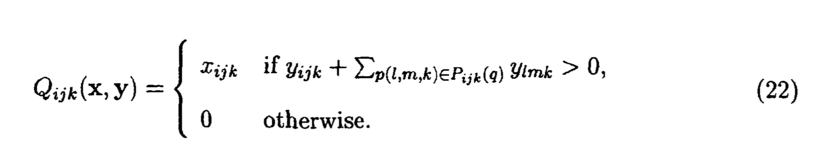

Suppose that there are two image **x** and **y**, and the image **y** is binary. A band-pixel value of the image **x** not directed by the image **y** is complemented by the average of some band-pixel values, which are directed by the image **y**, among neighbors of the band-pixel value of the image **x**, according to EQ.23, where *int*(*v*) represents omission below decimal point for any real number *v*. Note that a denominator of division in EQ.23 is a positive integer because the image **y** is binary. Thus, the division of two integers can be replaced with multiplication of two real numbers, in terms of memorizing the reciprocals from one to *q* in a memory 102.

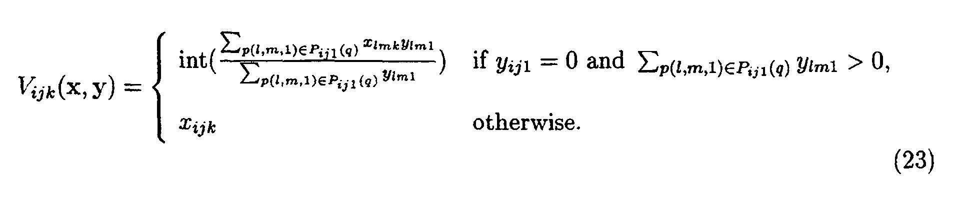

In the present invention, now, processing is carried out more simply by regarding positions of an image and transfer values as image data. I call this imagery of positions. It is described here about some functions and operators on imagery of positions.

Suppose first that an operator converting all values, *l*, *m*, *o* of a positon *p*(*l*, *m*, *o*) to a band-pixel value for an image datum is denoted as #, moreover the converted band-pixel value is denoted as #*p*(*l*, *m*, *o*). Let us consider a case that a band-pixel value is transferred from the position *p*(*i*, *j*, *k*) to the position *p*(*i + l*, *j + m*, *k + o*). A transfer value of the band-pixel value is represented by the position *p*(*l*, *m*, *o*). In short, a transfer value is regarded as a vector from some position. An operator taking out a position from a band-pixel value is denoted as #⁻¹, where #⁻¹#*p*(*l*, *m*, *o*) = *p*(*l*, *m*, *o*).

EQ.24 can change the direction of a transfer value *p*(*i*, *j*, *k*) to the opposite direction, that is, 180 degrees in a plane represented by width and height.$\text{Υ(} \text{p} \text{(} \text{i} \text{,} \text{j} \text{,} \text{k} \text{))} \text{= p} \text{(-} \text{i} \text{,-} \text{j} \text{,} \text{k} \text{)}$

Suppose that there is an image **x**, and the image **x** is binary. A transfer value toward gravity center at a position *p*(*i*, *j*, 1) of the image **x** is calculated by EQ.25. Although division has to be carried out by nature in calculating the gravity center, the division is omitted in EQ.25 because the division is offset in converting the transfer value to one of eight neighbors 182.

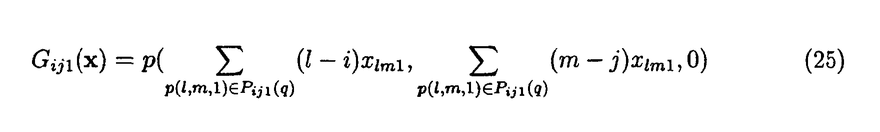

A pixel value of a transfer-value image can be made from a transfer value *p*(*i*, *j*, *k*), by converting *p*(*i*, *j*, *k*) to one of eight neighbors 182, according to EQ.26 and EQ.27, where EQ.27 is used only when an descrete image makes a trouble in EQ.26.

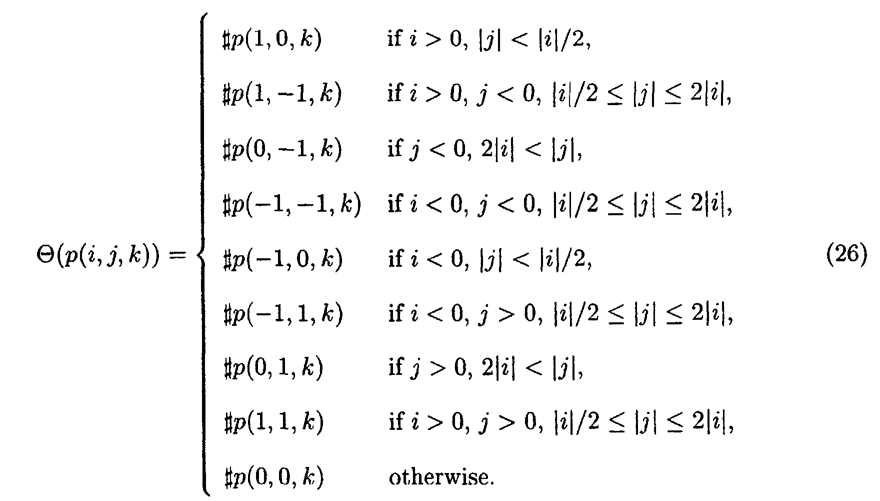

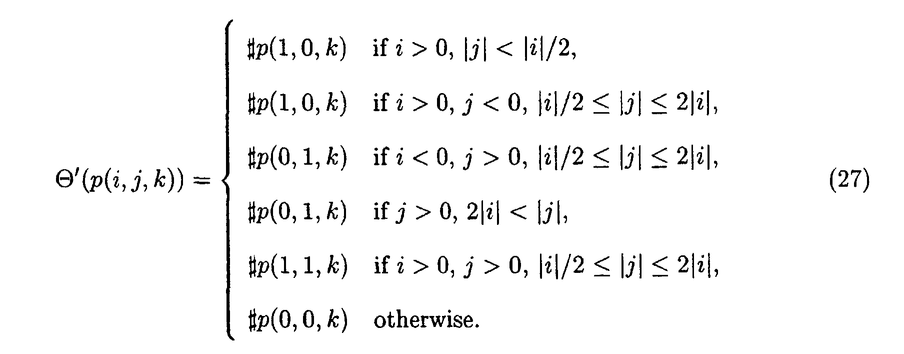

The band-pixel value of the transfer-value image toward the gravity center of the one-band binary image **x** can be simply described by EQ.28 and EQ.29, using EQ.25, EQ.26 and EQ.27. Note that the number of bands of the transfer-value image is equal to one.${\text{Δ}}_{\text{ij}} {\text{}}_{\text{1}} \text{(x) = Θ(} {\text{G}}_{\text{ij}} {\text{}}_{\text{1}} \text{(x))}$${\text{Δ}}_{\text{ij} \text{1}}^{\text{'}} \text{(x) = Θ'(} {\text{G}}_{\text{ij}} {\text{}}_{\text{1}} \text{(x))}$

On the other hand, since the opposite position against the gravity center is derived by EQ.24, the band-pixel value of the transfer-value image against the gravity center of the one-band binary image **x** can be simply described by EQ.30. Note that the number of bands of the transfer-value image is equal to one.${\text{R}}_{\text{ij}} {\text{}}_{\text{1}} \text{(x) = Θ(Υ(} {\text{G}}_{\text{ij}} {\text{}}_{\text{1}} \text{(x)))}$

Suppose that there are two image **x** and **y**, and the image **y** is a transfer-value image. After a band-pixel value of the image **x** is transferred to a transfer position directed by the image **y**, according to EQ.31, a grayscale image can be made from summation of some band-pixel values which have been transferred to the same band-pixel.${\text{Γ}}_{\text{ijk}} \text{(x,y) = Σ} {\text{x}}_{\text{lmk}} \text{for} \text{p} \text{(} \text{l} \text{,} \text{m} \text{, 1) ∈} {\text{P}}_{\text{ij}} {\text{}}_{\text{1}} \text{(} \text{q} {\text{) and #}}^{\text{-1}} {\text{y}}_{\text{lm}} {\text{}}_{\text{1}} \text{=} \text{p} \text{(} \text{i} \text{-} \text{l} \text{,} \text{j} \text{- m, 0).}$

In a case that each pixel of the one-band grayscale image **x** is transferred to one of neighbors toward the gravity center, followed by calculating the summation of the band-pixel values transferred to the same band-pixel, this process can be simply described by EQ.32 and EQ.33, using EQ.5, EQ.28, EQ.29 and EQ.31.${\text{Λ}}_{\text{ij}} {\text{}}_{\text{1}} {\text{(x) = Γ}}_{\text{ij}} {\text{}}_{\text{1}} \text{(x, Δ(Φ(x)))}$${\text{Λ}}_{\text{ij} \text{1}}^{\text{'}} {\text{(x) = Γ}}_{\text{ij}} {\text{}}_{\text{1}} \text{(x,Δ'(Φ(x)))}$

By the way, when the number of neighbors, *q*, is limited to eight in EQ.31, the transfer-value image **y** can specify a transfer source among eight neighbors 182 for each pixel. In a case that the image **x** is a redundant-information image 132 and eight numbers from one to eight were arranged counterclockwisely for eight neighbors 182 of each pixel in **x**, as shown in FIG.17, eight equations from EQ.34 to EQ.41 can judge whether there is redundant information 131 possible to transfer, for each of eight transfer sources, respectively.

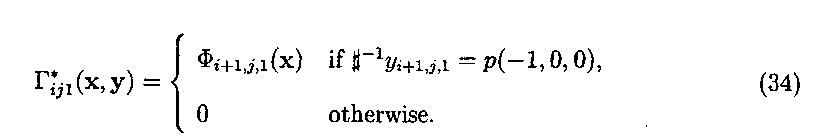

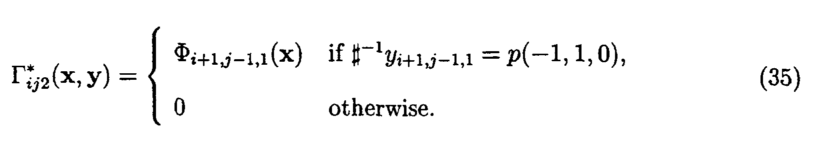

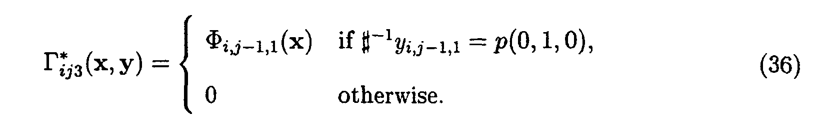

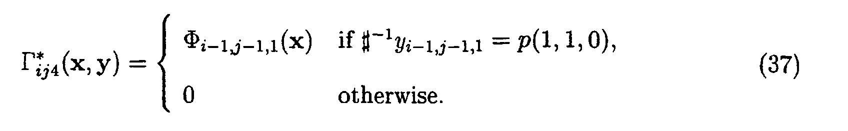

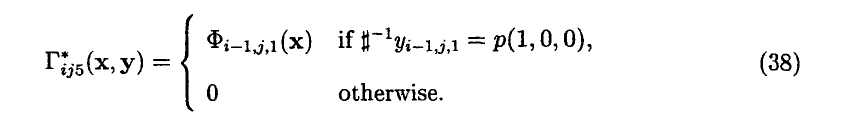

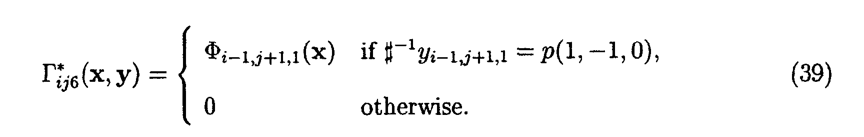

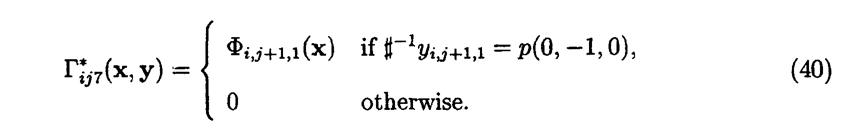

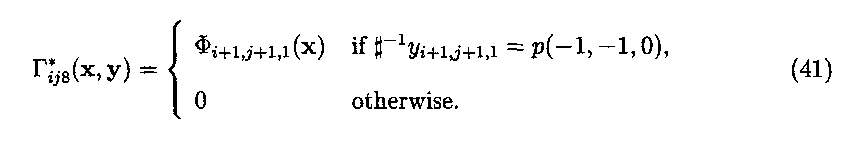

Thus, transfer-source redundant information 183 of each of eight transfer sources is generated from an eight-band grayscale image **x** consisting of eight transfer-source redundant information 183 and a one-band grayscale image **y** consisting of redundant information 131, by using EQ.42 and EQ.43 instead of EQ.32 and EQ33.${\text{Λ}}_{\text{ijk}}^{\text{*}} {\text{(x, y) = Γ}}_{\text{ijk}} {\text{(x, Δ(Φ(y))) + Γ}}_{\text{ijk}}^{\text{*}} \text{(y, Δ(Φ(y)))}$${\text{Λ}}_{\text{ijk}}^{\text{'*}} {\text{(x, y) = Γ}}_{\text{ijk}} {\text{(x, Δ'(Φ(y))) + Γ}}_{\text{ijk}}^{\text{*}} \text{(y, Δ'(Φ(y)))}$

Suppose that there are two image **x** and **y**, the image x is a binary image, and the image **y** is a transfer-value image. Since a transfer position of each band-pixel value of the image **x** can be derived, some band-pixel values whose transfer position is redundant can also be found. EQ.44 generates a band-pixel value of a transferability image appearing that a transfer position of each band-pixel value of the image **x** is not redundant, and that the band-pixel value can also be transferred to another position. Note that the number of bands of the transferability image is equal to one.

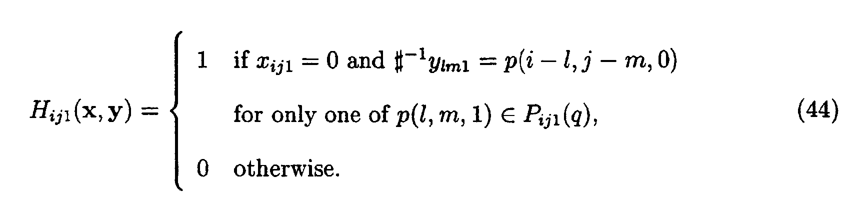

Suppose that there are three image **x**, **y** and **w**, the image **y** is a transferability image, and the image **w** is a transfer-value image. EQ.45 can transfer a band-pixel value of the image **x**.

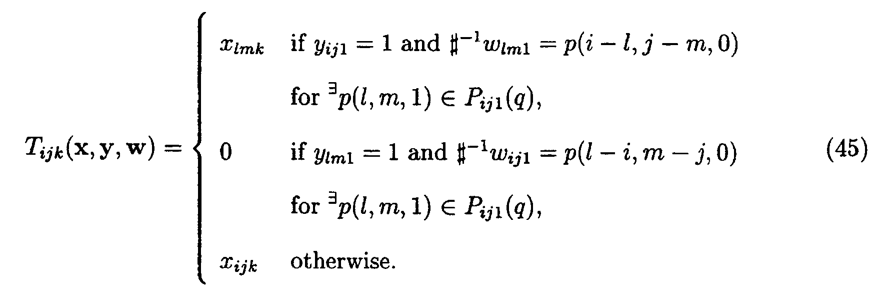

The band-pixel value of an image that can be derived by transferring a band-pixel value of the image **x** to the direction against the gravity center derived from the binary image **y** can be simply described by EQ.46, using EQ.30, EQ.44 and EQ.45.${\text{U}}_{\text{ijk}} \text{(x, y) =} {\text{T}}_{\text{ijk}} \text{(x, H(y, R(y)), R(y))}$

Algorithm of all array operation units 100 in a data processing device 110, which can realize the image memorization means 12, the color-information generation means 41, the edge-information generation means 14, the edge-information formation means 15, the position/size detection means 17, the position/size/inclination detection means 44, the area normalization means 27, the mask means 40, and the image keeping means 39 shown in FIG.14, can be described by EQ.2 to EQ.46. It is explained here about the image memorization means 12, the color-information generation means 41, the edge-information generation means 14, the edge-information formation means 15, the position/size detection means 17, the position/size/inclination detection means 44, the area normalization means 27, the mask means 40, and the image keeping means 39, respectively, by representing the algorithm of any array operation unit 100 in the data processing device 110.

In order for the image memorization means 12 realized by a data processing device 110 to memorize a digital image 111, array operation units 100 arranged in the shape of a lattice work synchronously in parallel. Let an array operation unit 100 at a column *i* and a row *j* of a matrix be *AOU*_{*ij*}. Algorithm of *AOU*_{*ij*} is shown in FIG.18.

At step 1201, *AOU*_{*ij*} is arranged at the column *i* and the row *j* of the matrix. This is desired to decide neighbors of *AOU*_{*ij*} either logically and physically.

At step 1202, neighbors of *AOU*_{*ij*} are set and its parameters are initialized.

At step 1203, *AOU*_{*ij*} judges whether there is a digital image 111 inputted one by one or not. If there is not the digital image 111 any more (step 1203: YES), this algorithm ends. If there is the digital image 111 (step 1203: NO), this algorithm goes to step 1204. Note that this algorithm can be an infinite loop when array operation units 100 are realized for a specific size of the image.

At step 1204, *AOU*_{*ij*} waits while the input digital image 111 is under preparation.

At step 1205, *AOU*_{*ij*} inputs the whole pixel on the column *i* and the row *j* of the digital image 111. Therefore, *AOU*_{*ij*} needs a memory 102 memorizing at least the number of bands of image data.

At step 1206, *AOU*_{*ij*} memorizes the pixel on the column *i* and the row *j* of the digital image 111, as outputting the pixel during waiting the input data.

At step 1207, *AOU*_{*ij*} outputs all band-pixel values of the digital image 111. This algorithm then returns to step 1203.

The image memorization means 12 can memorize the digital image 111, by using the data processing device 110 consisting of array operation units 100.

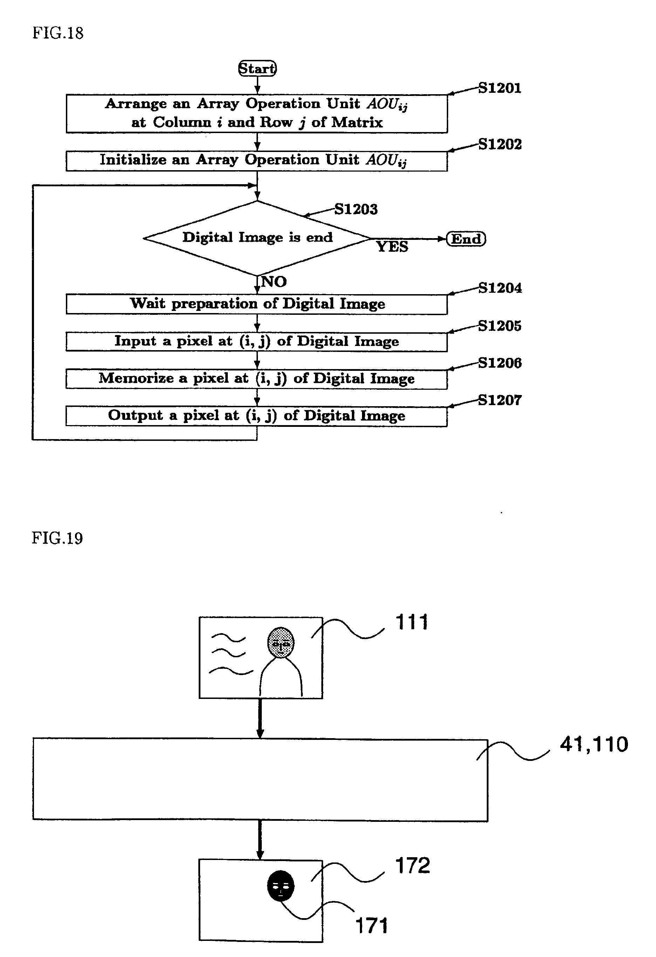

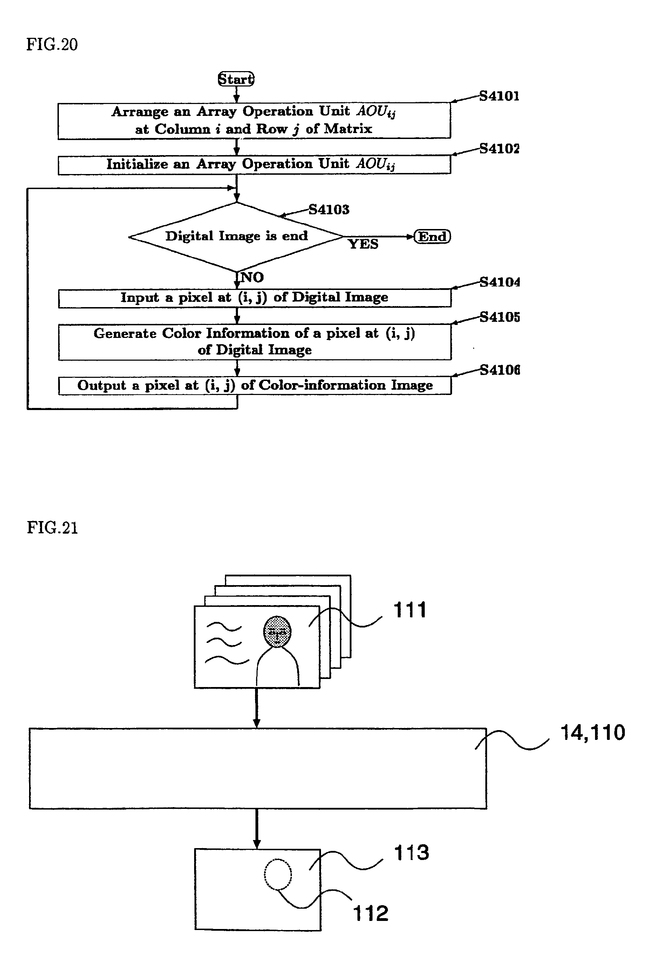

As shown in FIG.19, in order for the color-information generation means 41 realized by a data processing device 110 to generate a color information 171 from each pixel of a digital image 111, array operation units 100 arranged in the shape of a lattice work synchronously in parallel. Let an array operation unit 100 at a column *i* and a row *j* of a matrix be *AOU*_{*ij*}*.* Algorithm of *AOU*_{*ij*} is shown in FIG.20.

At step 4101, *AOU*_{*ij*} is arranged at the column *i* and the row *j* of the matrix. This is desired to decide neighbors of *AOU*_{*ij*} either logically and physically.

At step 4102, neighbors of *AOU*_{*ij*} are set and its parameters are initialized.

At step 4103, *AOU*_{*ij*} judges whether there is a digital image 111 inputted one by one or not. If there is not the digital image 111 any more (step 4103: YES), this algorithm ends. If there is the digital image 111 (step 4103: NO), this algorithm goes to step 4104. Note that this algorithm can be an infinite loop when array operation units 100 are realized for a specific size of the image.

At step 4104, *AOU*_{*ij*} inputs the whole pixel on the column *i* and the row *j* of the digital image 111. Therefore, *AOU*_{*ij*} needs a memory 102 memorizing at least the number of bands of image data.

At step 4105, *AOU*_{*ij*} generates color information 171 by extracting specific colors from the pixel on the column *i* and the row *j* of the digital image 111. The generated color information 171 is regarded as a band-pixel value of a color-information image 172.

At step 4106, *AOU*_{*ij*} outputs the band-pixel value of the color-information image 172. This algorithm then returns to step 4103.

The color-information generation means 41 can generate the color-information image 172 from the digital image 111, by using the data processing device 110 consisting of array operation units 100.

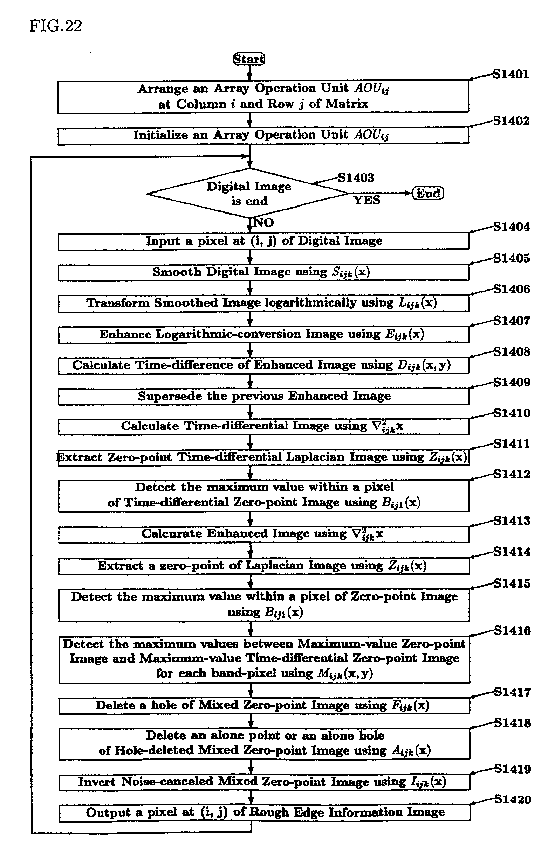

As shown in FIG.21, in order for the edge-information generation means 14 realized by a data processing device 110 to generate a rough edge-information image 113 from a digital image 111, array operation units 100 arranged in the shape of a lattice work synchronously in parallel. Let an array operation unit 100 at a column *i* and a row *j* of a matrix be *AOU*_{*ij*}. Algorithm of *AOU*_{*ij*} is shown in FIG.22.

At step 1401, *AOU*_{*ij*} is arranged at the column *i* and the row *j* of the matrix. This is desired to decide neighbors of *AOU*_{*ij*} either logically and physically.

At step 1402, neighbors of *AOU*_{*ij*} are set and its parameters are initialized. In setting the neighbors, the number of neighbors used in the above functions can be defined as either four or eight individually, or all of them can be defined as either four or eight uniformly. In order to make rough edge information 112 generated by the edge-information generation means 14 of the present invention more exact, the number of neighbors *q* has to be set to eight for all functions. The edge-information generation means 14, however, can cope with limitation of computational time to generate the rough edge information 112 and the number of bands of the digital image 111, by varying the number of neighbors suitably.

At step 1403, *AOU*_{*ij*} judges whether there is a digital image 111 inputted one by one or not. If there is not the digital images 111 any more (step 1403: YES), this algorithm ends. If there is the digital image 111 (step 1403: NO), this algorithm goes to step 1404. Note that this algorithm can be an infinite loop when array operation units 100 are realized for a specific size of the image.

At step 1404, *AOU*_{*ij*} inputs the whole pixel on the column *i* and the row *j* of the digital image 111. This is done for *AOU*_{*ij*} to process the pixel on the column *i* and the row *j* of the digital image 111. Therefore, *AOU*_{*ij*} needs a memory 102 memorizing at least the number of bands of image data.

At step 1405, for each band-pixel value of the inputted digital image 111, *AOU*_{*ij*} carries out smoothing according to the function *S*_{*ijk*}(**x**), by communicating with neighbor array operation units 100. The smoothed band-pixel value is regarded as a band-pixel value of a smooth digital image. The function *S*_{*ijk*}(**x**) may be calculated some times if desired. It is enough for a general color image to repeat the function two times.

At step 1406, for each band-pixel value of the smooth digital image, *AOU*_{*ij*} carries out logarithm conversion according to the function *L*_{*ijk*}(**x**). The band-pixel value converted to logarithm is regarded as a band-pixel value of a logarithmic-conversion image.

At step 1407, for each band-pixel value of the logarithmic-conversion image, *AOU*_{*ij*} carries out enhancement according to the function *E*_{*ijk*}(**x**), by communicating with neighbor array operation units 100. The enhanced band-pixel value is regarded as a band-pixel value of an enhanced image. Note that this step can be omitted if the digital image 111 has much noise.

At step 1408, from each band-pixel value of the logarithmic-conversion image, *AOU*_{*ij*} subtracts each band-pixel value of the previous enhanced image, respectively, according to the function *D*_{*ijk*}(**x**,**y**). The band-pixel value representing the difference is regarded as a band-pixel value of a time-differential image.

At step 1409, Each band-pixel value of the previous enhanced image is superseded by the corresponding band-pixel value of the enhanced image.

At step 1410, for each band-pixel value of the time-differential image, *AOU*_{*ij*} carries out calculation of Laplacian according to the operator ∇$\frac{\text{2}}{\text{ijk}}$**x**, by communicating with neighbor array operation units 100. The band-pixel value calculated by the Laplacian operator is regarded as a band-pixel value of a time-differential Laplacian image.

At step 1411, for each band-pixel value of the time-differential Laplacian image, *AOU*_{*ij*} extracts zero-point according to the function *Z*_{*ijk*}(**x**), by communicating with neighbor array operation units 100. The band-pixel value representing the extracted zero-point is regarded as a band-pixel value of a time-differential zero-point image.

At step 1412, for each band-pixel value of the time-differential Laplacian image, *AOU*_{*ij*} detects the maximum value among some band-pixel values of the time-differential Laplacian image, according to the function *B*_{*ij*}₁(**x**). The band-pixel value representing the detected maximum value is regarded as a band-pixel value of a maximum-value time-differential zero-point image. Note that the number of bands, on facilities, is one.

At step 1413, for each band-pixel value of the enhanced image, *AOU*_{*ij*} carries out calculation of Laplacian according to the operator ∇$\frac{\text{2}}{\text{ijk}}$**x**, by communicating with neighbor array operation units 100. The band-pixel value calculated by the Laplacian operator is regarded as a band-pixel value of a Laplacian image.

At step 1414, for each band-pixel value of the Laplacian image, *AOU*_{*ij*} extracts zero-point according to the function *Z*_{*ijk*}(**x**), by communicating with neighbor array operation units 100. The band-pixel value representing the extracted zero-point is regarded as a band-pixel value of a zero-point image.

At step 1415, for each band-pixel value of the Laplacian image, *AOU*_{*ij*} detects the maximum value among some band-pixel values of the Laplacian image, according to the function *B*_{*ij*}₁(x). The band-pixel value representing the detected maximum value is regarded as a band-pixel value of a maximum-value zero-point image. Note that the number of bands, on facilities, is one.

At step 1416, for each band-pixel value of the Laplacian image and each band-pixel value of the time-differential Laplacian image, *AOU*_{*ij*} detects the maximum value between two band-pixel values at the same position of the images according to the function *M*_{*ijk*}(**x**,**y**). The band-pixel value representing the detected maximum value is regarded as a band-pixel value of a mixed zero-point image. Note that the number of bands, on facilities, is one.

At step 1417, for a band-pixel value of the mixed zero-point image, *AOU*_{*ij*} deletes a hole according to the function *F*_{*ijk*}(**x**), by communicating with neighbor array operation units 100. The band-pixel value deleted the hole is regarded as a band-pixel value of a hole-deleted mixed zero-point image. Note that the number of bands, on facilities, is one. The function *F*_{*ijk*}(**x**) may be calculated some times if desired. It is enough for a general color image to calculate the function one time.

At step 1418, for a band-pixel value of the hole-deleted mixed zero-point image, *AOU*_{*ij*} deletes an alone point and an alone hole according to the function *A*_{*ijk*}(**x**), by communicating with neighbor array operation units 100. The band-pixel value deleted the point and the hole is regarded as a band-pixel value of a noise-canceled mixed zero-point image. Note that the number of bands, on facilities, is one.

At step 1419, for a band-pixel value of the noise-canceled mixed zero-point image, *AOU*_{*ij*} inverts zero and one according to the function *I*_{*ijk*}(**x**). The inverted band-pixel value is regarded as a band-pixel value of a rough edge-information image 113.

At step 1420, *AOU*_{*ij*} outputs a band-pixel value of the rough edge-information image 113. This algorithm then returns to step 1403.

The edge-information generation means 14 can generate the rough edge-information image 113 from the digital image 111, by using the data processing device 110 consisting of array operation units 100.

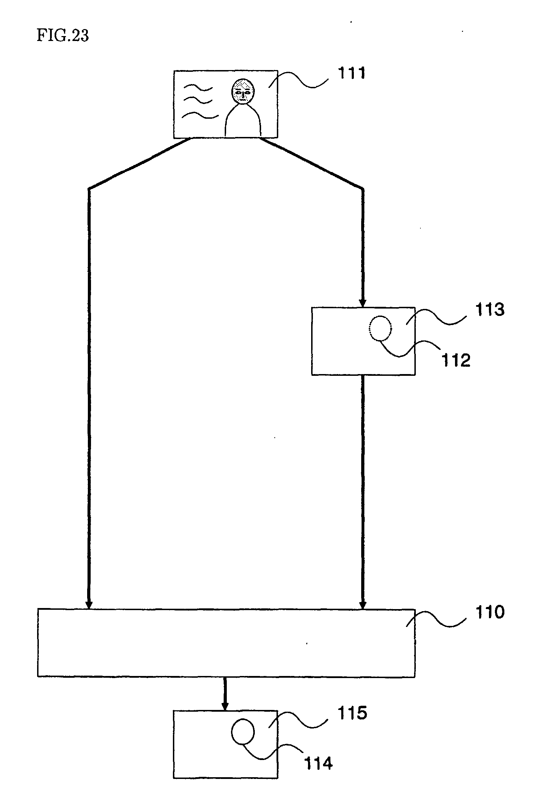

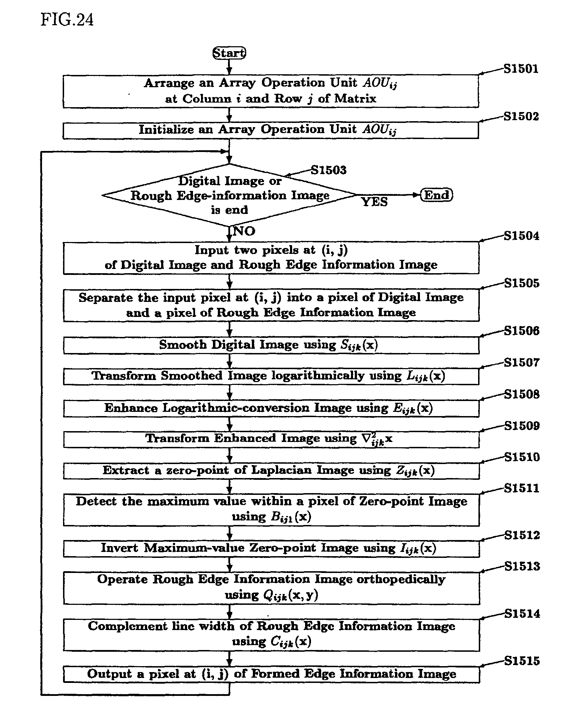

As shown in FIG.23, in order for the edge-information formation means 15 realized by a data processing device 110 to generate a formed edge-information image 115 consisting of formed edge information 114 from a rough edge-information image 113 consisting of rough edge information 112 and a digital image 111, array operation units 100 arranged in the shape of a lattice work synchronously in parallel. Let an array operation unit 100 at a column *i* and a row *j* of a matrix be *AOU*_{*ij*}*.* Algorithm of *AOU*_{*ij*} is shown in FIG.24.

At step 1501, *AOU*_{*ij*} is arranged at the column *i* and the row *j* of the matrix. This is desired to decide neighbors of *AOU*_{*ij*} either logically and physically.

At step 1502, neighbors of *AOU*_{*ij*} are set and its parameters are initialized. In setting the neighbors, the number of neighbors used in the above functions can be defined as either four or eight individually, or all of them can be defined as either four or eight uniformly. In order to make formed edge information 114 formed by the edge-information formation means 15 of the present invention more exact, the number of neighbors *q* has to be set to eight for all functions. The edge-information formation means 15, however, can cope with limitation of computational time to form the rough edge information 112 and the number of bands of the digital image 111, by varying the number of neighbors suitably.

At step 1503, *AOU*_{*ij*} judges whether there is both a digital image 111 and a rough edge-information image 113 inputted one by one or not. If there is not the digital images 111 or the rough edge-information image 113 any more (step 1503: YES), this algorithm ends. If there is either the digital images 111 or the rough edge-information image 113 (step 1503: NO), this algorithm goes to step 1504. Note that this algorithm can be an infinite loop when array operation units 100 are realized for a specific size of the image.

At step 1504, *AOU*_{*ij*} inputs the whole pixel on the column *i* and the row *j* of the digital image 111 and the whole pixel on the column *i* and the row *j* of the rough edge-information image 113. This is done for *AOU*_{*ij*} to process collectively the pixel on the column *i* and the row *j* of the digital image 111 and the pixel on the column *i* and the row *j* of the rough edge-information image 113. Therefore, *AOU*_{*ij*} needs a memory 102 memorizing at least the number of bands of image data.

At step 1505, *AOU*_{*ij*} separates the pixel on the column *i* and the row *j* of the digital image 111 and the pixel on the column *i* and the row *j* of the rough edge-information image 113. This is done for *AOU*_{*ij*} to process the pixel on the column *i* and the row *j* of the digital image 111 and the pixel on the column *i* and the row *j* of the rough edge-information image 113 as two pixel of independent images, respectively. If the pixel on the column *i* and the row *j* of the digital image 111 and the pixel on the column *i* and the row *j* of the rough edge-information image 113 are beforehand separeted and are then inputted, *AOU*_{*ij*} carries out nothing.

At step 1506, for each band-pixel value of the inputted digital image 111, *AOU*_{*ij*} carries out smoothing according to the function *S*_{*ijk*}(**x**), by communicating with neighbor array operation units 100. The smoothed band-pixel value is regarded as a band-pixel value of a smooth digital image. The function *S*_{*ijk*}(**x**) may be calculated some times if desired. It is enough for a general color image to repeat the function two times.

At step 1507, for each band-pixel value of the smooth digital image, *AOU*_{*ij*} carries out logarithm conversion according to the function *L*_{*ijk*}(**x**). The band-pixel value converted to logarithm is regarded as a band-pixel value of a logarithmic-conversion image.

At step 1508, for each band-pixel value of the logarithmic-conversion image, *AOU*_{*ij*} carries out enhancement according to the function *E*_{*ijk*}(**x**), by communicating with neighbor array operation units 100. The enhanced band-pixel value is regarded as a band-pixel value of an enhanced image.

At step 1509, for each band-pixel value of the enhanced image, *AOU*_{*ij*} carries out calculation of Laplacian according to the operator ∇$\frac{\text{2}}{\text{ijk}}$**x**, by communicating with neighbor array operation units 100. The band-pixel value calculated by the Laplacian operator is regarded as a band-pixel value of a Laplacian image.

At step 1510, for each band-pixel value of the Laplacian image, *AOU*_{*ij*} extracts zero-point according to the function *Z*_{*ijk*}(**x**), by communicating with neighbor array operation units 100. The band-pixel value representing the extracted zero-point is regarded as a band-pixel value of a zero-point image.

At step 1511, for each band-pixel value of the zero-point image, *AOU*_{*ij*} detects the maximum value among some band-pixel values of the zero-point image, according to the function *B*_{*ij*}₁(**x**). The band-pixel value representing the detected maximum value is regarded as a band-pixel value of a maximum-value zero-point image. Note that the number of bands, on facilities, is one.

At step 1512, for a band-pixel value of the maximum-value zero-point image, *AOU*_{*ij*} inverts zero and one according to the function *I*_{*ijk*}(**x**). The inverted band-pixel value is regarded as a band-pixel value of a based edge-information image.

At step 1513, the band-pixel value of the input rough edge-information image 113 first is regarded as a band-pixel value of an orthopedical rough edge-information image. For a band-pixel value of the orthopedical rough edge-information image, *AOU*_{*ij*} operates orthopedically according to the function *Q*_{*ijk*}(**x**,**y**). The band-pixel value operated orthopedically is regarded as a band-pixel value of an orthopedical rough edge-information image again. The function *Q*_{*ijk*}(**x**,**y**) is repeated by nature until the band-pixel value of the orthopedical rough edge-information image stops changing. However, it is better for *AOU*_{*ij*} to close this orthpedical processing in some specific repeat times, corresponding to limitation of computational time, quality of the input rough edge-information image 113, quality desired for the formed edge-information image 115.

At step 1514, for a band-pixel value of the orthopedical rough edge-information image, *AOU*_{*ij*} complements line width according to the function *C*_{*ijk*}(**x**), by communicating with neighbor array operation units 100. The complemented band-pixel value is regarded as a band-pixel value of a formed edge-information image 115.

At step 1515, *AOU*_{*ij*} outputs a band-pixel value of the formed edge-information image 115. This algorithm then returns to step 1503.

The edge-information formation means 15 can generate the formed edge-information image 115 from the rough edge-information image 113, by using the data processing device 110 consisting of array operation units 100.

We can regard here that the formation from the rough edge-information image 113 to the formed edge-information image 115 is to inference edge information to be generated from a high-resolution digital image 111 taken in a scene, from edge information generated from a low-resolution digital image 111 taken in the same scene. As shown in FIG.25, for a natural number *n*, the rough edge-information image 113 can be generated by expanding a low-resolution rough edge-information image 117 *n* times, when the edge-information generation means 14 generates the low-resolution rough edge-information image 117 from the low-resolution digital image 116 whose resolution is equivalent to 1/*n* resolution of the digital image 111. In order to decrease the resolution of the digital image 111 to 1/*n*, we only have to extract one of *n* horizontally or vertically successive pixels of the digital image 111. On the other hand, in order to expand the low-resolution rough edge-information image 117 *n* times, we only have to fill in successive pixels of the low-resolution rough edge-information image 117 with *n*-1 pixels whose band-pixel value is equivalent to zero. Suppose here that a rough edge-information image 113 is made by expanding a low-resolution rough edge-information image 117, and another rough edge-information image 113 is generated from the digital image 111. If *n* is not too large, a formed edge-information image 115, to which a data processing device 110 realizing the edge-information formation means 15 forms the former rough edge-information image 113, becomes almost same as a formed edge-information image 115, to which a data processing device 110 realizing the edge-information formation means 15 forms the latter rough edge-information image 113. This reason is because the edge-information formation means 15 only uses the rough edge-information image 113 to refer to which of edge information, generated by the edge-information formation means 15 itself from digital image 111, is used. Therefore, in a case that the edge-information formation means 15 inputs a rough edge-information image 113 made by expanding a low-resolution rough edge-information image 117, a data processing device 110 realizing the edge-information generation means 14, which generates the low-resolution rough edge-information image 117 from a low-resolution digital image 116, can reduce volume of hardware.

When this method is developed, furthermore, as shown in FIG.26, the data processing device 110 can cut a low-resolution cut rough edge-information image 118 around the rough edge information 112 out of the low-resolution rough edge-information image 117 generated from low-resolution digital image 116 which is a low resolution of the digital image 111. Suppose that the data processing device 110 realizing the edge-information formation means 14 inputs a cut rough edge-information image 119 made by expanding this low-resolution cut rough edge-information image 118 and a cut digital image 120 which is the same cut domain of the digital image 111 as the cut rough edge-information image 119. The data processing device 110 can generate a cut formed edge-information image 121. In this case, the data processing device 110 realizing the edge-information formation means 15 can reduce volume of hardware. Note that the visual device 2 can be regarded as a device that changes direction and magnification of the moving camera 10, as the cut digital image 120 always comes to be located at the center of the digital image 111.

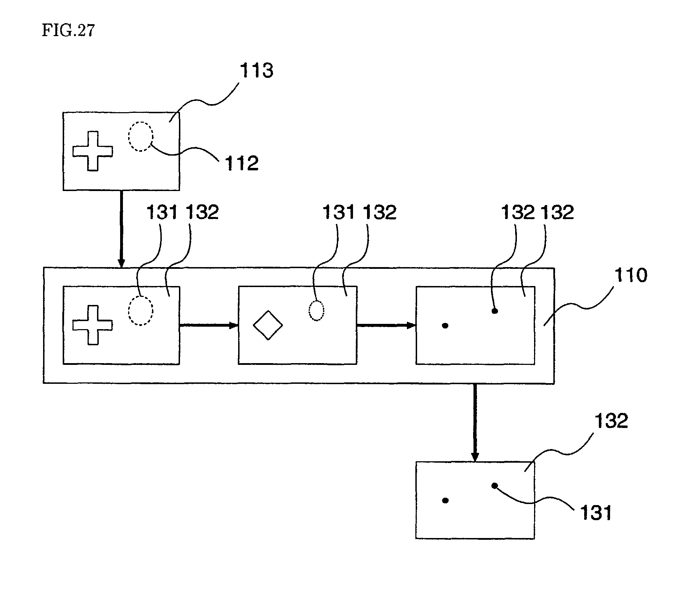

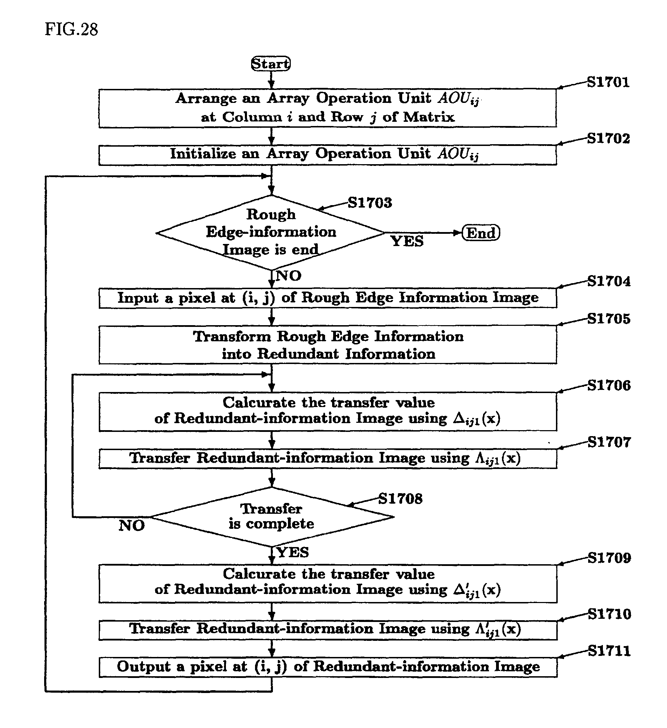

As shown in FIG.27, in order for the position/size detection means 17 realized by a data processing device 110 to generate a redundant-information image 132 consisting of redundant information 131 from a rough edge-information image 113 consisting of rough edge information 112, array operation units 100 arranged in the shape of a lattice work synchronously in parallel. Let an array operation unit 100 at a column *i* and a row *j* of a matrix be *AOU*_{*ij*}*.* Algorithm of *AOU*_{*ij*} is shown in FIG.28.

At step 1701, *AOU*_{*ij*} is arranged at the column *i* and the row *j* of the matrix. This is desired to decide neighbors of *AOU*_{*ij*} either logically and physically.

At step 1702, neighbors of *AOU*_{*ij*} are set and its parameters are initialized. In setting the neighbors, the number of neighbors used in the above functions can be defined as either four or eight individually, or all of them can be defined as either four or eight uniformly. In order to make the redundant-information image 132 generated by the data processing device 110 of the present invention more exact, the number of neighbors *q* has to be set a large number for all functions. The position/size detection means 17, however, can cope with limitation of computational time to calculate gravity of the rough edge information 112 of an object and the size of the input rough edge-information image 113, by varying the number of neighbors suitably.

At step 1703, *AOU*_{*ij*} judges whether there is a rough edge-information image 113 inputted one by one or not. If there is not the rough edge-information image 113 any more (step 1703: YES), this algorithm ends. If there is the rough edge-information image 113 (step 1703: NO), this algorithm goes to step 1704. Note that this algorithm can be an infinite loop when array operation units 100 are realized for a specific size of the image.

At step 1704, *AOU*_{*ij*} inputs the whole pixel on the column *i* and the row *j* of the rough edge-information image 113. Therefore, *AOU*_{*ij*} needs a memory 102 memorizing at least the number of bands of image data.

At step 1705, *AOU*_{*ij*} converts the rough edge information 112 to the rough edge-information image 113. The redundant information 131 becomes a pixel value equivalent to one or zero.

At step 1706, for each band-pixel value of the redundant-information image 132, *AOU*_{*ij*} calculates a transfer value, according to the function Δ_{*ij*}₁(**x**), by communicating with neighbor array operation units 100. The band-pixel value representing the transfer value is regarded as a band-pixel value of a transfer-value image.

At step 1707, for each band-pixel value of the redundant-information image 132, *AOU*_{*ij*} transfers it according to the function *Λ*_{*ij*}₁(**x**), by communicating with neighbor array operation units 100. The transferred band-pixel value is regarded as a band-pixel value of a new redundant-information image 132.

At step 1708, *AOU*_{*ij*} judges whether the transfer times representing the repeat times from step 1706 to step 1707 achieve the directed times or not. If the transfer times do not achieve the directed times (step 1708: NO), this algorithm returns to step 1706. If the transfer times achieve the directed times (step 1708: YES), this algorithm goes to step 1709. Note that the directed times are derived by the size of the rough edge-information image 113, the size of the object represented by the rough edge information 112, and the number of neighbors *q*. In a case that some parameters are set to specific numbers corresponding to the aim of use, there is no problem even though the directed times are set to more than the necessary times. If the directed times are too much, however, *AOU*_{*ij*} takes much time to detect the position and the size of the object.

At step 1709, for each band-pixel value of the redundant-information image 132, *AOU*_{*ij*} calculates a transfer value according to the function Δ$\frac{}{\text{'} \text{ij} \text{1}}$(**x**), by communicating with neighbor array operation units 100. The band-pixel value representing the transfer value is regarded as a band-pixel value of the transfer-value image.

At step 1710, for each band-pixel value of the redundant-information image 132, *AOU*_{*ij*} transfers it according to the function Λ$\frac{}{\text{'} \text{ij} \text{1}}$(**x**), by communicating with neighbor array operation units 100. The transferred band-pixel value is regarded as a band-pixel value of a new redundant-information image 132.

At step 1711, *AOU*_{*ij*} outputs a band-pixel value of the redundant-information image 132. This algorithm then returns to step 1703.

Note that each redundant information 131 of the redundant-information image 132 consequently means the size of the object, whose center is a position of the redundant-information image 132, because it means the total number of the rough edge information 112 around the position.

The position/size detection means 17 can generate the redundant-information image 132 from the rough edge-information image 113, by using the data processing device 110 consisting of array operation units 100.

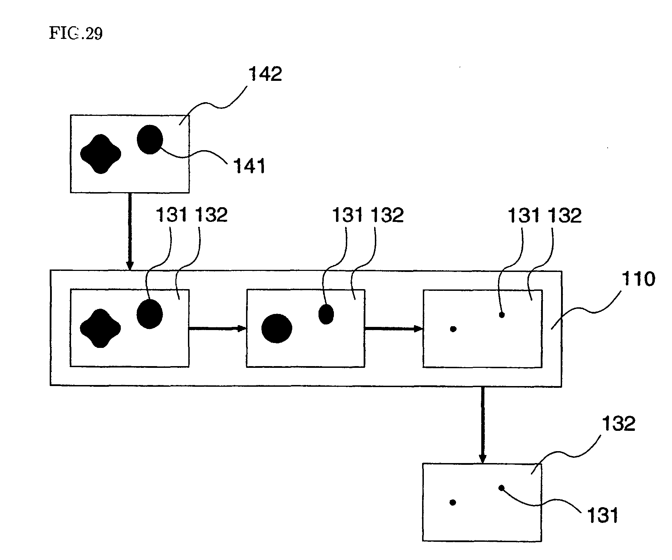

By the way, suppose that an object-area image 142 representing an object area 141 is used in the algorithm shown in FIG.28, instead of the rough edge-information image 113 consisting of the rough edge information 112. As shown in FIG.29, the position/size detection means 17 realized by the data processing device 110 can also generate the redundant-information image 132 representing redundant information 131 from the object-area image 142 representing the object area 141. In the case that the object-area image 142 is used, however, each redundant information 131 of the redundant-information image 132 consequently means the area of the object, whose center is a position of the redundant-information image 132, because it means the total number of pixels of the object area 141 around the position. When the size of object is derived from the redundant-information image 132, therefore, we must pay attention such as calculating the square root of the redundant information 131. Note that the position/size detection means 17 also carries out this algorithm similarly, in two cases that a formed edge-information image 115 and a color-information image 172 are used.

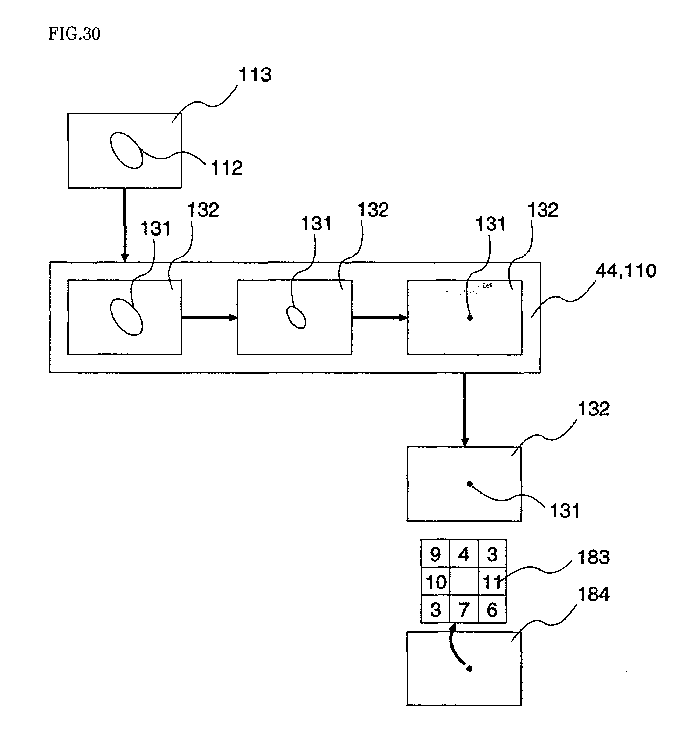

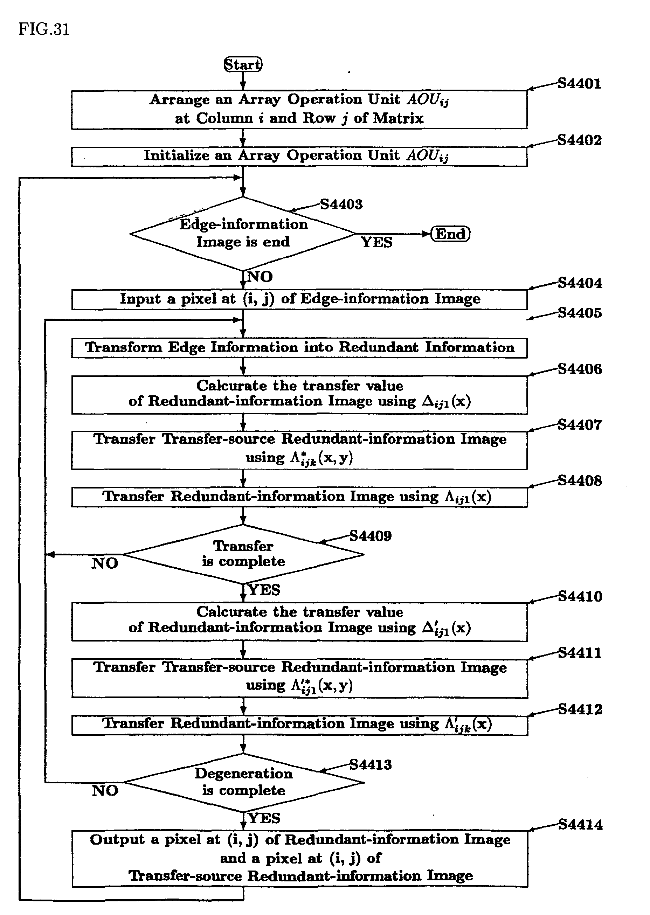

As shown in FIG.30, in order for the position/size/inclination detection means 44 realized by a data processing device 110 to generate a redundant-information image 132 consisting of redundant information 131 from a rough edge-information image 113 consisting of rough edge information 112, array operation units 100 arranged in the shape of a lattice work synchronously in parallel. Let an array operation unit 100 at a column *i* and a row *j* of a matrix be *AOU*_{*ij*}. Algorithm of *AOU*_{*ij*} is shown in FIG.31.

At step 4401, *AOU*_{*ij*} is arranged at the column *i* and the row *j* of the matrix. This is desired to decide neighbors of *AOU*_{*ij*} either logically and physically.

At step 4402, neighbors of *AOU*_{*ij*} are set and its parameters are initialized. In setting the neighbors, the number of neighbors used in the above functions can be defined as either four or eight individually, or all of them can be defined as either four or eight uniformly. In order to make the redundant-information image 132 generated by the data processing device 110 of the present invention more exact, the number of neighbors *q* has to be set a large number for all functions. The position/size/inclination detection means 44, however, can cope with limitation of computational time to calculate gravity of the rough edge information 112 of an object and the size of the input rough edge-information image 113, by varying the number of neighbors suitably.

At step 4403, *AOU*_{*ij*} judges whether there is a rough edge-information image 113 inputted one by one or not. If there is not the rough edge-information image 113 any more (step 4403: YES), this algorithm ends. If there is the rough edge-information image 113 (step 4403: NO), this algorithm goes to step 4404. Note that this algorithm can be an infinite loop when array operation units 100 are realized for a specific size of the image.

At step 4404, *AOU*_{*ij*} inputs the whole pixel on the column *i* and the row *j* of the rough edge-information image 113. Therefore, *AOU*_{*ij*} needs a memory 102 memorizing at least the number of bands of image data.

At step 4405, *AOU*_{*ij*} converts the rough edge information 112 to the rough edge-information image 113. The redundant information 131 becomes a pixel value equivalent to one or zero. Eight transfer-source redundant information 183 are also cleared by a pixel value equivalent to zero.

At step 4406, for each band-pixel value of the redundant-information image 132, *AOU*_{*ij*} calculates a transfer value, according to the function Δ_{*ij*}₁(**x**), by communicating with neighbor array operation units 100. The band-pixel value representing the transfer value is regarded as a band-pixel value of a transfer-value image.

At step 4407, for each band-pixel value of the transfer-source redundant-information image 184, *AOU*_{*ij*} transfers it according to the function Λ$\frac{\text{*}}{\text{ijk}}$(**x**,**y**), by communicating with neighbor array operation units 100. The transferred band-pixel value is regarded as a band-pixel value of a new transfer-source redundant-information image 184.

At step 4408, for each band-pixel value of the redundant-information image 132, *AOU*_{*ij*} transfers it according to the function Λ_{*ij*}₁(**x**), by communicating with neighbor array operation units 100. The transferred band-pixel value is regarded as a band-pixel value of a new redundant-information image 132.

At step 4409, *AOU*_{*ij*} judges whether the transfer times representing the repeat times from step 4406 to step 4408 achieve the directed times or not. If the transfer times do not achieve the directed times (step 4409: NO), this algorithm returns to step 4406. If the transfer times achieve the directed times (step 4409: YES), this algorithm goes to step 4410. Note that the directed times are derived by the size of the rough edge-information image 113, the size of the object represented by the rough edge information 112, and the number of neighbors *q*. In a case that some parameters are set to specific numbers corresponding to the aim of use, there is no problem even though the directed times are set to more than the necessary times. If the directed times are too much, however, *AOU*_{*ij*} takes much time to detect the position and the size of the object.

At step 4410, for each band-pixel value of the redundant-information image 132, *AOU*_{*ij*} calculates a transfer value according to the function Δ$\frac{\text{'}}{\text{ij} \text{1}}$(**x**), by communicating with neighbor array operation units 100. The band-pixel value representing the transfer value is regarded as a band-pixel value of the transfer-value image.

At step 4411, for each band-pixel value of the transfer-source redundant-information image 184, *AOU*_{*ij*} transfers it according to the function Λ$\frac{\text{'*}}{\text{ijk}}$(**x**,**y**), by communicating with neighbor array operation units 100. The transferred band-pixel value is regarded as a band-pixel value of a new redundant-information image 132.

At step 4412, for each band-pixel value of the redundant-information image 132, *AOU*_{*ij*} transfers it according to the function Λ$\frac{\text{'}}{\text{ij} \text{1}}$(**x**), by communicating with neighbor array operation units 100. The transferred band-pixel value is regarded as a band-pixel value of a new redundant-information image 132.

At step 4413, *AOU*_{*ij*} judges whether the degeneration times representing the repeat times from step 4406 to step 4412 achieve the directed times or not. If the degeneration times do not achieve the directed times (step 4413: NO), this algorithm returns to step 4406. If the degeneration times achieve the directed times (step 4413: YES), this algorithm goes to step 4414. Note that the directed times are derived by the size of the rough edge-information image 113, the size of the object represented by the rough edge information 112, and the number of neighbors *q*. In a case that some parameters are set to specific numbers corresponding to the aim of use, there is no problem even though the directed times are set to more than the necessary times. If the directed times are too much, however, *AOU*_{*ij*} takes much time to detect the position and the size of the object.

At step 4414, *AOU*_{*ij*} outputs a band-pixel value of the redundant-information image 132 and *AOU*_{*ij*} outputs a band-pixel value of the redundant-information image 132 and each band-pixel value of the transfer-source redundant-information image 184. This algorithm then returns to step 4403.

Note that each redundant information 131 of the redundant-information image 132 consequently means the size of the object, whose center is a position of the redundant-information image 132, because it means the total number of the rough edge information 112 around the position. Each transfer-source redundant information 183 consequently means the inclination of the object, whose center is a position of the redundant-information image 132, because it means the transfer-source redundant information 183 exists only at the pixel which has the redundant information 131.

The position/size/inclination detection means 44 can generate the redundant-information image 132 and the transfer-source redundant-information image 184 from the rough edge-information image 113, by using the data processing device 110 consisting of array operation units 100.

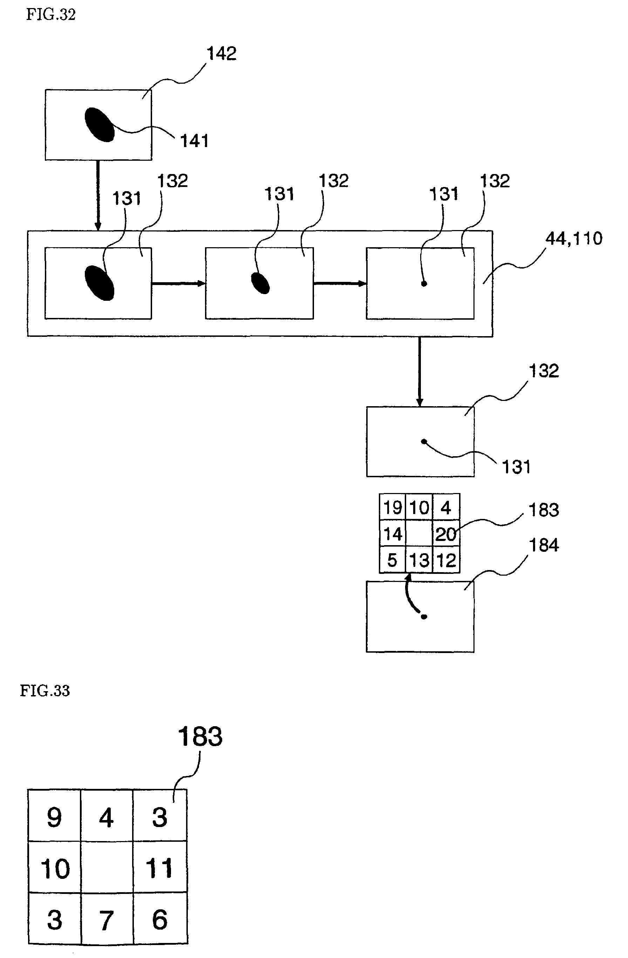

Here, the formed edge-information image 115 consisting of the formed edge information 114 can be used in the algorithm shown in FIG.31, instead of the rough edge-information image 113 consisting of the rough edge information 112. In addition, suppose that an object-area image 142 representing an object area 141 is used, instead of the rough edge-information image 113 consisting of the rough edge information 112. As shown in FIG.32, the position/size/inclination detection means 44 can generate the redundant-information image 132 and the transfer-source redundant-information image 184 even from the object-area image 142 representing the object area 141. In the case that the object-area image 142 is used, however, each redundant information 131 of the redundant-information image 132 consequently means the area of the object, whose center is a position of the redundant-information image 132, because it means the total number of pixels of the object area 141 around the position. When the size of object is derived from the redundant-information image 132, therefore, we must pay attention such as calculating the square root of the redundant information 131. Note that the position/size/inclination detection means 44 also carries out this algorithm similarly, in two cases that a color-information image 172 representing whether there are some specific colors of objects or not, are used instead of the object-area image 142.

It has been described above about a method generating the transfer-source redundant-information image 184 from the rough edge-information image 113, the formed edge-information image 115, the object-area image 142 and the color-information image 172. It is explained here about a method deriving inclination angle of an object from the transfer-source redundant-information image 183.

First, suppose that transfer-source redundant information 183 whose transfer source is either neighbor 1 to neighbor 8 shown in FIG.17 is denoted as *N*1 to *N*8, respectively. For example, the inclination angle θ represented counterclockwisely is derived according to EQ.47, where the inclination angle θ is represented by radian, and the inclination angle θ comes to be 0 radian when the object is horizontal or vertical.

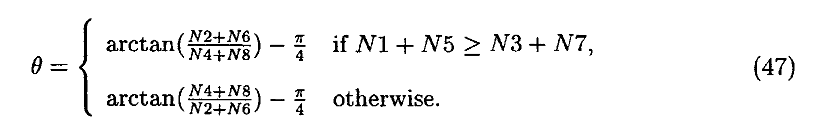

For example, the transfer-source redundant-information 183 whose transfer source is either *N*1 to *N*8 is like FIG.33, the inclination angle θ is about -0.4 radians. Although EQ.47 is an simple equation for deriving the inclination angle θ, of cource, a user of the present invention can derive the inclination angle θ more exact, by performing finer conditioning than EQ.47. As described in claim 8, an array operation unit 100 which calculates EQ.47 can output less amount of data than an array operation unit 100 which outputs eight transfer-source redundant-information 183. Moreover, the memory 102 only has to memorize a look-up table having the necessary number of inclination angles, instead of a table of logarithms, if the inclination angles are expressed with the unit width with a fixed angle.

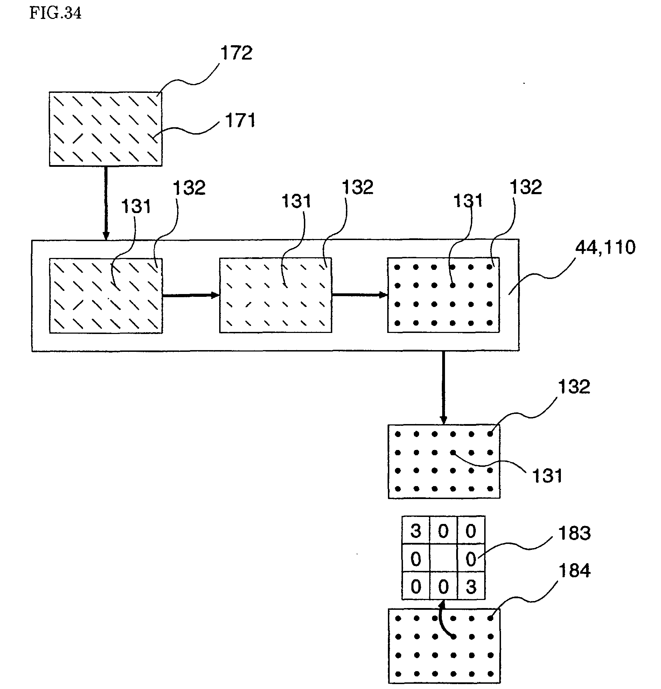

By the way, in FIG.30 and FIG.32, the rough edge-information image 113 including the rough edge information 112 and the object-area image 142 including the object area 141 generated for an object are inputted to the position/size/inclination detection means 44. Of cource, even though there are some objects, the position/size/inclination detection means 44 can detect position, size and inclination of each object. As shown in FIG.34, moreover, even though the color-information image 172 shows texture, the position/size/inclination detection means 44 can detect position, size and inclination from each lump of color information 171. The position/size/inclination detection means 44, therefore, can be used for texture analysis, too.

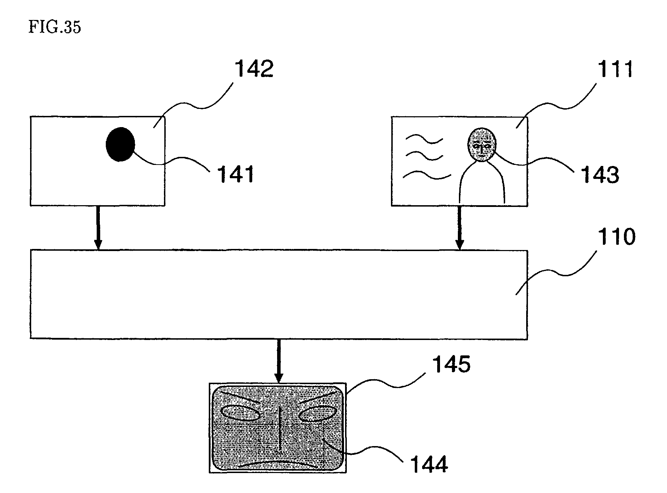

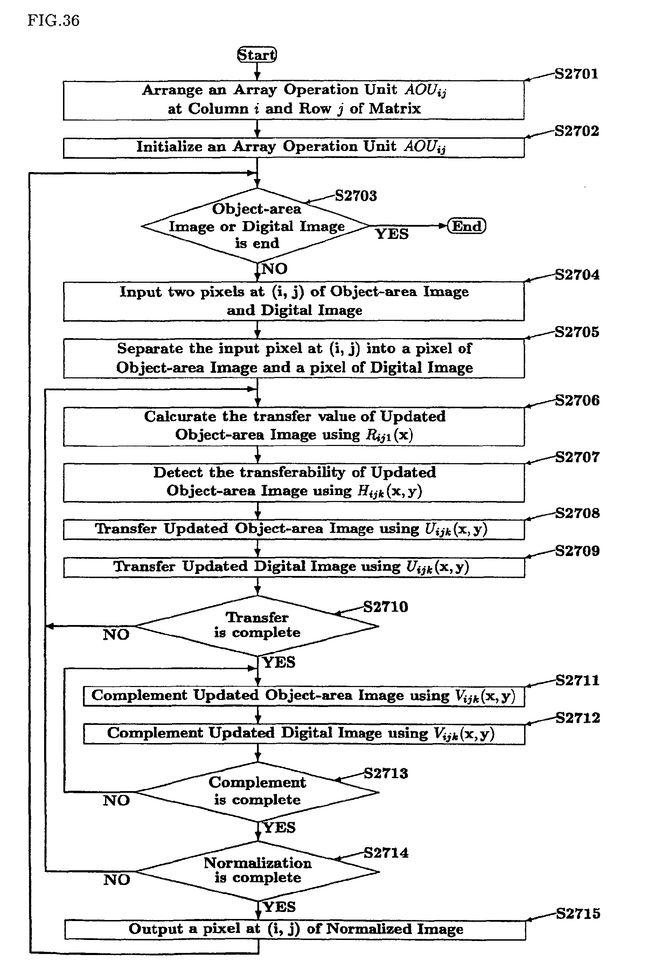

As shown in FIG.35, in order for the area normalization means 27 realized by a data processing device 110 to generate a normalized image 145 including a normalized area 144 from an object-area image 142 including an object area 141 and a digital image 111, array operation units 100 arranged in the shape of a lattice work synchronously in parallel. Let an array operation unit 100 at a column *i* and a row *j* of a matrix be *AOU*_{*ij*}*.* Algorithm of *AOU*_{*ij*} is shown in FIG.36.

At step 2701, *AOU*_{*ij*} is arranged at the column *i* and the row *j* of the matrix. This is desired to decide neighbors of *AOU*_{*ij*} either logically and physically.

At step 2702, neighbors of *AOU*_{*ij*} are set and its parameters are initialized. In setting the neighbors, the number of neighbors used in the above functions can be defined as either four or eight individually, or all of them can be defined as either four or eight uniformly. In order to make the normalized image 145 generated by the area normalization means 27 of the present invention more exact, the number of neighbors *q* has to be set a large number for all functions. The area normalization means 27, however, can cope with limitation of computational time to normalize a segmented object area 143 and the size of the input digital image 111, by varying the number of neighbors suitably.

At step 2703, *AOU*_{*ij*} judges whether there is both an object-area image 142 and a digital image 111 inputted one by one or not. If there is not the object-area image 142 or the digital images 111 any more (step 2703: YES), this algorithm ends. If there is either the object-area image 142 or the digital image 111 (step 2703: NO), this algorithm goes to step 2704. Note that this algorithm can be an infinite loop when array operation units 100 are realized for a specific size of the image.

At step 2704, *AOU*_{*ij*} inputs the whole pixel on the column *i* and the row *j* of the object-area image 142 and the whole pixel on the column *i* and the row *j* of the digital image 111. This is done for *AOU*_{*ij*} to process collectively the pixel on the column *i* and the row *j* of the object-area image 142 and the pixel on the column *i* and the row *j* of the digital image 111. Therefore, *AOU*_{*ij*} needs a memory 102 memorizing at least the number of bands of image data.

At step 2705, *AOU*_{*ij*} separates the pixel on the column *i* and the row *j* of the object-area image 142 and the pixel on the column *i* and the row *j* of the digital image 111. This is done for *AOU*_{*ij*} to process the pixel on the column *i* and the row *j* of the object-area image 142 and the pixel on the column *i* and the row *j* of the digital image 111 as two pixel of independent images, respectively. If the pixel on the column *i* and the row *j* of the object-area image 142 and the pixel on the column *i* and the row *j* of the digital image 111 are beforehand separeted and are then inputted, *AOU*_{*ij*} carries out nothing. The object-area image 142 and the digital image 111 can be copied an updated object-area image and an updated digital image, respectively.

At step 2706, for each band-pixel value of the updated object-area image, *AOU*_{*ij*} calculates a transfer value, according to the function *R*_{*ij*}₁(**x**), by communicating with neighbor array operation units 100. The band-pixel value representing the transfer value is regarded as a band-pixel value of a transfer-value image.

At step 2707, for each band-pixel value of the updated object-area image, *AOU*_{*ij*} can find a transfer-place band-pixel value possible to transfer according to the function *H*_{*ijk*}(**x**,**y**), by communicating with neighbor array operation units 100. The value representing whether the transfer-place band-pixel value is a transfer place possible to transfer or not is regarded as a band-pixel value of a transferable image.

At step 2708, for each band-pixel value of the updated object-area image, *AOU*_{*ij*} transfers it to the transfer place according to the function *U*_{*ijk*}(**x**,y), by communicating with neighbor array operation units 100. The transferred band-pixel value is regarded as a band-pixel value of a new updated object-area image.

At step 2709, for each band-pixel value of the updated digital image, *AOU*_{*ij*} transfers it to the transfer place according to the function *U*_{*ijk*}(**x**,**y**), by communicating with neighbor array operation units 100. The transferred band-pixel value is regarded as a band-pixel value of a new updated digital image.

At step 2710, *AOU*_{*ij*} judges whether the transfer times representing the repeat times from step 2706 to step 2709 achieve the directed times or not. If the transfer times do not achieve the directed times (step 2710: NO), this algorithm returns to step 2706. If the transfer times achieve the directed times (step 2710: YES), this algorithm goes to step 2711. Note that the directed times are derived by the size of the digital image 111, the size of the segmented object area 143 of the digital image 111, and the number of neighbors *q*. In a case that some parameters are set to specific numbers corresponding to the aim of use, there is no problem even though the directed times are set to more than the necessary times. If the directed times are too much, however, *AOU*_{*ij*} takes much time to normalize the images.

At step 2711, for each band-pixel value of the updated object-area image which has been finished transferring, *AOU*_{*ij*} complements it with the average of its neighbors according to the function *V*_{*ijk*}(**x**, **y**), by communicating with neighbor array operation units 100. Note that both **x** and **y** are dealt as the updated object-area image. The complemented band-pixel value is regarded as a band-pixel value of a normalized updated object-area image.

At step 2712, for each band-pixel value of the updated digital image which has been finished transferring, *AOU*_{*ij*} complements it with the average of its neighbors according to the function *V*_{*ijk*}(**x**,**y**), by communicating with neighbor array operation units 100. Note that **x** is dealt as the updated digital image, and **y** is dealt as the updated object-area image. The transferred band-pixel value is regarded as a band-pixel value of a normalized digital image.

At step 2713, *AOU*_{*ij*} judges whether the transfer times representing the complement times from step 2711 to step 2712 achieve the directed times or not. If the complement times do not achieve the directed times (step 2713: NO), this algorithm returns to step 2711. If the complement times achieve the directed times (step 2713: YES), this algorithm goes to step 2714. In general, there is no problem if the complement times are about half of the number of neighbors *q*.

At step 2714, *AOU*_{*ij*} judges whether the remain times representing the repeat times from step 2706 to step 2713 achieve the directed times or not. If the remain times do not achieve the directed times (step 2714: NO), this algorithm returns to step 2706. If the remain times achieve the directed times (step 2714: YES), this algorithm goes to step 2715. Note that the directed times are derived by the size of the digital image 111, the size of the segmented object area 143 of the digital image 111, and the number of neighbors *q*. In a case that some parameters are set to specific numbers corresponding to the aim of use, there is no problem even though the directed times are set to more than the necessary times. If the directed times are too much, however, *AOU*_{*ij*} takes much time to normalize the images.

At step 2715, *AOU*_{*ij*} outputs a band-pixel value of the updated digital image as a band-pixel value of the normalized image 145. This algorithm then returns to step 2703.

The area normalization means 27 can generate the normalized image 145 from the object-area image 142 and the digital image 111, by using the data processing device 110 consisting of array operation units 100.

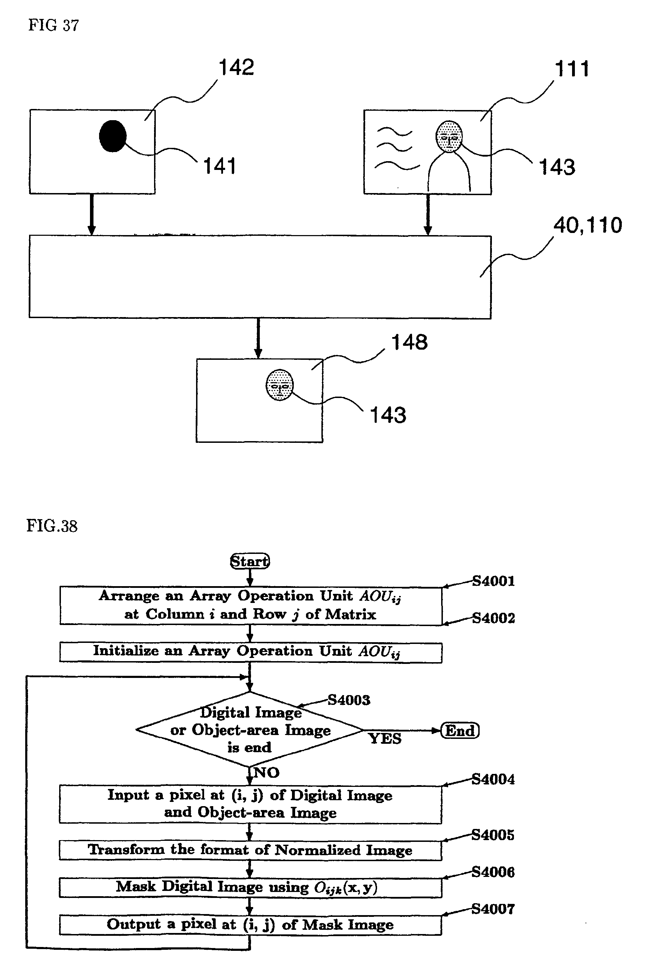

As shown in FIG.37, in order for the mask means 444 realized by a data processing device 110 to generate a masked image 148 from a digital image 111 and an object-area image 142, array operation units 100 arranged in the shape of a lattice work synchronously in parallel. Let an array operation unit 100 at a column *i* and a row *j* of a matrix be *AOU*_{*ij*}*.* Algorithm of *AOU*_{*ij*} is shown in FIG.38.

At step 4001, *AOU*_{*ij*} is arranged at the column *i* and the row *j* of the matrix. This is desired to decide neighbors of *AOU*_{*ij*} either logically and physically.

At step 4002, neighbors of *AOU*_{*ij*} are set and its parameters are initialized.

At step 4003, *AOU*_{*ij*} judges whether there are both a digital image 111 and an object-area image 142 inputted one by one or not. If there is not the digital image 111 or the object-area image 142 any more (step 4003: YES), this algorithm ends. If there is either the digital image 111 or the object-area image 142 (step 4003: NO), this algorithm goes to step 4004. Note that this algorithm can be an infinite loop when array operation units 100 are realized for a specific size of the image.

At step 4004, *AOU*_{*ij*} inputs the whole pixel on the column *i* and the row *j* of the digital image 111 and the whole pixel on the column *i* and the row *j* of the object-area image 142. This is done for *AOU*_{*ij*} to process collectively the pixel on the column *i* and the row *j* of the digital image 111 and the pixel on the column *i* and the row *j* of the object-area image 142. Therefore, *AOU*_{*ij*} needs a memory 102 memorizing at least the number of bands of image data.

At step 4005, for each band-pixel value of the digital image 111, *AOU*_{*ij*} carries out mask processing, according to the function *O*_{*ijk*}(**x**,**y**). The masked band-pixel value is regarded as a band-pixel value of a masked image 148.

At step 4006, *AOU*_{*ij*} outputs the band-pixel value of the masked image 148. This algorithm then returns to step 4003.

The mask means 40 can mask the digital image 111 except a segmented object area 143, by using the data processing device 110 consisting of array operation units 100.

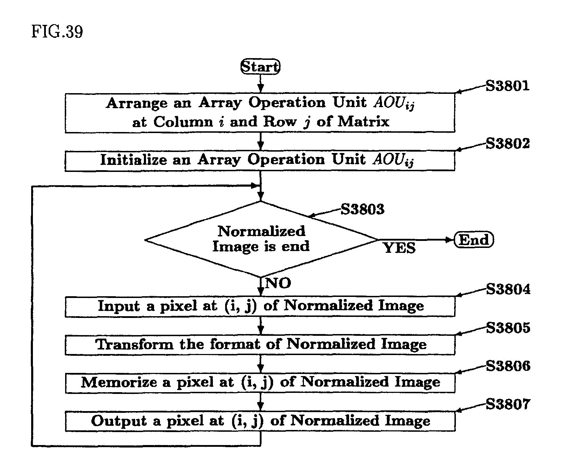

In order for the image keeping means 39 realized by a data processing device 110 to memorize a normalized image 145, array operation units 100 arranged in the shape of a lattice work synchronously in parallel. Let an array operation unit 100 at a column *i* and a row *j* of a matrix be *AOU*_{*ij*}*.* Algorithm of *AOU*_{*ij*} is shown in FIG.39.

At step 3801, *AOU*_{*ij*} is arranged at the column *i* and the row *j* of the matrix. This is desired to decide neighbors of *AOU*_{*ij*} either logically and physically.

At step 3802, neighbors of *AOU*_{*ij*} are set and its parameters are initialized.
At step 3803, *AOU*_{*ij*} judges whether there is a normalized image 145 inputted one by one or not. If there is not the normalized image 145 any more (step 3803: YES), this algorithm ends. If there is the normalized image 145 (step 3803: NO), this algorithm goes to step 3804. Note that this algorithm can be an infinite loop when array operation units 100 are realized for a specific size of the image.

At step 3804, *AOU*_{*ij*} inputs the whole pixel on the column *i* and the row *j* of the normalized image 145. Therefore, *AOU*_{*ij*} needs a memory 102 memorizing at least the number of bands of image data.

At step 3805, *AOU*_{*ij*} changes the format of the normalized image 145 if desired, for a device of an output place. This is useful for the device to generate analog signals easily, especially by converting the normalized image 145 to any one-band image, or converting the more than or equal to 4-band normalized image 145 to any three-band image. Otherwise, *AOU*_{*ij*} does nothing.

At step 3806, *AOU*_{*ij*} memorizes a pixel on the column *i* and the row *j* of the normalized image 145, as it can certainly send image data to the devices of the output place, which has the different computational power from it.

At step 3807, *AOU*_{*ij*} outputs a band-pixel value of the normalized image 145. This algorithm then returns to step 3803.

The image keeping means 39 can output the normalized image 145, by using the data processing device 110 consisting of array operation units 100. Note that the image keeping means 39 which keeps the digital image 111 or the masked image 148 also carries out this algorithms similarly.

Now, the image memorization means 12, the color-information generation means 41, the edge-information generation means 14, the edge-information formation means 15, the position/size detection means 17, the position/size/inclination detection means 44, the area normalization means 27, the mask means 40 and the image keeping means 39 have been described above. Note that they carry out image processing consisting of only neighbor processing after the data processing device 110 inputted one or two image. The pattern matching means 38, however, must use very many images. It is explained here about a method realizing the pattern matching means 38 in the data processing device 110, showing neighbor processing used in the pattern matching means 38.

Suppose first that a normalized image 145 is denoted as **x**, and *n* template images 146 as **y**¹, **y**², , , **y**^{*h*}, , , **y**^{*n*}. For a natural number *g*, a matching result δ_{*ij*}₁ for a pixel on the column *i* and the row *j* of a matching-result image 147 represents number of template image 146 which has the most similar pixel as the pixel of the normalized image 145 after comparing the pixels on the column *i* and the row *j* of the normalized image 145 and the template image 146. Note that the number of bands of the matching-result image 147 is dealt with one for convenience since the matching-result image 147 becomes a one-band image. The third index of function δ_{*ij*}₁ is then equal to one.

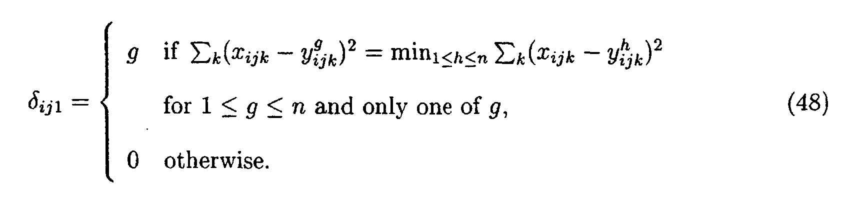

Note that all of the matching result δ_{*ij*}₁ of the matching-result image 147 generated by EQ.48 are not always identified each other. When there are many template images 146, matching-result image 147 rather tends to be like mosaic frequently. It is described here about a method that the data processing device 110 calculates histogram of the matching result δ_{*ij*}₁ and the matching results of *q* neighbors, and converges the matching result δ_{*ij*}₁.

Suppose that any one-band image **x** represents a matching-result image 147. For a natural number *g*, two real number *u*, *v*, a matching-result image 147 is updated by EQ.49 and EQ.50. Note that the number of bands of the matching-result image 147 is dealt with one for convenience since the matching-result image 147 becomes a one-band image. The third index of function Ψ_{*ij*}₁(**x**) is then equal to one.

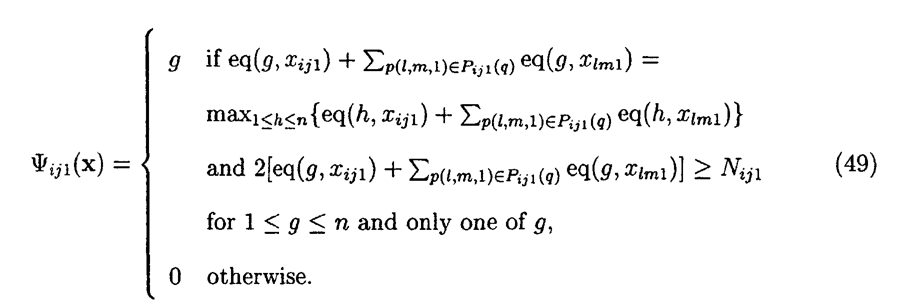

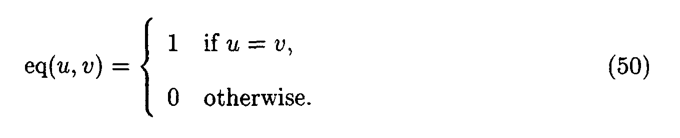

The data processing device 110 can converge all matching results of the matching-result image 147, by computing EQ.49 and EQ.50 repeatedly while the matching-result image 147 changes. Corresponding to the combination of the normalized image 145 and the template image 146, the matching results are converged as follows: If about half pixels of the normalized image 145 are most similar to pixels of a specific template image 146, respectively, almost all matching results of the matching-result image 147 converge to number of this specific template image 146. However, if a lump of some pixels of the normalized image 145 is similar to some lumps of pixels of some different template images 146, the matching-result image 147 includes some lumps of number of some template images 146, which are surrounded by zero. If the normalized image 145, moreover, does not have correlation with the set of template images 146, almost all matching results of the matching-result image 147 becomes zero. It is assumed that it is difficult for pattern matching realized by the data processing device 110 to find the most similar template image 146 to the normalized image 145, but the pattern matching can select some similar template images 146 among all template images 146. The process generating a recognition result from a result of pattern matching only has to select the most similar one among similar candidates of template image 146 listed by the matching-result image 147 generated by the pattern matching.

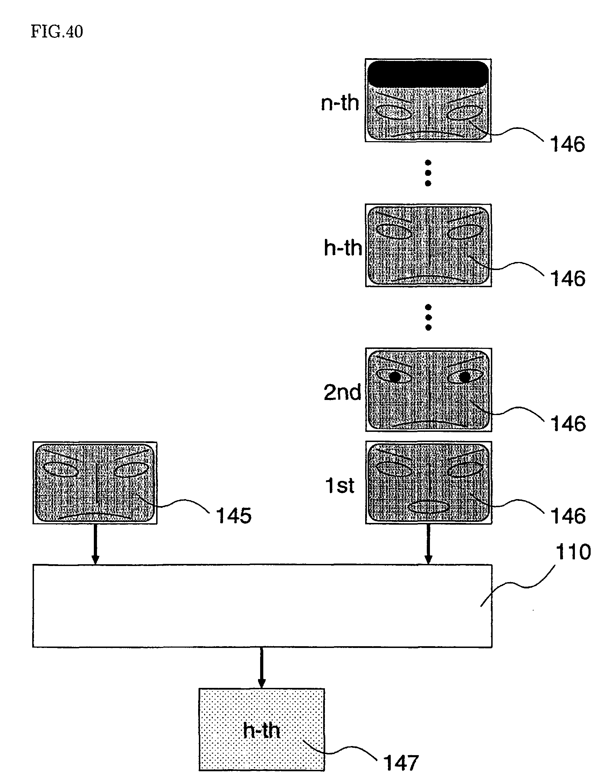

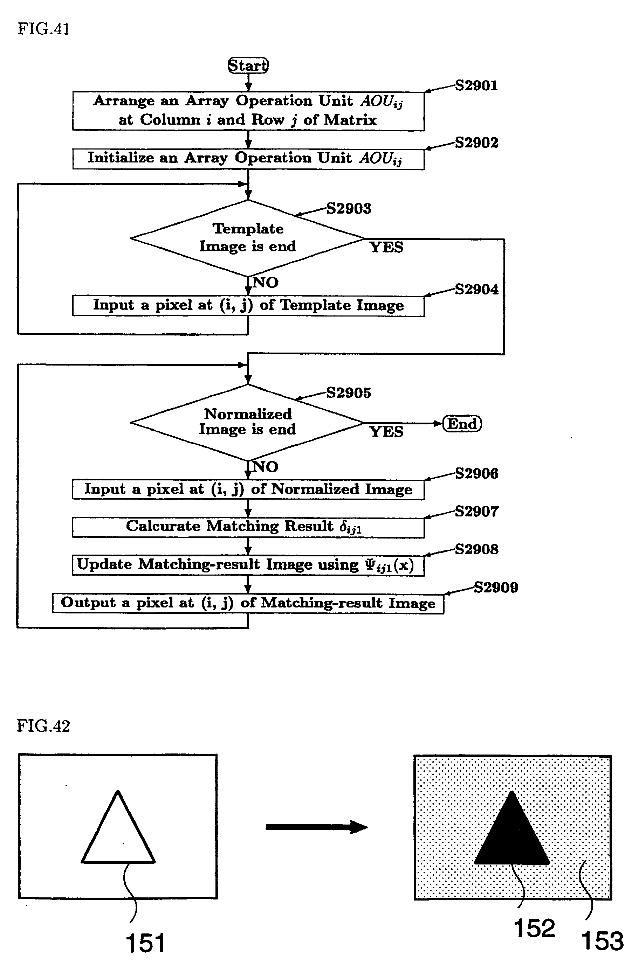

As shown in FIG.40, in order for pattern matching realized by a data processing device 110 to generate a matching-result image 147 consisting of matching results representing number of a template image 146 which is most similar to a normalized image 145, array operation units 100 arranged in the shape of a lattice work synchronously in parallel. Let an array operation unit 100 at a column *i* and a row *j* of a matrix be *AOU*_{*ij*}*.* Algorithm of *AOU*_{*ij*} is shown in FIG.41.

At step 2901, *AOU*_{*ij*} is arranged at the column *i* and the row *j* of the matrix. This is desired to decide neighbors of *AOU*_{*ij*} either logically and physically.

At step 2902, neighbors of *AOU*_{*ij*} are set and its parameters are initialized. In setting the neighbors, the number of neighbors *q* used in the above functions can be defined individually, or all of them can be defined uniformly. In order to make the matching-result image 147 generated by data processing device 110 of the present invention more exact, the number of neighbors *q* has to be set a large number for all functions. The pattern matching, however, can cope with limitation of computational time to update the matching results and the size of the input normalized image 145, by varying the number of neighbors suitably.

At step 2903, *AOU*_{*ij*} judges whether there is a template image 146 inputted one by one or not. If there is not the template images 146 any more (step 2903: YES), this algorithm goes to step 2905. If there is the template image 146 (step 2903: NO), this algorithm goes to step 2904.

At step 2904, *AOU*_{*ij*} inputs the whole pixel on the column *i* and the row *j* of the template image 146. Therefore, *AOU*_{*ij*} needs a memory 102 memorizing image data whose number is equal to at least the number of bands by the number of template image 146. This algorithm then returns to step 2903.

At step 2905, *AOU*_{*ij*} judges whether there is a normalized image 145 inputted one by one or not. If there is not the normalized images 145 any more (step 2905: YES), this algorithm ends. If there is the normalized image 145 (step 2905: NO), this algorithm goes to step 2906. Note that this algorithm can be an infinite loop when array operation units 100 are realized for a specific size of the image.

At step 2906, *AOU*_{*ij*} inputs the whole pixel on the column *i* and the row *j* of the normalized image 145. Therefore, *AOU*_{*ij*} needs a memory 102 memorizing at least the number of bands of image data.

At step 2907, *AOU*_{*ij*} computes the matching result δ_{*ij*}₁ of the matching-result image 147 by the normalized image 145 and the template image 146. The matching result is a band-pixel value representing number of the most similar template image 146 to the normalized image 145.

At step 2908, for each band-pixel value of the matching-result image 147, *AOU*_{*ij*} updates the matching result according to the function Ψ_{*ij*}₁(**x**), by communicating with neighbor array operation units 100. The updated band-pixel value is regarded as a band-pixel value of a matching-result image again. The function Ψ_{*ij*}₁(**x**) is repeated by nature until the band-pixel value of the matching-result image 147 stops changing. However, it is better for *AOU*_{*ij*} to close this update processing in some specific repeat times, corresponding to limitation of computational time, quality of the input normalized image 145, quality desired for the matching-result image 147.

At step 2909, *AOU*_{*ij*} outputs a band-pixel value of the matching-result image 147. This algorithm then returns to step 2905.

Pattern matching in the image recognition means 29 can generate the matching-result image 147 from the normalized image 145, by using the data processing device 110 consisting of array operation units 100.

I have described about methods carrying out image processing which uses only neighbor processing, using a data processing device 110 consisting of array operation units 100. It is explained here about the figure/ground separation means 16 by only neighbor processing, using a data processing device 110 consisting of array operation units 100.

First, nonlinear oscillators generally presents attraction phenomenon. This attraction phenomenon is the phenomenon limited as some nonlinear oscillators representing different cycles vibrate in cycles, which shows a simple constant ration, by interaction. When oscillation of one nonlinear oscillator is changed, other nonlinear oscillators change their oscillation together. These nonlinear oscillators, therefore, are synchronizing. In addition, the adjusted interaction among the nonlinear oscillators can causes making the difference of phases of any two oscillators as small and big as possible. Controlling the interaction, a group of nonlinear oscillators can be diviced into some groups whose oscillators represent different phases. The figure/ground separation means 16 separates objects and background by using such attraction of oscillators, as edge information of an edge-information image becomes the border, and then generates an object-area image 142 representing an object area 141. A case that a van der Pole oscillator is used for the nonlinear oscillator is described here.

First, in a nonlinear oscillator network consisting of nonlinear oscillators arranged in the shape of a lattice, let a nonlinear oscillator on the column *i* and the row *j* be ω_{*ij*}. A set Ω_{*ij*}(*q*) of *q* neighbors of the nonlinear oscillator *ω*_{*ij*} is represented by EQ.51, where *q* is a progression of 4, 8, 24, 48, 80, 120, (2*r* + 1)² - 1, and *r* is a natural number. When a nonlinear oscillator outside of the network is included in the neighbor set Ω_{*ij*}(*q*), it is superseded by the nonlinear oscillator *ω*_{*ij*}. Processing around the border is automatically carried out by this replacement. Then, the number of elements of the neighbor set Ω_{*ij*}(*q*) is always *q*. As this showing, the nonlinear oscillator network is regarded as a one-band image. In order to describe simply, there are only two indexes of the nonlinear oscillator network, which represent horizontal axis and vertical axis.

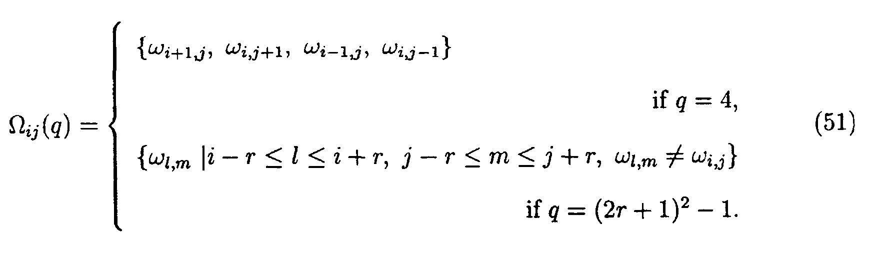

Next, the nonlinear oscillator is connected by a link value τ_{*ijkl*} calculated by EQ.52 between it and one of nonlinear oscillators in a neighbor set Ω_{*ij*}(*q*_{*a*}), which is included within its *q*_{*a*} neighbors. If you do not use table of logarithms, it is also possible to use approximation by EQ.53. Note that µ and ν are positive constants.${\text{τ}}_{\text{ijkl}} \text{= µ sinc(} \frac{\text{(} \text{i} \text{-} \text{k} {\text{)}}^{\text{2}} \text{+ (} \text{j} \text{-} \text{l} {\text{)}}^{\text{2}}}{{\text{ν}}^{\text{2}}} {\text{) for ∀ω}}_{\text{kl}} {\text{∈ Ω}}_{\text{ij}} \text{(} {\text{q}}_{\text{a}} \text{)}$

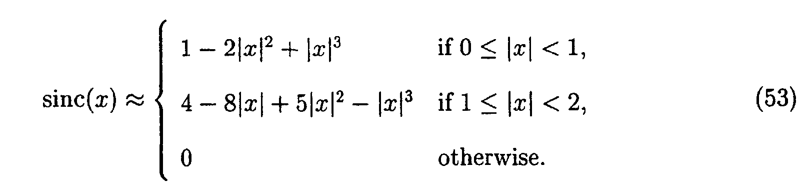

In a case that all nonlinear oscillators of a nonlinear oscillator network synchronize with the same phase completely, a nonlinear oscillator *ω*_{*ij*} remains oscillating with the same phase parmanently as long as a processor calculates the oscillation. This situation can be avoided if an external noise *ρ*_{*ij*} is given to the network. Although a pseudo-random number can be used for the external noise, there is no problem even though the external noise is made from such simple equation as EQ.54. Note that *ζ*_{*ij*} represents whether there is edge information on the column *i* and the row *j* of an edge-information image or not. If there is edge information, it is equal to one. Otherwise, it is equal to zero. In addition, κ is a positive constant.${\text{ρ}}_{\text{ij}} \text{=} {\text{κζ}}_{\text{ij}}$

In order for a nonlinear oscillator *ω*_{*ij*} to synchronize with a nonlinear oscillator *ω*_{*kl*} of a neighbor set Ω_{*ij*}(*q*_{*a*}), a neighbor input summation *σ*_{*ij*} is calculated by EQ.55.

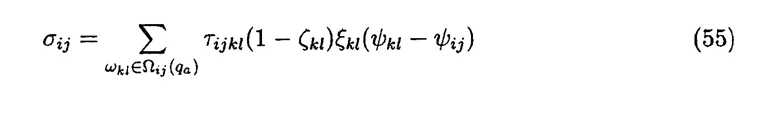

Two parameters *φ*_{*ij*} and *ψ*_{*ij*} constituting a van der Pole nonlinear oscillator *ω*_{*ij*} are calculated by EQ.56 and EQ.57. Note that γ and ∈ are positive constants.$\frac{\text{d} {\text{φ}}_{\text{ij}}}{\text{dt}} {\text{= ψ}}_{\text{ij}}$$\frac{\text{d} {\text{ψ}}_{\text{ij}}}{\text{dt}} {\text{= -γφ}}_{\text{ij}} \text{-} \text{∈} \text{(1 -} {\text{φ}}_{\text{ij}}^{\text{2}} \text{)} {\text{ψ}}_{\text{ij}} {\text{+ σ}}_{\text{ij}} {\text{+ ρ}}_{\text{ij}}$

The defference of phases between any two of all nonlinear oscillators must be calculated in order to separate nonlinear oscillators in an object area 141 from nonlinear oscillators in a background area. However, the phase gap is derived from judging whether a parameter *ψ*_{*ij*} is more than or equal to threshold value θ, or less than the value, because the present invention only has to separate the object area 141 from the background area. An output *λ*_{*ij*} representing a result of separating the object area from the background area is derived by EQ.58. Note that θ is a positive constant.

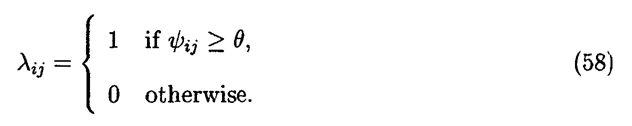

If edge information is not enough to separate an object from background, the edge information must be complemented. It is desired for the complement to count how many nonlinear oscillators shift their phases among a set *Ω*_{*ij*}(*q*_{*b*}) of nonlinear oscillators within *q*_{*b*} neighbors of a nonlinear oscillator ω_{*ij*}. A contour parameter η_{*ij*} is computed by EQ.59.

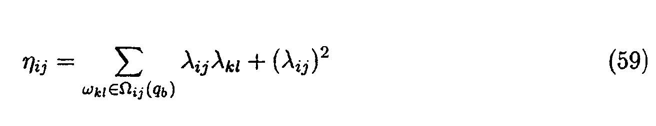

Based on this result, a border parameter ξ_{*ij*}, which represents a complemental rate for edge information, is computed by EQ.60. Note that α, β, η_{*min*} and *η*_{*max*} are positive constants.

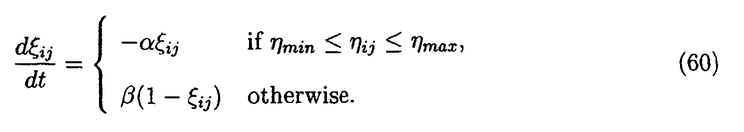

Although it has been explained about the case of using van der Pole for a nonlinear oscillator, this separation can be carried out by any nonlinear oscillator presenting attraction phenomenon such as nonlinear oscillators like a blasselator and an integrated-and-fire type of oscillator stabilized in a limit cycle, and chaos oscillators generating Lorentz Attractor and attractor of Ressler Equation, and so on. In this case, two parameters *φ*_{*ij*} and *ψ*_{*ji*} only have to be superseded by parameters of each nonlinear oscillator, or some parameters are only appended to van der Pole. In addition, we only have to add a neighbor input summation *σ*_{*ij*} and an external noise *ρ*_{*ij*} to a certain parameter. Note that a chaos oscillator does not need the external noise *ρ*_{*ij*} especially.

Algorithm of all array operation units 100 in a data processing device 110 which can realize the figure/ground separation means 16 can be described by EQ.51 to EQ.60. It is explained here about the figure/ground separation means 16, using the algorithm of any array operation unit 100 in the data processing device 110.

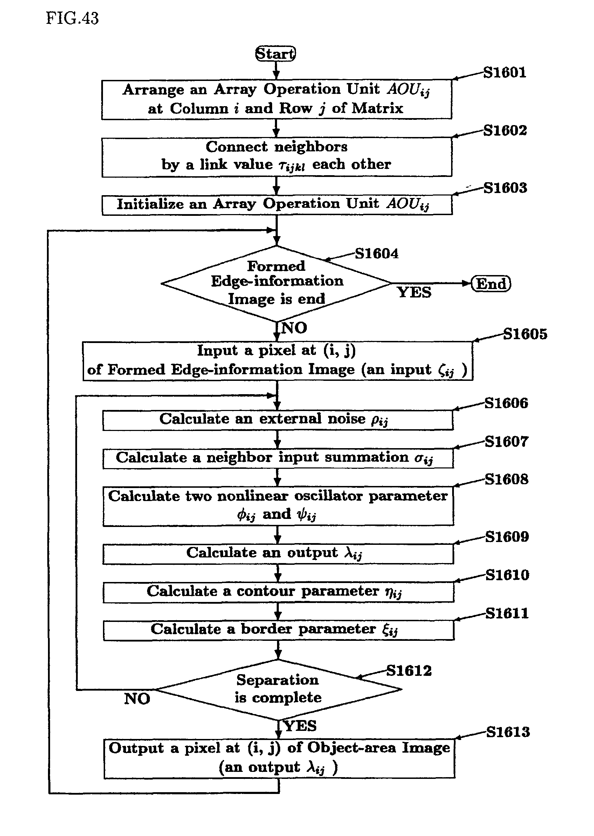

As shown in FIG.42, in order for the figure/ground separation means 16 realized by a data processing device 110 to separate an inside area of triangle 152 from an outside area of triangle 153, by using formed triangular edge information 151, array operation units 100 arranged in the shape of a lattice work synchronously in parallel. Let an array operation unit 100 at a column *i* and a row *j* of a matrix be *AOU*_{*ij*}. Algorithm of *AOU*_{*ij*} is shown in FIG.43.

At step 1601, *AOU*_{*ij*} is arranged at the column *i* and the row *j* of the matrix.

At step 1602, two neighbors *ω*_{*ij*} and *ω*_{*kl*} are connected by a link value τ_{*ijkl*} each other, based on EQ.52 and EQ.53.

At step 1603, two parameters of the nonlinear oscillator, *φ*_{*ij*} and *ψ*_{*ij*}, are initialized by certain values.

At step 1604, *AOU*_{*ij*} judges whether there is a formed edge-information image 115 inputted one by one or not. If there is not the formed edge-information image 115 any more (step 1604: YES), this algorithm ends. If there is the formed edge-information image 115 (step 1604: NO), this algorithm goes to step 1605. Note that this algorithm can be an infinite loop when array operation units 100 are realized for a specific number of bands and a specific size of the image.

At step 1605, *AOU*_{*ij*} inputs *ζ*_{*ij*} of formed edge information 114.

At step 1606, *AOU*_{*ij*} derives an external noise *ρ*_{*ij*} from ζ_{*ij*} of the previously input formed edge information 114, according to EQ.54.

At step 1607, *AOU*_{*ij*} inputs *ζ*_{*kl*}, *ξ*_{*kl*}, *ψ*_{*kl*} from an array operation unit 100 *AOU*_{*kl*} which has a nonlinear oscillator *ω*_{*kl*} in a neighbor set Ω_{*ij*}(*q*_{*a*}), and calculates a summation *σ*_{*ij*} according to EQ.55.

At step 1608, two parameters of the nonlinear oscillator, *φ*_{*ij*} and *ψ*_{*ij*} are calculated by EQ.56 and EQ.57. In short, differential equations described by these equations are solved in Ruge-Kutta method.

At step 1609, an output of the nonlinear oscillator λ_{*ij*} is computed according to EQ.58. *λ*_{*ij*} = 1 if *ψ*_{*ij*} ≥ θ. Otherwise, *λ*_{*ij*} = 0.

At step 1610, *AOU*_{*ij*} inputs *λ*_{*kl*} from an array operation unit 100 *AOU*_{*kl*} which has a nonlinear oscillator *ω*_{*kl*} in a neighbor set Ω_{*ij*}(*q*_{*b*}), and calculates a contour parameter *η*_{*ij*} according to EQ.59.

At step 1611, a border parameter ξ_{*ij*} are calculated by EQ.60. In short, a differential equation described by this equation is solved in finite difference method or Ruge-Kutta method.

At step 1612, *AOU*_{*ij*} judges whether the separation times representing the repeat times from step 1606 to step 1611 achieve the directed times or not. If the separation times do not achieve the directed times (step 1612: NO), this algorithm returns to step 1606. If the separation times achieve the directed times (step 1614: YES), this algorithm goes to step 1613.

At step 1613, *AOU*_{*ij*} outputs the output of the nonlinear oscillator λ_{*ij*}, which is a band-pixel value of the object-area image 142. This algorithm then returns to step 1604.

In order to derive the separation time at step 1612, we can use the following method: In the case that almost any formed edge information 114, whose size is constant, is used, the figure/ground separation means 16 finishes the separation within a certain period, in spite of initial state of nonlinear oscillators. Therefore, there is no problem if the repeat times from step 1606 to step 1611 in the period are counted beforehand. Because time which nonlinear oscillators take to synchronize by attraction phenomenon does not almost vary when their initial states are within the fixed limits.

Although only nonlinear oscillators are computed, as described above, the reason why the figure/ground separation means 16 can separate the inside area of triangle 152 from the outside area of triangle 153 by using the formed triangular edge information 151 is to use attraction phenomenon which is character of a nonlinear oscillator. In short, phases of two nonlinear oscillators comes to be as same as possible if the nonlinear oscillators are connected by a positive link value. On the other hand, the difference of their phases comes to be as large as possible if they are connected by a negative link value. In a case of using this character, both of two nonlinear oscillators not connecting directly come to have the same phase, by connecting nonlinear oscillators arranged in the shape of a lattice with neighbors by positive link values one another. Suppose, furthermore, that two nonlinear oscillators lying at pixels, between which formed edge information 114 is put, are connected by a negative link value each to each. The oscillators at both sides of the edge information shift their phases as differently as possible each to each. Because of this, two different phase sets can be present at an inside domain and an outside domain divided by triangular edge information 151. The figure/ground separation means 16, therefore, separates an inside area of triangle 152 and an outside area of triangle 153 shown in FIG.42. Note that the difference of phases of the inside area of triangle 152 and the outside area of triangle 153 is as close to 180 degrees as possible beyond 90 degrees, and then a triangle area and a background area can be separated.

It is important here that a link value is changed on appearance in the following way in this enforcement form, once formed edge information 114 is got. As defined in EQ.52 and EQ.53, first, a link value for connecting a nonlinear oscillator *ω*_{*kl*} to a nonlinear oscillator *ω*_{*ij*} is set to τ_{*ijkl*} (refer to step 1602). For both formed edge information 114 *ζ*_{*ij*} and ζ_{*kl*}, the formed edge information 114 is set to one if there is an edge. Otherwise, it is set to zero. If the formed edge information 114 *ζ*_{*ij*} and *ζ*_{*kl*} is inputted (refer to step 1605), the formed edge information 114 *ζ*_{*kl*} is transmitted from an array operation unit 100 *AOU*_{*kl*} to *AOU*_{*ij*}. Moreover, *AOU*_{*ij*} calculates a link value τ_{*ijkl*}(1 *- ζ*_{*kl*}), and substitutes it for a link value τ_{*ijkl*} (refer to step 1607). For this substituted link value τ_{*ijkl*}(1 *- ζ*_{*kl*}), a border parameter ξ_{*ij*} acts as the magnification between zero and one (refer to step 1607).

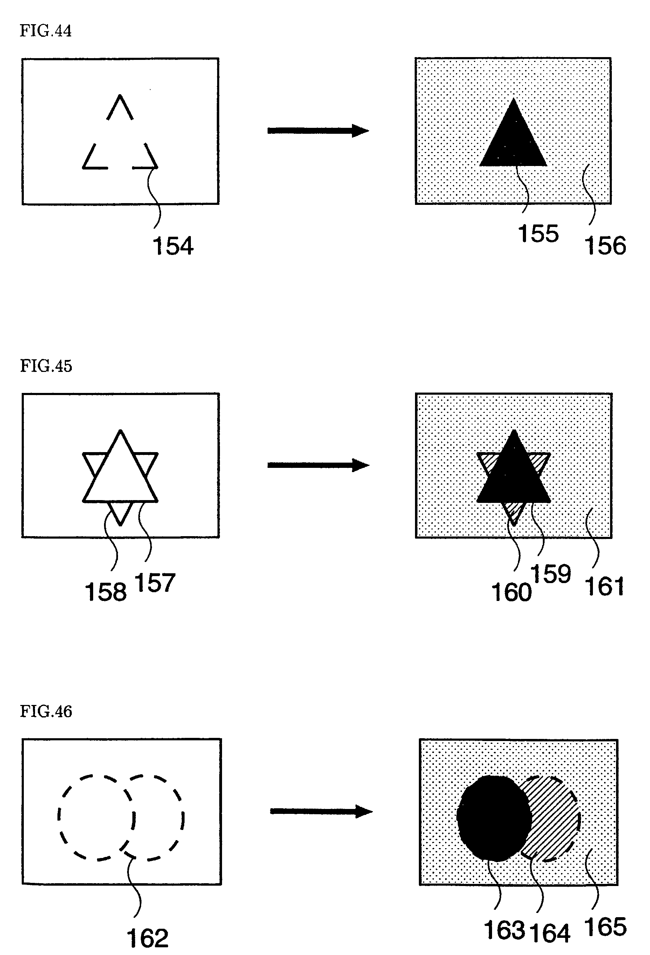

As shown in FIG.44, when formed edge information 114 becomes dashed triangular edge information 154, a dushed line has to be complemented. Suppose first that a system works, using the dashed triangular edge information 154 (refer to step 1605). Although the difference of phases between an inside area and an outside area devided by dashed triangular edge information 154 comes to be beyond about 90 degrees, an domain around the border of the inside and outside areas of the triangle is not clear. Each *AOU*_{*ij*} calculates an output of its nonlinear oscillator *λ*_{*ij*} (refer to step 1609). Suppose that this output *λ*_{*ij*} is equal to one. When a nonlinear oscillator, whose *λ*_{*kl*} is equal to one, among neighbor nonlinear oscillators is *ω*_{*kl*}, both two parameters *ψ*_{*ij*} and *ψ*_{*kl*} are more than or equal to θ. In short, phases of *λ*_{*ij*} and *λ*_{*kl*} are almost same, and the difference of phases is not beyond at most 90 degrees if θ is positive. The maximum value of this difference of phases is decided by θ. The bigger θ becomes, within a range where both *λ*_{*ij*} and *λ*_{*kl*} are equal to one, the closer to zero degree the difference of phases becomes. By using *λ*_{*ij*} and *λ*_{*kl*}, then, a contour parameter *η*_{*ij*} representing the number of neighbor nonlinear oscillators whose phases are almost same are computed by EQ.59 (refer to step 1610). Moreover, a border parameter *ξ*_{*ij*} which is the magnification of a link value is decreased according to EQ.60 if this contour parameter *η*_{*ij*} is about half of all neighbors. Otherwise, the border parameter is increased according to EQ.60 (refer to step 1611). For an example of eight neighbors, the border parameter can be decreased according to EQ.60 if the contour parameter lies between three and five. By remaining carrying out this process repeatedly, an inside area of dashed triangle 155 and an outside area of dashed triangle 156 are separated when the dashed triangular edge information 154 shown in FIG.44 is given.

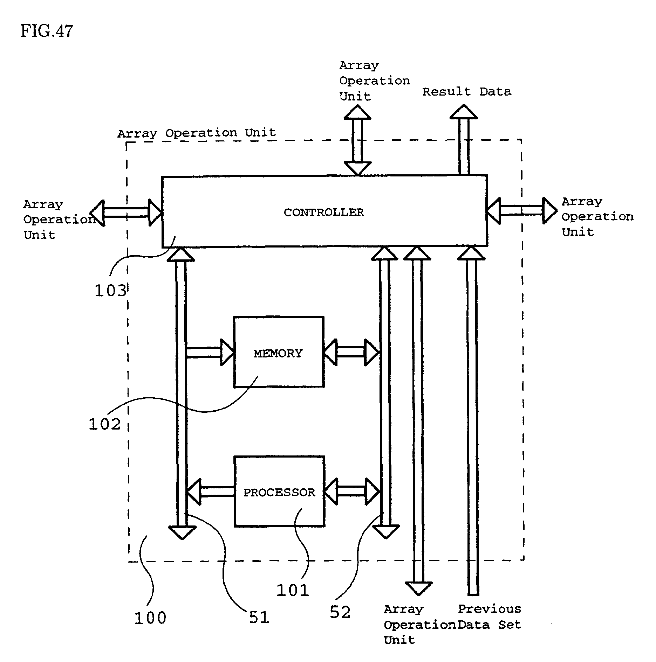

As shown in FIG.45, edge information of front triangle 157 and edge information of rear triangle 158 can be derived when two triangles are stacked. Three areas, an inside area of front triangle 159, an inside area of rear triangle 160 and a ground area of double triangle 161 are separated by shifting phases of nonlinear oscillators in the areas one another. As shown in FIG.46, in addition, an inside area of front circle 163, an inside area of rear circle 164 and a ground area of overlapping circles 165 are separated even though edge information of overlapping circles 162 makes a dashed lined.

The figure/ground separation means 16 can separate some object areas 141 from a background area, whose borders are represented by formed edge information 114 of a formed edge-information image 115, by using the data processing device 110 consisting of array operation units 100. Note that some separated areas are taken out via an output *λ*_{*ij*} in order with progress of time, but an array operation unit 100 can also output these separated areas as some phase groups all at once, by calculating phases of nonlinear oscillators.

It has been explained above about the visual devices 2. Of course, these visual devices 2 can be implemented by general computers. When some moving objects must be counted, however, each of the above means has to be carried out quickly, corresponding to velocity of the moving objects. Especially, when the size of a frame image becomes big or its resolution becomes high, computational complexity increases, being proportional to the size of image or its resolution for each of horizontal axis and vertical axis, in the image memorization means 12, the color-information generation means 41, the edge-information generation means 14, the edge-information formation means 15, the position/size detection means 17, the figure/ground separation means 16, the area normalization means 27, the mask means 40, the image keeping means 39 and the pattern matching means 38, which must process their images themselves. Therefore, the visual devices 2 may not be able to achieve desired performance, in a specific use.

In order to realize the image memorization means 12, the color-information generation means 41, the edge-information generation means 14, the edge-information formation means 15, the position/size detection means 17, the figure/ground separation means 16, the area normalization means 27, the mask means 40, the image keeping means 39 and the pattern matching means 38 by using digital technology, some array operation units 100 are arranged in the shape of a lattice in a data processing device 110, as shown in FIG.16, and then the array operation units 100 are wired as they can communicate with some adjoining array operation units 100 in the data processing device 110 one another. In short, any two of four neighbors are wired directly each other. This case uses less electronic parts and wired volumes than a case that any two of eight neighbors are wired. The former also run with the almost same speed as the latter. In addition, the former can have more extendibility than the latter, even though the number of neighbors will be extended in future.

As shown in FIG.47, an array operation unit 100 consists of a processor 101 for computing equations of image processing, a memory 102 for memorizing all parameters, constant values, functions and operators used in the equations, a controller 103 for communicating with neighbor array operation units 100. The processor 101 can select any memory elements and registers in the memory 102 and the controller 103, by an address directed by address bus 51. The processor 101 is also connected bidirectionally with the memory 102 and the controller 103 via data bus 52, and can access to data in any memory elements and registers directed by address bus 51. Once the array operation unit 100 inputs a front input data set consisting of one or more input pixels, the controller 103 memorizes the front input data set in the memory 102. The controller 103 makes the memory 102 to memorize computational data received from some adjoining array operation units 100, and moreover it transmits the data to other adjoining array operation units 100, from which it does not input the data, if neccesary, while the controller 103 sends computational data, which are generated by the functions, in the memory 102 to some adjoining array operation units 100. Finally, the controller 103 outputs image data of output images as result data.

The reasons why each array operation unit 100 has the controller 103 as described above are the followings: First, the processor 101 can compute during waiting communication, that is, it can realize fast processing because the processor 101 can work while the array operation units 100 are communicating with one another. Second, a hardware of the array operation unit 100 does not have to be changed, even though the number of its neighbor array operation units 100 varies. Third, a program of the processor 101 does not have to carry out border processing of image, that is, exception handling for border pixels in the image and then becomes extremely simple, since the controller 103 can carry out border processing automatically.

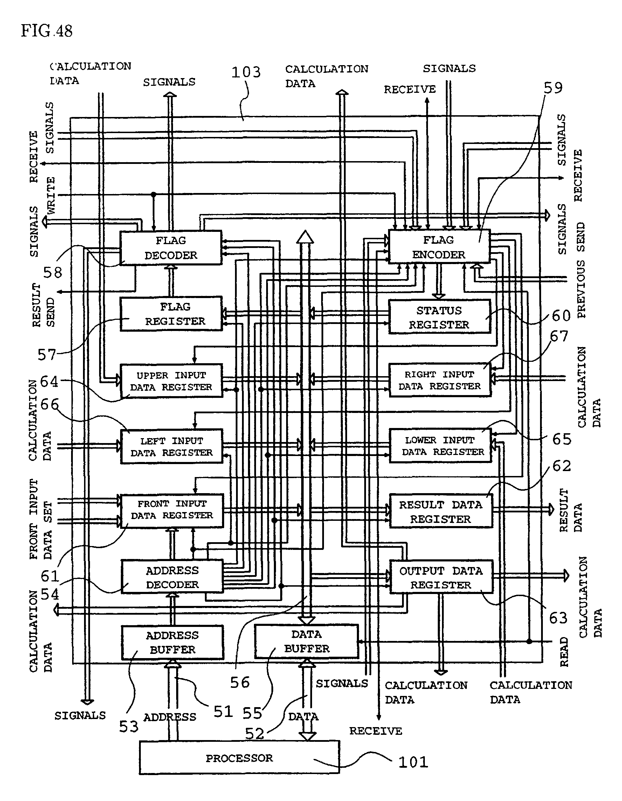

The processor 101 and the memory 102 can be made by general digital circuits. A circuit diagram of the controller 103 is shown in FIG.48. After an address buffer 53 receives address from the processor 101 via address bus 51, an address decoder 54 selects one of registers and other functional blocks. After a data buffer 55 receives data from the processor 101 via data bus 52, it exclusively communicates with a register selected by the address decoder 54 via internal data bus 56, where the direction of communication is directed by READ. When address directs a flag register 57, data are memorized in the flag register 57, is decoded by a flag decoder 58, and then is sent to some adjoining array operation units 100 for SIGNALS. After the SIGNALS are received and analyzed by a flag encoder 59, RECEIVE, which are derived from the SIGNALS, are replied to the array operation units 100 which are senders of the SIGNALS, while they are memorized in a status register 60. The RECEIVE is received by the flag encoder 59, which is a sender of the SIGNALS. As a result, it is checked that transmitting of the SIGNALS has completed. Once the status register 60 is selected by address, contents of the status register 60 are sent to the processor 101 via data bus 52, regarding them as data. After the flag encoder 59 is received one or more FRONT INPUT SENDs, corresponding to one or more input images, respectively, front input data sets made from one or more input images are read to a front input data register 61, which prepares a memory area necessary to memorize the sets. After the front input data register 61 is selected by address, contents of the front input data register 61 are sent to the processor 101, regarding them as data. Once the processor 101 has computed image data of an output image, a result data register 62 is selected by address, and then reads them from the processor 101, regarding them as result data. At this time, the flag encoder 59 sends RESULT SEND.

If data necessary to compute are desired by a neighbor array operation unit 100, address of an output data register 63 is selected, the output data register 63 reads data to send to the neighbor array operation unit 100, regarding them as calculation data. The calculation data are then send to all neighbor array operation units 100. Suppose that SIGNALS are received from an upper array operation unit 100. An upper input data register 64 reads calculation data. After the upper input data register 64 is selected by address, contents of the upper input data register 64 are sent as calculation data. Even though SIGNALS are received from either an lower, left or right array operation unit 100, it can work similarly, that is, a lower input data register 65, a left input data register 66, and a right input data register 67 work as well as the upper input data register 64 does.

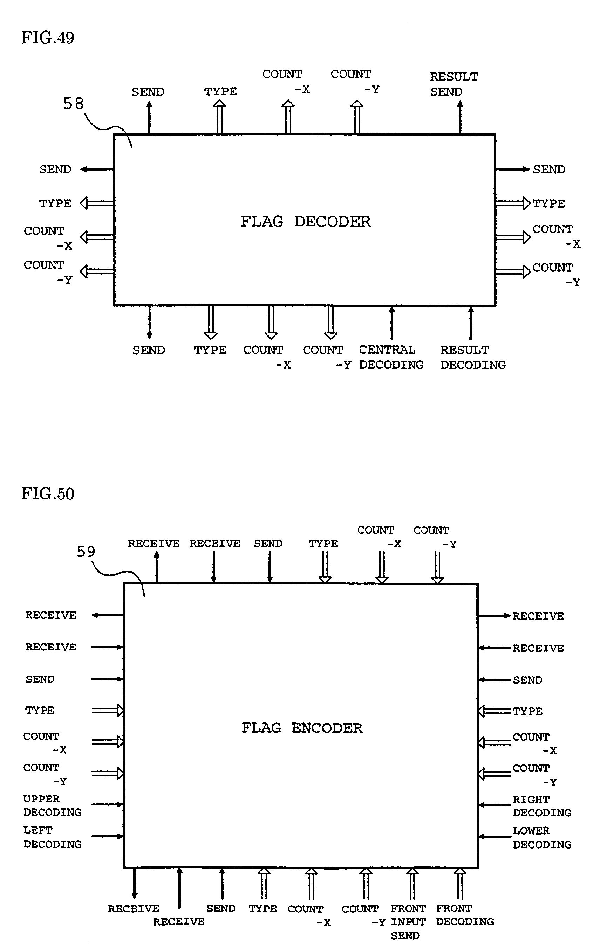

Each block such as some buffers, some registers and the address decoder 54 is a general digital circuit. The flag decoder 58 and the flag encoder 59 have input and output signals, as shown concretely in FIG.49 and FIG.50. TYPE represents some kinds of contents read by the output data register 63 in a six-bit signal. The number of bits of this signal is enough for an array operation unit 100 to distinguish all calculation data due to send and receive. COUNT-X and COUNT-Y denote four-bit unsigned integer, respectively, and represent transmitting times between array operation units 100. In a case that the array operation unit 100 sends calculation data, both the COUNT-X and the COUNT-Y are set to zero. In a case that the array operation unit 100 sends again calculation data sent from either left or right array operation unit 100, the COUNT-X becomes COUNT-X of a flag encoder 59 of the sender plus one. In a case that the array operation unit 100 sends again calculation data sent from either upper or lower array operation unit 100, the COUNT-Y becomes COUNT-Y of a flag encoder 59 of the sender plus one. Suppose that the flag decoder 58 receives CENTRAL DECODING of the address decoder 54, which specified the output data register 63, after the processor 101 specified SEND FLAG of the flag register 57 some of upper, lower, left and right array operation units 100, to which contents of the output data register 63 are sent. The flag decoder 58 outputs SEND to the specified directions in the SEND FLAG. The SEND FLAG denotes a four-bit signal. When calculation data of the array operation unit 100 are sent to four neighbor array operation units 100, the processor 101 set the SEND FLAG to 1111. When calculation data sent from the right array operation unit 100 are sent to the upper, lower and left array operation units 100, the processor 101 set the SEND FLAG to 1110. When calculation data sent from the left array operation unit 100 are sent to the upper, lower and right array operation units 100, the processor 101 set the SEND FLAG to 1101. When calculation data sent from the lower array operation unit 100 are sent to the upper array operation unit 100, the processor 101 set the SEND FLAG to 1000. When calculation data sent from the upper array operation unit 100 are sent to the lower array operation unit 100, the processor 101 set the SEND FLAG to 0100. Since not only there is no redundant transmitting and transmitting is carried out effectively, but also a rule for deciding transmit directions is clear, the flag encoder 59 can judge which TYPE of calculation data are sent from which array operation unit 100, by combining the TYPE, the COUNT-X and the COUNT-Y. The flag decoder 58 receives RESULT DECODING simultaneously, when calculation data are read to the result data register 62 as result data. The flag decoder 58 then sends RESULT SEND.

Whenever the flag encoder 59 receives SEND from at least one of four neighbors, it also receives TYPEs, COUNT-Xs and COUNT-Ys from sides receiving SEND, and then a part of contents of status register 60 is updated, corresponding to the received signals. Simultaneously, the flag encoder 59 sends RECEIVE which was set to one to the sides. A flag encoder 59 of an array operation unit 100, which is the sender, receives the RECEIVE at a moment when the RECEIVE changes to one, and then updates RECEIVE STATUS in the status register 60. Each array operation unit 100 can, therefore, judge which input data registers memorize valid calculation data, only by checking RECEIVE STATUS in its status register 60. For example, suppose that the upper input data register 64 has already stored calculation data. The processor 101 can read data from the upper input data register 64 by directing address. UPPER DECODING is simultaneously sent from the address decoder 54 to the flag encoder 59. After a part representing an upper side in RECEIVE STATUS goes back to zero, RECEIVE toward the upper side, which represents zero, is sent. In cases of the lower input data register 65, the left input data register 66 and the right input data register 67, each array operation unit 100 works similarly. Whenever the flag encoder 59 receives one of FRONT INPUT SENDs for some input images, the flag encoder 59 sets FRONT INPUT SEND STATUS in the status register 60 to one, where the FRONT INPUT SEND STATUS is used for an input image corresponding to the received FRONT INPUT SEND. Moreover, when the processor 101 reads data from the front input data register 61 for input images, the address decoder 54 sends FRONT DECODING to the flag encoder 59, and then the flag encoder 59 sets FRONT INPUT SEND STATUS corresponding to the received FRONT INPUT SEND to zero. The processor 101 can judge whether a last input image is memorized in the front input data register 61, by reading contents of the status register 60.

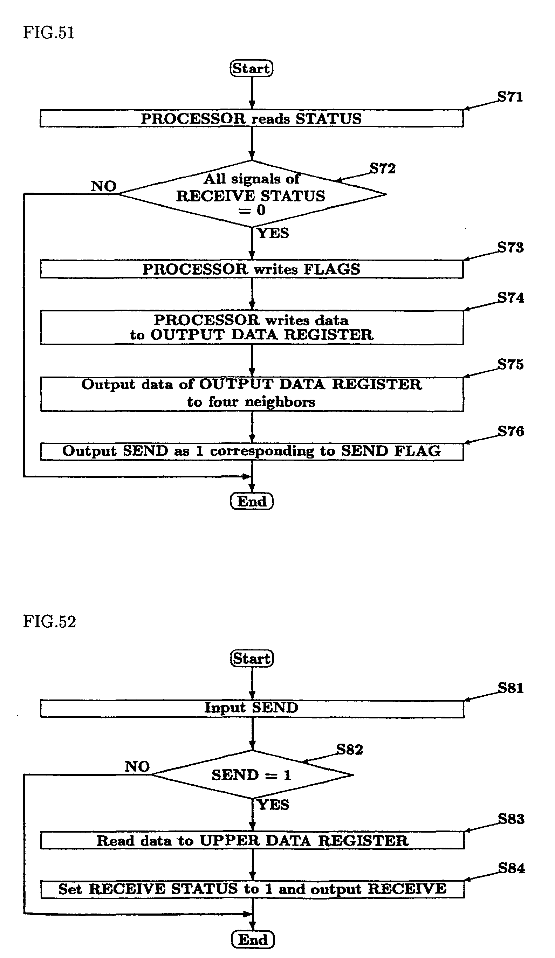

FIG.51 shows an algorithm of a case that the processor 101 sends calculation data to four neighbor array operation units 100 via the controller 103. FIG.51 is processed by combining program control executed in the processor 101 and hardware logic used in the flag decoder 58 and the flag encoder 59. At step 71 in FIG.51, the processor 101 reads contents of the status register 60. At step 72, the processor 101 judges whether all signals of RECEIVE STATUS in the read contents are equal to zero or not. If NO, this process ends. If YES, this process goes to step 73. At step 73, the processor 101 decides TYPE of data to send to some adjoining array operation units 100, a value of counter and directions to send. and then writes them to the flag register 57. At step 74, the processor 101 writes data to send to some adjoining array operation units 100. At step 75, the controller 103 sends contents of the output data register 63 to some adjoining array operation units 100, regarding them as calculation data. At step 76, the controller 103 set SEND to one, and sends the SEND to only directions directed by SEND FLAG in the flag register 57. The algorithm of the processor 101 for sending one time ends. The processor 101 starts this send algorithm, once data to send are updated in the memory 102.

FIG.52 shows an algorithm of a case that the controller 103 receives calculation data from the upper array operation unit 100. FIG.52 is processed by hardware logic used in the flag decoder 58 and the flag encoder 59. At step 81 in FIG.52, the flag encoder 59 inputs SEND. At step 82, the flag encoder 59 judges whether SEND is equal to one or not. If NO, this process ends. If YES, this process goes to step 83. At step 83, the upper input data register 64 reads calculation data sent from the upper side. At step 84, the flag encoder 59 sets RECEIVE STATUS for the upper side in the status register 60 to one. Simultaneously, the flag encoder 59 sets to RECEIVE to one, and sends the RECEIVE to the upper array operation unit 100. In cases of the lower, left and right sides, this step is executed similarly. The algorithm of the controller 103 for receiving one time ends. The controller 103 always supervises the SENDs from the upper, lower, left and right array operation units 100. The controller 103 starts this receive algorithm, once SENDs are received.

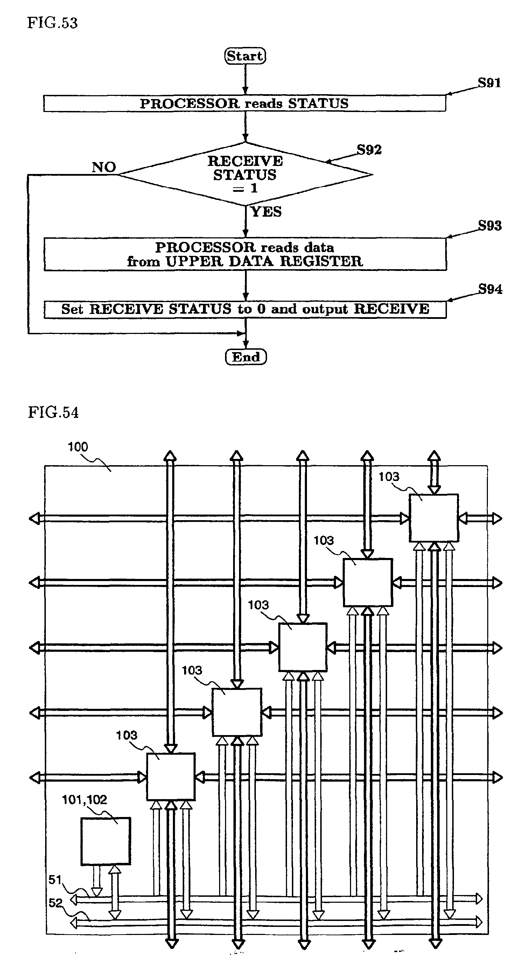

FIG.53 shows an algorithm of a case that the processor 101 receives data from the upper input data register 64. FIG.53 is processed by combining program control executed in the processor 101 and hardware logic used in the flag decoder 58 and the flag encoder 59. At step 91 in FIG.53, the processor 101 reads contents of the status register 60. At step 92, the processor 101 judges whether RECEIVE STATUS for the upper side in the read contents are equal to one or not. If NO, this process ends. If YES, this process goes to step 93. At step 93, the processor 101 reads data from the upper input data register 64. At step 94, the flag encoder 59 sets RECEIVE STATUS for the upper side in the status register 60 to zero. Simultaneously, the flag encoder 59 sets to RECEIVE to zero, and sends the RECEIVE to the upper array operation unit 100. In cases of the lower, left and right sides, this step is executed similarly. The algorithm of the processor 101 for receiving one time ends. The processor 101 supervises the contents of the status register 60 for a specific period. The processor 101 starts this receive algorithm, once either RECEIVE STATUS for the upper, lower, left or right side is equal to one. In addition, this algorithm can be realized by interrupt processing even though the processor 101 does not have to supervise the contents of the status register 60 for the specific period.

Here, although this array operation unit 100 is mainly described on the assumption that it generates one output image from more than or equal to one input image, the array operation unit 100 has to change its circuit as it can output calculation data in the middle of computation if desired. In this case, we only have to change the circuit as the number of RESULT SENDs in the flag decoder 58 increases to the number of calculation data due to output, and the program of the array operation unit 100 as only RESULT SEND corresponding to calculation data read by the result data register 62 is set to one.

It has been described above about the array operation unit 100. In a case that the array operation unit 100 transmits an image, the number of whose bands is as many as a transfer-source redundant-information image 184, however, the array operation unit 100 may not be able to transmit the image effectively, if the array operation unit 100 have only one controller 103. Finally, thus, It is explained here about an array operation unit 100 which has some controllers 103.

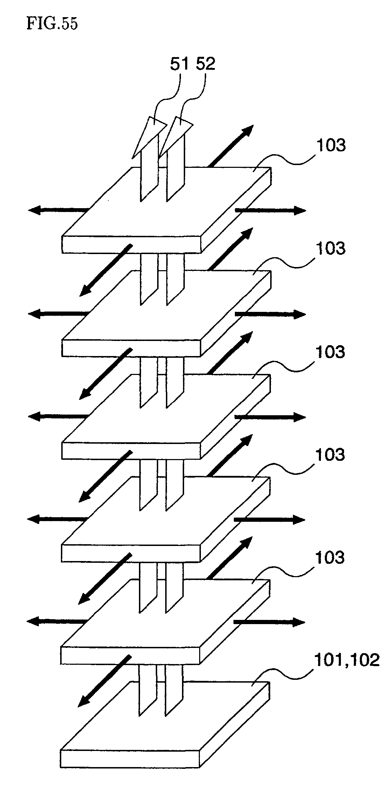

As shown in FIG.54, the array operation unit 100 described in claim 9 can have some controllers 103. In a case of FIG.54, the array operation unit 100 has five controllers 103 arranged on a diagonal line, and each controller 103 is connected to address bus 51 and data bus 52. Five difference addresses are assigned to address decoders 54 in the five controllers 103, respectively, as the processor 101 can distinguish these controllers 103. Since each controller 103 has a front input data register 61 and a result data register 62, all controllers 103 can input some front input data sets independently, and output a result data. Furthermore, the array operation unit 100 can extend communication bands up to five times, by connecting each controller 103 to a controller 103 in the adjoining array operation unit 100, which is different from each other. Even though the array operation unit 100 transmits the image, the number of whose bands is as many as the transfer-source redundant-information image 184, therefore, the more controllers 103 the array operation unit 100 has, the less the transmission efficiency comes to decrease.

In a case that the array operation unit 100 has some controllers 103, note that the processor 101 must supervise STATUSs in all status registers 60 in the controllers 103, according to the algorithms shown in FIG.51 and FIG.53. A round robin system is mainly used for supervisor scheduling.

In the round robin system, some controllers 103 are arranged in the shape of a circle logically. The processor 101 accesses these controllers 103 along the circle in turns. For one controller 103, the processor 101 carries out the alogrithm shown in FIG.53. If the processor 101 has data to send, moreover, the processor 101 carries out the alogirthm shown in FIG.51, for this controller 103. After this, the processor 101 accesses the next controller 103. All controllers 103, thus, are treated on equal terms. In a case that the communication bands of the controller 103 is narrower than the amount of data which the array operation unit 100 transmits for a short time, this system is effective.

In addition, we can use a priority system in which the processor 101 accesses some controllers 103 in an order from highest priority each time, by giving numbers which are called the priority and which are different from each other to all controllers 103. In a case that the communication bands of the controller 103 is wider than the amount of data which the array operation unit 100 transmits for a short time, this system is effective.

In general, since it is assumed that the array operation unit 100 has only a few controllers 103, the round robin system is better than the priority system in a case that the visual device 2 carries out local and parallel image processing. However, suppose that the array operation unit 100 has the enough number of controllers 103 in order for the visual device 2 to carry out local and parallel image processing including some functions in which the visual device 2 must transmit a lot of data. In this case, since communication efficiency of the round robin system comes to fall if the remaining functions refers to only band-pixel values in four neighbors and eight neighbors 182, the priority system is better than the round robin system. Of course, if interrupt function is installed in all controllers 103 and a processor 101, the processor 101 does not have to supervise STATUS in a status register 60 in each controller 103 periodically.

Now, in a case that some controllers 103 are arranged on a mounting side of LSI (Large-scale Integration Circuits) in claim 9, there are three major problems as follows: First, the mounting area of LSI comes to be very large. Second, wiring between the controllers 103 is complex and long. Third, we can not increase the number of the controllers 103 easily. If three-dimensional LSI technology is adopted, however, an LSI designer can solve these problems easily. It is explained here about an array operation unit 100 adopting the three-dimensional LSI technology.

As shown in FIG.55, the controllers 103 described in claim 10 are stacked within the array operation unit 100, by using the three-dimensional LSI technology. In a case of FIG.55, five controllers 103 are stacked on the processor 101 and the memory 102, and each controller 103 is connected to the processor 101 and the memory 103 via address bus 51 and data bus 52 which were wired vertically. As is clear by FIG.55, even though the number of the controllers 103 is increased, the mounting area of each layer is not increased. In addition, each controller 103 only has to be connected to some adjoining controllers 103 in the same layer. Moreover, if the LSI designer would like to increase the number of the controllers 103, he can increase only the required number of layers implementing the controllers 103. He also does never have to revise layers underlying the appended layers if even address bus 51 of the controllers 103 is designed appropriately. With a natural thing, since a controller 103 in each layer is constructed by the same circuit except an address decoder 54, a controller 103 in a layer stacked newly is designed very easily.

As shown in FIG.54 and FIG.55, now, suppose that an array operation unit 100 has some controllers 103. The array operation unit 100 can not only expand communication bands between some adjoining array operation units 100, but also distinguish which controller 103 it received from, and which data it received. It is explained here about a data processing device 110 which gets together some successive array operation units 100 into one group, whose array operation units 100 shares a processor 101 and a memory 102, by using some controllers 103.

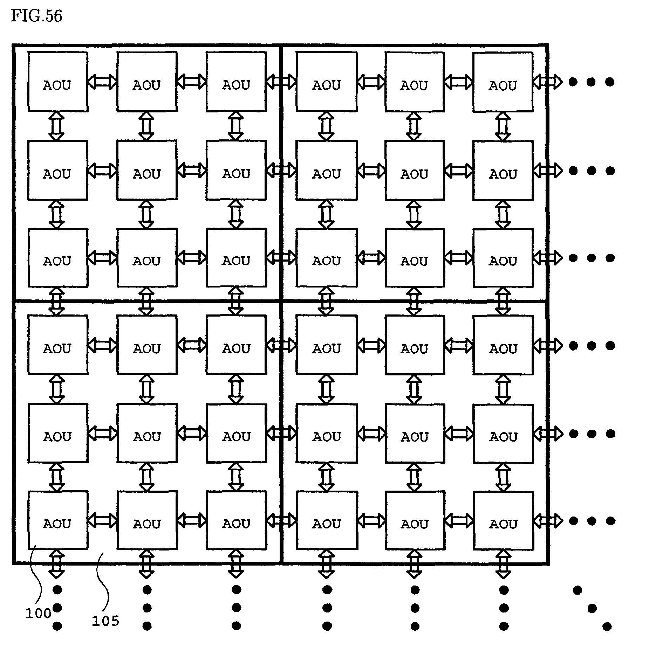

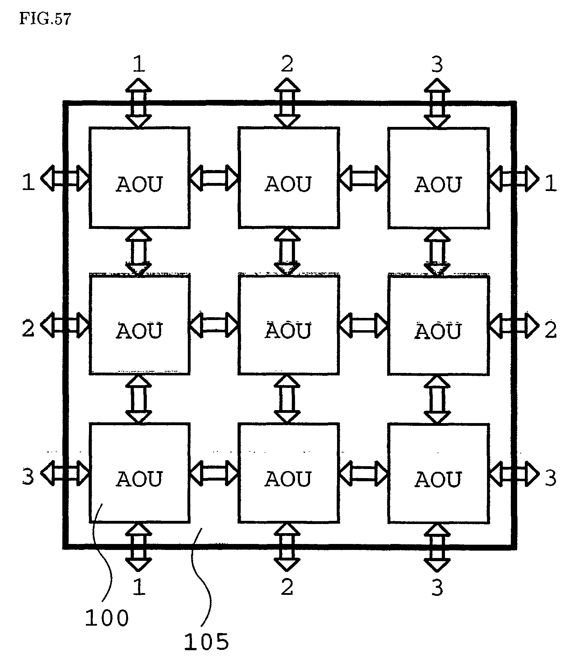

As shown in FIG.56, first, some array operation units 100 arranged in the shape of a two-dimensional lattice are got together into a rectangular group whose size is suitable. This group is called a virtual array operation unit 105. In a case of FIG.56, the virtual array operaion unit 105 is a group which 3 x 3 array operation units 100 are got together into. As shown in FIG.47, FIG.54 and FIG.55, next, the virtual array operation unit 105 has a processor 101, a memory 102 and controllers 103, the number of which is more than or equal to maximum of the vertical number and the horizontal number of array operation units 100. In a case of FIG.56, the virtual array operation unit 105 needs three or more controllers 103, where some different numbers are given to these controllers 103 on facilities. As shown in FIG.57, in addition, the same numbers as the controllers 103, which is different from each other, are also given to communication lines between array operation units 100. Note that two numbers which faces each other becomes equal. Finally, such a program that the processor 101 carries out processing of nine array operation units 100 is memorised in the memory 102. In a case that each of the array operation units 100 communicates with some array operation units 100 in an adjoining virtual array operation unit 105, this program is implemented as the array operation unit 100 must communicate via a controller 103 whose number identifies with a number given to a communication line. Because of this, the virtual array operation unit 105 can distinguish which array operation unit 100 calculation data were sent from, and which array operation unit 100 calculation data were sent to.

By the way, the virtual array operation unit 105 can not implement some array operation units 100 completely, only by increasing the number of controllers 103, because the virtual array operation unit 105 must input front input data sets from other virtual array operation units 105, and output result data to other virtual array operation units 105. In a case that some controllers 103 are implemented on a two-dimensional plane, as shown in FIG.54, this problem is solved by a program, by giving the controllers 103 to some numbers, as similar to calculation data, if the number of the controllers 103 is enough. Even in a case of FIG.57, however, nine controllers 103 must be prepared. When the number of array operation units 100 included in a virtual array operation unit 105 was increased, this method becomes very inefficient. In a case that the controllers 103 are stacked, futhermore, as shown in FIG.55, it is very difficult for the virtual array operation unit 105 to secure communication lines for the front input data sets and the result data. It is described here about a method for solving this problem, by changing only a front input data register 61 in a controller 103.

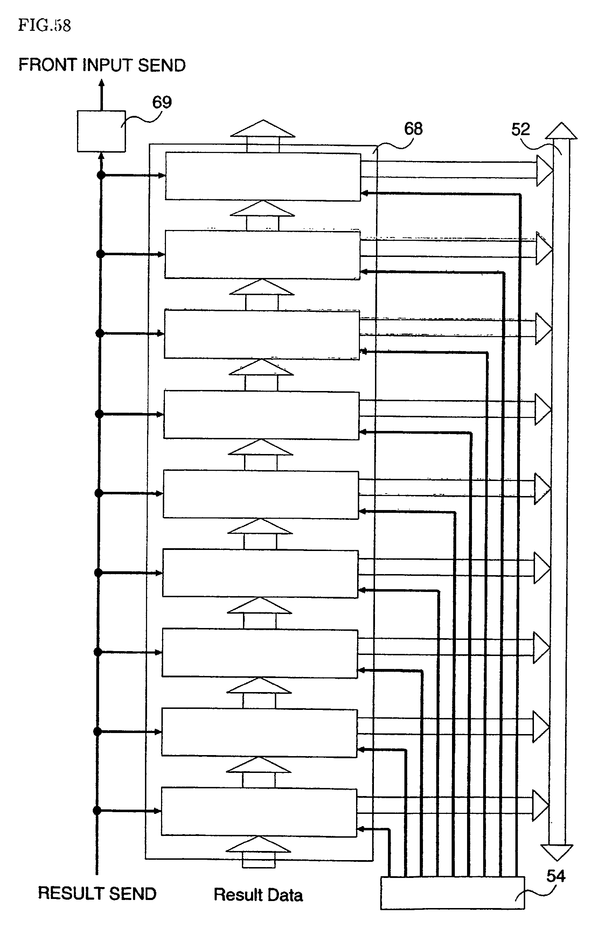

First, suppose that a controller 103 inputs result data as front input data of a front input data set from another controller 103, and moreover RESULT SEND as FRONT INPUT SEND. In this case, as shown in FIG.58, a front input data register 61 has a front input shift register 68 consisting of the same number of registers as the number of array operation units 100 in a virtual array operation unit 105, and a front input counter 69. The front input counter 69 is a down counter whose initial value is the number of the registers. When a count number of the front input counter 69 became zero, the front input counter 69 outputs the FRONT INPUT SEND. The front input counter 69 then is initialized to the initial value if the result data are inputted. The front input shift register 68 consists of nine registers in FIG.58. If nine result data are inputted to the front input shift register 68, the FRONT INPUT SEND is outputted. Next, each register in the front input shift register 68 and the front input counter 69 input the RESULT SEND as a triger signal. Moreover, an address decoder 54 selects one of the registers in the front input shift register 68, by decoding an address. Each register, thus, can output the result data to data bus 52 if a processor 101 specified an address of a suitable register in the front input shift register 68. Note that other signal lines of the address decoder 54 are omitted in FIG.58. Suppose that the virtual array operation unit 105 outputs result data of nine array operation units 100 in fixed turns. These result data are memorized by the registers in the front input shift register 68 in the order of their outputs. At the time that the FRONT INPUT SEND outputted by the front input counter 69 was memorized by a status register 60, the processor 101 can get result data of each array operation unit 100 if the processor 101 accesses to the corresponding register.

It has been described above about the visual device 2. If image size of a digital image 111 is limited, and we put up with calculation time to some extent, the visual device 2 can be realized even by a commercial single-tip computer. In order to enlarge the image size and achieve realtime performance, however, we have to implement an LSI for exclusive use. Especially by implementing some means of the visual device 2 in an LSI, the visual device 2 can realize space saving, low power consumption and realtime performance. It is explained here about an image sensor using the visual device 2.

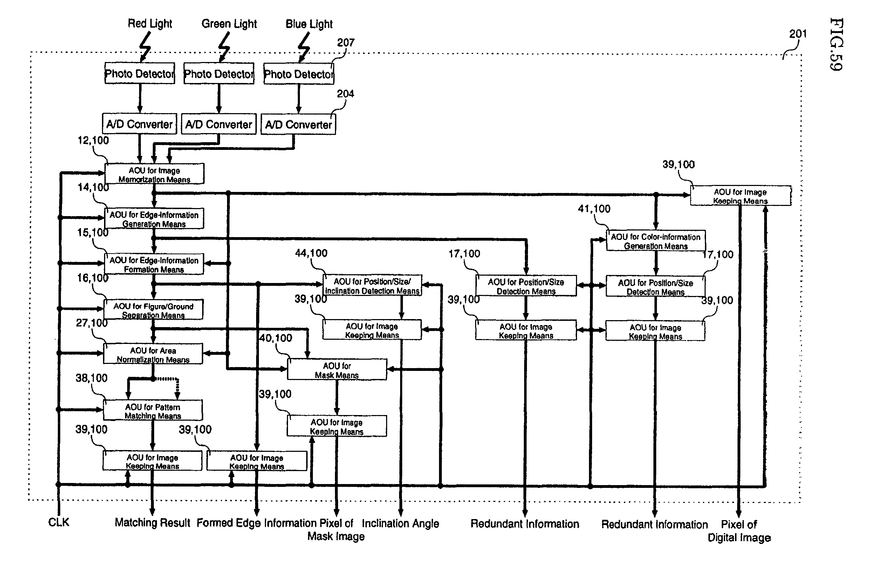

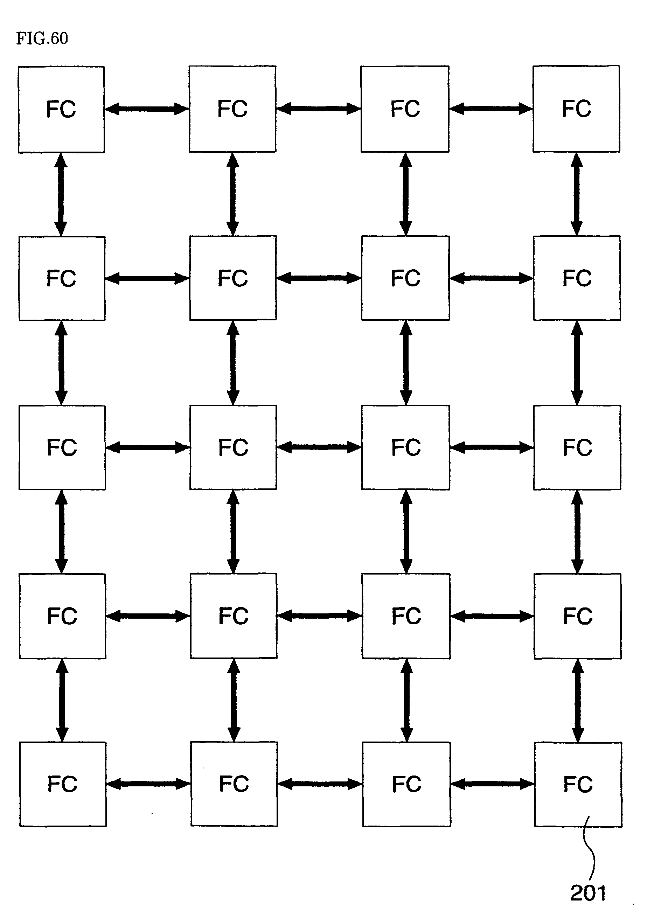

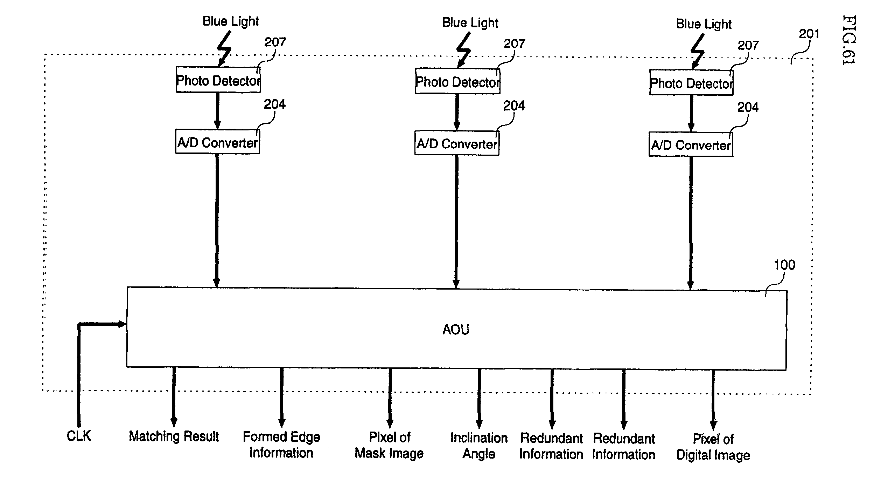

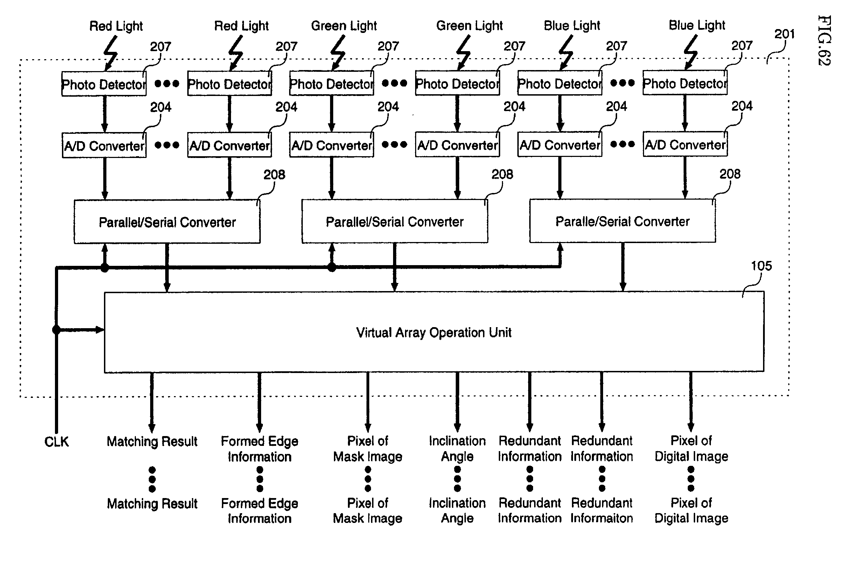

An image sensor used in the invention described in claim 7 is a sensor in which such functional columns 201 as FIG.59 are arranged in the share of a two-dimensional lattice, and they are wired each other like FIG.60. Note that an array operation unit 100 is denoted as *AOU* in FIG.59, and the functional column 201 is denoted as *FC* in FIG.60. In order to make outputting redundant information 131 and matching result easy, furthermore, three image keeping means 39 has been appended in FIG.14. Although some array operation units 100 realizes some means in FIG.59, respectively, even an array operation unit 100 can realize some means by a program, as shown in FIG.61. Of course, as shown in FIG.62, even a virtual array operation unit 105 can realize some means by a program.

In FIG.59, FIG.61 and FIG.62, not only array operation units 100 and virtual array operation units 105 but also photodetectors 207 like some photodiodes and CCDs, and some A/D converters 204 are inserted in the functional column 201. Note that an individual oscillation circuit also may be used, instead of inputting a clock signal from an external part for the functional column 201. In addition, since the photodiodes can be implemented in an LSI implementing CMOS (Complementary Metal Oxide Semiconductor), design and implementation of an image sensor becomes very simple.

As shown in FIG.60, each array operation unit 100 in FIG.59 communicates with four array operation units 100 which are located at four neighbors and carry out the same means via some signal lines. Each array operation unit 100, thus, can constitute a data processing device 110, according to processing. In a case that an image sensor is implemented by three-dimensional very large-scale integrated circuit (3D VLSI) technology, if all array operation units 100 in a functional column 201 are implemented by 3D VLSI as they are arranged vertically, the signal lines between functional columns 201 never cross even between array operation units 100. Thus, design and implementation of the image sensor becomes very simple.

Now, it has been described above about the image sensor. However, when we try to make an image sensor whose scale and processing speed are practical, we can not bypass a problem on synchronization of a clock signal, a reset signal and so on. It is explained here about the enforcement forms of interblocked devices in the present invention, with reference to the drawings.

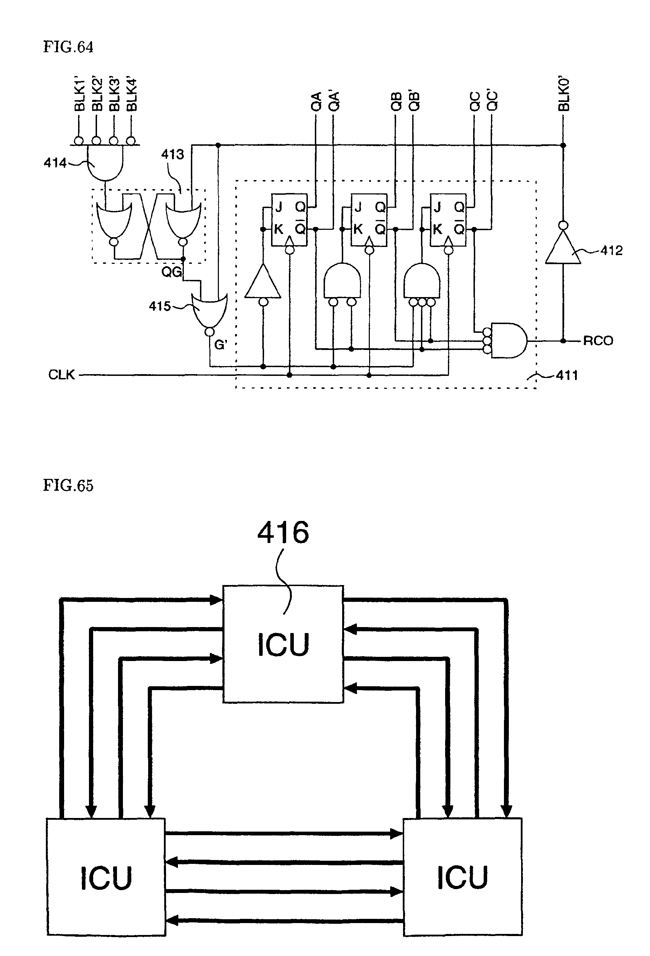

As shown in FIG.64, first, an interblocked counter 416 consists of a counter part and an interblocked part. In addition, in FIG.64, suppose that the interblocked counter 416 inputs four interblocked signals, BLK1', BLK2', BLK3' and BLK4' from four interblocked counters 416.

In the counter part, a synchronous counter 411, a NOR gate for end-value judgement 412 and a NOR gate for counting are connected circularly. Although FIG.64 shows a 3-bit binary synchronous counter 411 consisting of three flip-flop synchronized with a clock signal (CLK), it is easy for us to change this counter to an N-bit binary synchronous counter 411, by using N flip-flops. In addition, the synchronous counter 411 can work as a down counter, by connecting an input of a NOR gate to Q terminal of a flip-flop in the synchronous counter 411, instead of Q' terminal.

The synchronous counter 411 outputs a count number, being synchronized with the clock signal. If the count number arrives at an end value, that is, the synchronous counter 411 outputs RIPPLE CARRY OUTPUT (RCO), the NOR gate for end-value judgement 412 outputs the interblocked signal, BLK0'. The NOR gate for counting 415 outputs an enable signal (G') until the interblocked signal, BLK0', is inputted. The synchronous counter 411 counts until the count number arrives at the end value, and stops counting if the count number arrived at the end value.

In the interblocked part, a NOR gate for interblocking 414 and a latch circuit for interblocking 413 control the NOR gate for counting 415, according to the interblocked signals, BLK1', BLK2', BLK3' and BLK4' inputted from an external part. In the interblocked part, then, a phase and a cycle of the interblocked signal, BLK0', can coincide with phases and cycles of the interblocked signals, BLK1', BLK2', BLK3' and BLK4', respectively. Although the interblocked counter 416 works, being synchronized with the clock signal, the clock signal itself does not always supply for all interblocked counters 416 simultaneously. Therefore, either the interblocked signals, BLK1', BLK2', BLK3' or BLK4' becomes high level (H-level) before the interblocked counter 416 receives the clock signal. As a result, the enable signal may come to be H-level. By using a latch circuit for interblocking 413, then, the interblocked part can hold the enable signal to low level (L-level) until the counter part starts counting. Although FIG.64 shows a case that the interblocked counter 416 inputs four interblocked signals from four interblocked counters 416, the number of inputs of the NOR gate for interblocking 414 can be changed according to the number of interblocked counters 416 connected with it. Otherwise, unnecessary inputs of the NOR gate for interblocking 414 only have to be carried out the pull-down.

In the synchronous counter 411 shown in FIG.64, now, the initial value of the count number is fixed to zero, and the end value is fixed to seven. However, the initial value and the end value of the count number may be changed in terms of specification of LSIs. The interblocked counter 416 then can set the initial value and the end value to any value, by using a synchronous counter 411 having a synchronous clear method and a synchronous load method like a commercial synchronous counter 411. In this case, judgement of the end value is realized by adding a NOR gate in front of the NOR gate for end-value judgement 412. Of course, a combination of the NOR gate for end-value judgement 412 and the NOR gate is replaced with some NAND gates.

It has been described above about a circuit composition of only the interblocked counter 411. It is explained here how some interblocked counters 416 interblock each other in a case that they are connected, with reference to some timing charts.

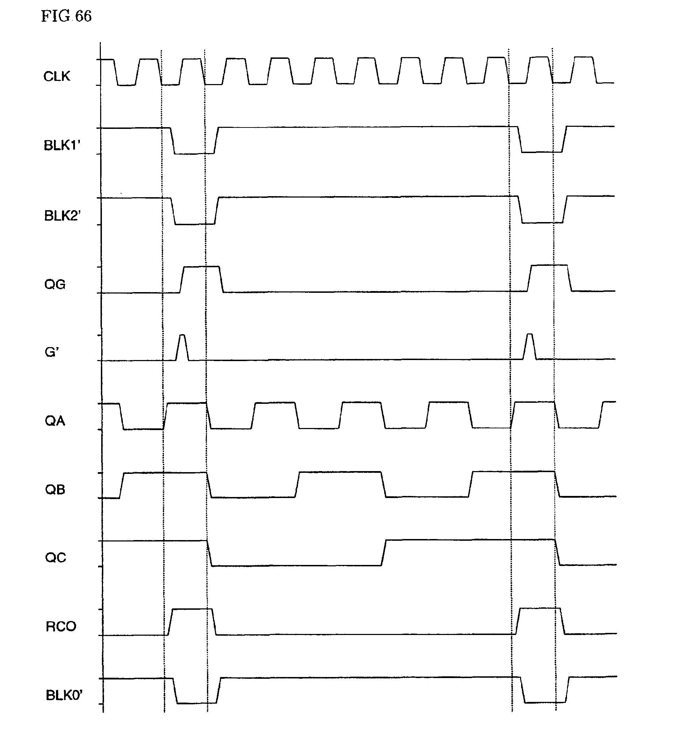

As shown in FIG.65, first, suppose that three interblocked counters 416 are connected each other. Note that the interblocked counter is denoted as *ICU* in FIG.65. An interblocked signal, BLK0', of each interblocked counter 416 is inputted to a NOR gate for interblocking 414 of the remaining interblocked counters 416. Therefore, the NOR gate for interblocking 414 only has to be a two-input NOR gate. FIG.66 shows a timing chart of either one of three interblocked counters 416 in a case that their operation is stabilized. Since all interblocked counters 416 are symmetrical, timing charts of the remaining interblocked counters 416 are similar to the above.

As is clear by FIG.66, in a case that count numbers of all interblocked counters 416 coincide, an output of a NOR gate for counting 415 becomes H-level for a moment. However, since the output returns to L-level soon, a synchronous counter 411 can count successively. All interblocked counters 416, thus, can hold outputting the same count number.

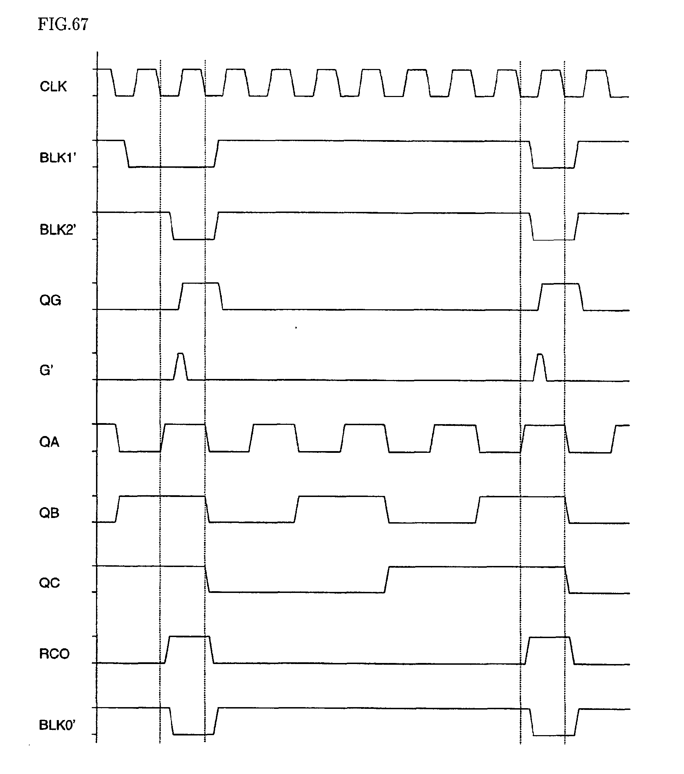

When a waveform of the interblocked signal, BLK1', becomes short for a certain reason, as shown in FIG.67, the interblocked counter 416 operates regardless of the interblocked signal, BLK1'. Therefore, the interblocked signal, BLK1', does not influence the count number. Note that the interblocked counter 416 generating the interblocked signal, BLK1', operates as phase of the interblocked signal, BLK1', coincides with phases of the interblocked signals, BLK0' and BLK2'.

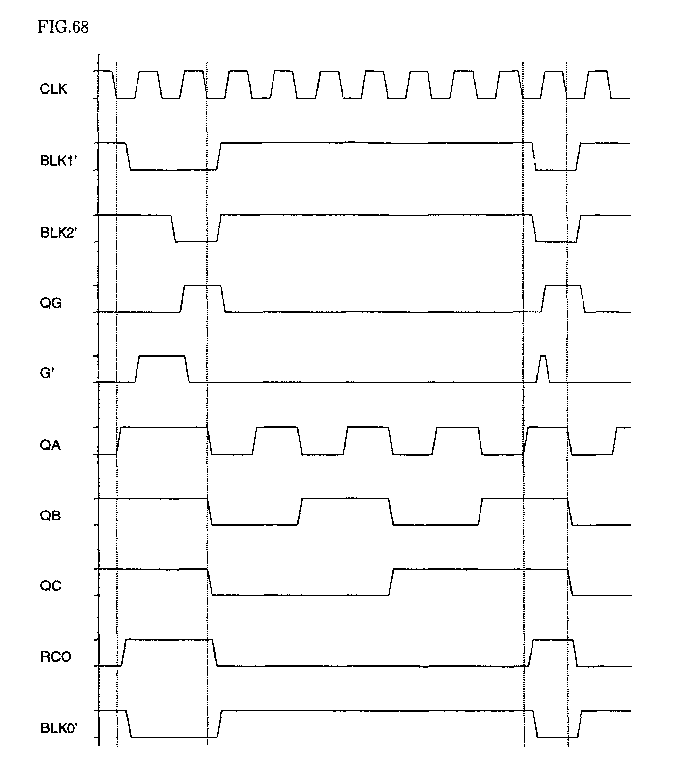

When a waveform of the interblocked signal, BLK2', becomes long for a certain reason, as shown in FIG.68, the interblocked counter 416 operates as the phase of the interblocked signal, BLK0', coincides with the phase of the interblocked signal, BLK2'. The interblocked counter 416, thus, can hold outputting an end value as the count number until the interblocked signal, BLK2', becomes L-level.

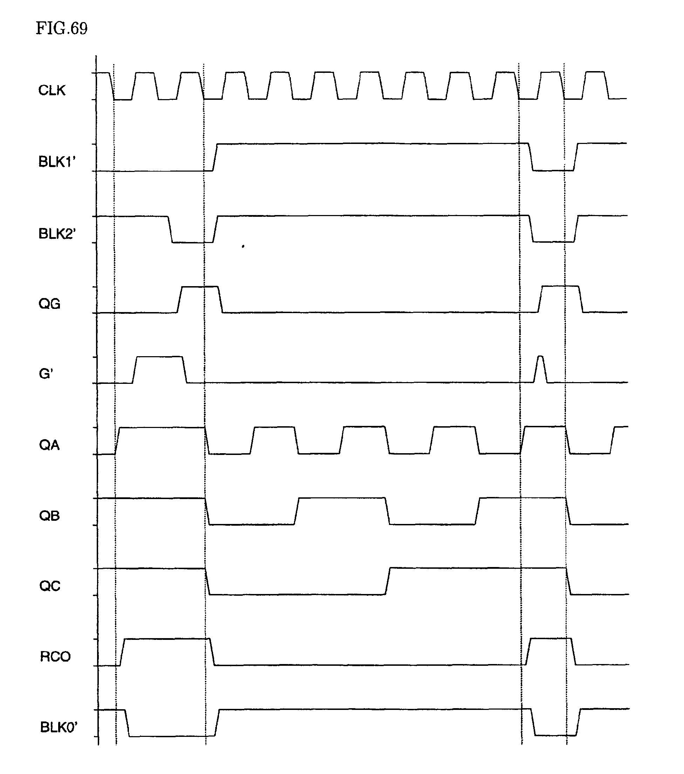

When a waveform of the interblocked signal, BLK1', becomes short for a certain reason, and a waveform of the interblocked signal, BLK2', becomes long for a certain reason, as shown in FIG.69, the interblocked counter 416 operates as the phase of the interblocked signal, BLK0', coincides with the phase of the interblocked signal, BLK2'. The interblocked counter 416, thus, can hold outputting an end value as the count number until the interblocked signal, BLK2', becomes L-level.

It is clear by the above timing charts that count numbers of these interblocked counter 416 coincide with the latest count number of them. This fact is also realized in a case that three interblocked counters 416 whose end values are different form each other are connected. Thus, even though count numbers of three interblocked counters 416 are different when a power is supplied, the count numbers of all interblocked counters 416 coincide within a time which is a cycle of a clock signal by the maximum of the end values.

As shown in FIG.65, now, the interblocked counter 416 does not always have to be connected with all other interblocked counters 416. It is explained here about a case that the interblocked counters 416 are arranged regularly.

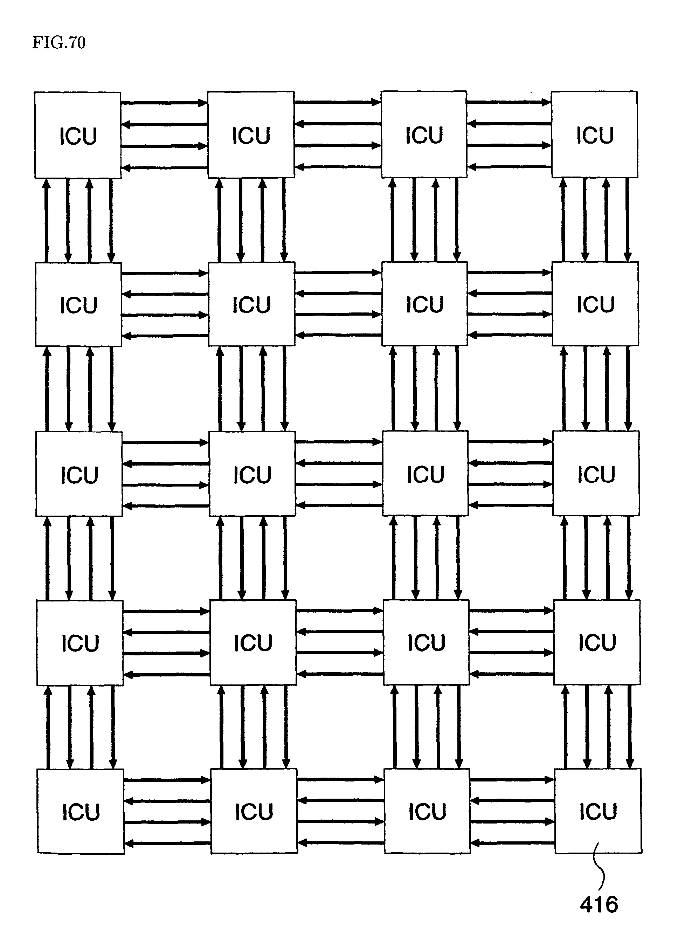

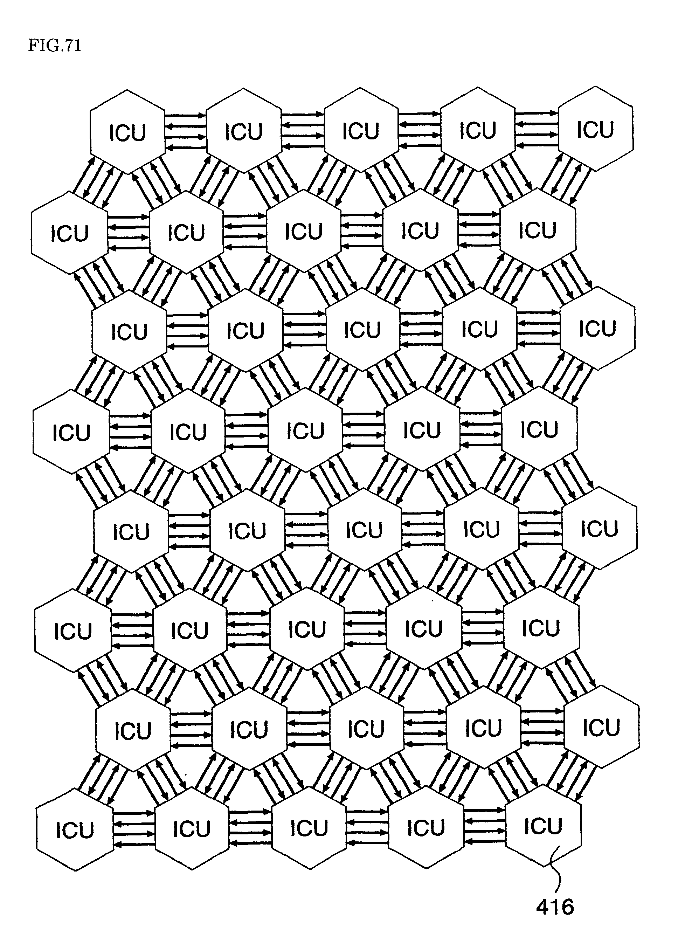

As shown in FIG.70, an interblocked device consisting of the interblocked counters 416 is a network connecting the interblocked counters 416 arranged in the shape of a square lattice with some adjoining interblocked counters 416 each other. In this case, the number of inputs of a NOR gate for interblocking 414 is four. Note that some inputs of the NOR gate for interblocking 414 which are not connected are carried out pull-down, in an interblocked counter 416 near an edge. As shown in FIG.71, the interblocked counters 416 can be arranged in the shape of a hexagonal lattice and can be connected with each other, instead of arranging them in the shape of a square lattice. Since all lengths of signal lines for interblocked signals become almost same, by arranging the interblocked counters 416 like this, it becomes easy for the interblocked counters 416 to interblock with each other. For a large-scale and regular digital circuit like a pipeline processing device, a DSP (Digital Signal Processor), a systric array, a data-flow machine and a parallel image processing device, these two-dimensional counter networks can supply easily the count number of the interblocked counter 416, that is, a divided signal of a clock signal.

Moreover, a three-dimensional counter network is a network piling up some interblocked counters 416 arranged in the shape of a square lattice and in the shape of a hexagonal lattice by 3D LSI technology. In a case of arranging them in the shape of a square lattice, the number of inputs of a NOR gate for interblocking 414 is six. In a case of arranging them in the shape of a hexagonal lattice, the number of inputs of a NOR gate for interblocking 414 is eight. In addition, since total length of signal lines comes to be the shortest, by uniting positions of interblocked counters 416 between layers each other, all propagation delay time of an interblocked signal of interblocked counter 416 become almost same, and it becomes easy for each interblocked counter 416 to interblock with each other. These three-dimensional counter networks can supply efficiently the count number of the interblocked counter 416, that is, a divided signal of a clock signal, for a systric array and a parallel image processing device like carrying out pipeline processing of data processed simultaneously along a virtical direction by some processors 101 arranged in the shape of a square lattice and a hexiagonal lattice.

In distributing the count number of the interblocked counter 416, moreover, a network of the interblocked counters 416 arranged in the shape of a square lattice and a hexagonal lattice and such digital circuits as a processor 101 and an operation circuit can be implemented in some different layers of a 3D LSI, respectively. Arrangement of the interblocked counters 416, thus, does not shift because of arrangement of the digital circuits, and also a line signal of the interblocked signal, BLK0', does not detour. In addition, since the interblocked counter 416 is not influenced by noise of the digital circuits, operation of the interblocked circuit 416 is stabilized. Furthermore, since the digital circuits can input the count number of any interblocked counter 416 in the network of the interblocked counters 416, design of the digital circuits comes to be easy.

By the way, all interblocked counters 416 can supply the same count number for a whole LSI, by using a two-dimensional counter network and a three-dimensional counter network. In short, by using this count number, an interblocked signal distribution circuit can be designed as a suitable signal is distributed for a whole LSI simultaneously.

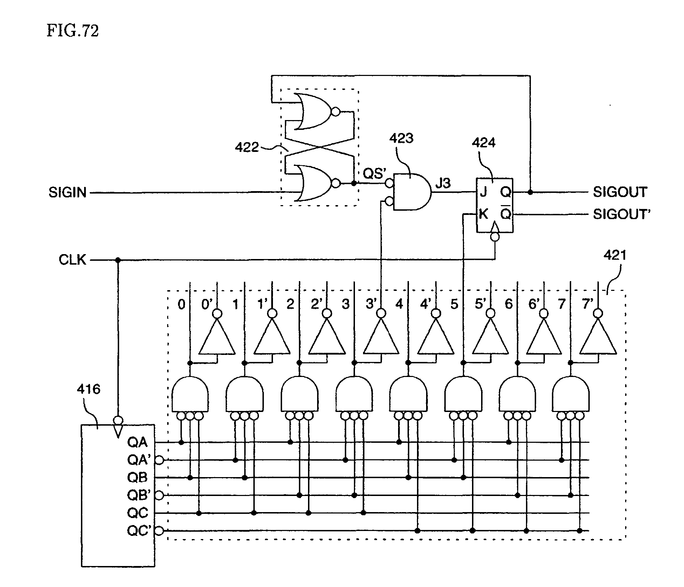

As shown in FIG.72, an interblocked device forming a cycle of an input signal into positive times of a cycle of a clock signal (CLK) decodes a count number of an interblocked counter 416 by using a decoder for signal distribution 421, and generates a timing signal synchronized with the CLK. By using two different timing signals representing a count start time and a count end time, then, the decoder for signal distribution 421 can measure time which is some positive times of a cycle of the CLK. Although a timing signal, No.3 and No.5, are used to represent the count start time and the count end time in FIG.72, respectively. Of course, note that other timing signals can be used. In a case that a certain signal (SIGIN) is inputted from an external part, this signal is inputted to the flip-flop circuit for signal distribution 424 at the count start time via a NOR gate for signal distribution 423, once a latch circuit for signal distribution 422 memorized this signal. The flip-flop circuit for signal distribution 424 memorizes the input signal, synchronizing the CLK, and is reseted at the count end time. Regardless of propagation delay time of the input signal, therefore, the interblocked signal distribution circuit can output the input signal, which reached before the count start time, between the count start time and the count end time. In a case that logic of the input signal is inverted, note that the interblocked signal distribution circuit can work normally, by inserting a NOT gate in front of the latch circuit for signal distribution 422.

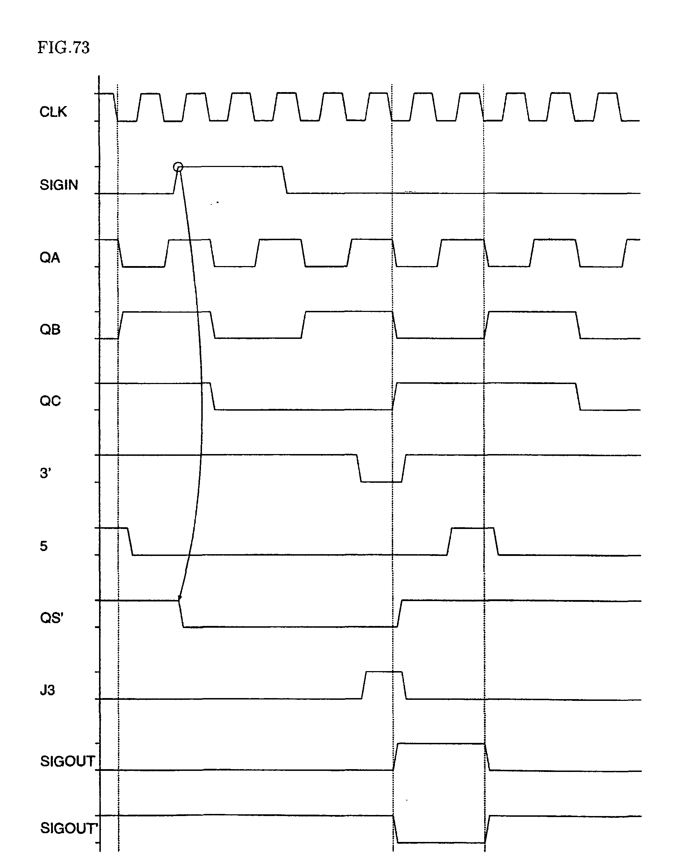

Now, FIG.73 shows a timing chart of the interblocked signal distribution circuit shown in FIG.72. As is clear by FIG.73, if an input signal (SIGIN) is inputted, an output signal (SIGOUT) is outputted between a time when a clock signal (CLK) fell during outputting a timing signal, No.3 and a time when a clock signal (CLK) fell during outputting a timing signal, No.5. Even though a digital circuit is arranged anywhere, the SIGOUT can be inputted certainly when the timing signal, No.5, rises. The above function is necessary for implimentation of a system LSI, without changing digital circuits which have already been designed, and which refer a reset signal, an interrupt signal, some input signals, some output signals and so on.

It has been described above about the interblocked counter 416, the counter network and the interblocked signal distribution circuit. It is explained here about a synchronous oscillation circuit 410 necessary for the interblocked counters 416 in a whole LSI, in a case that frequency of the clock signal is high.

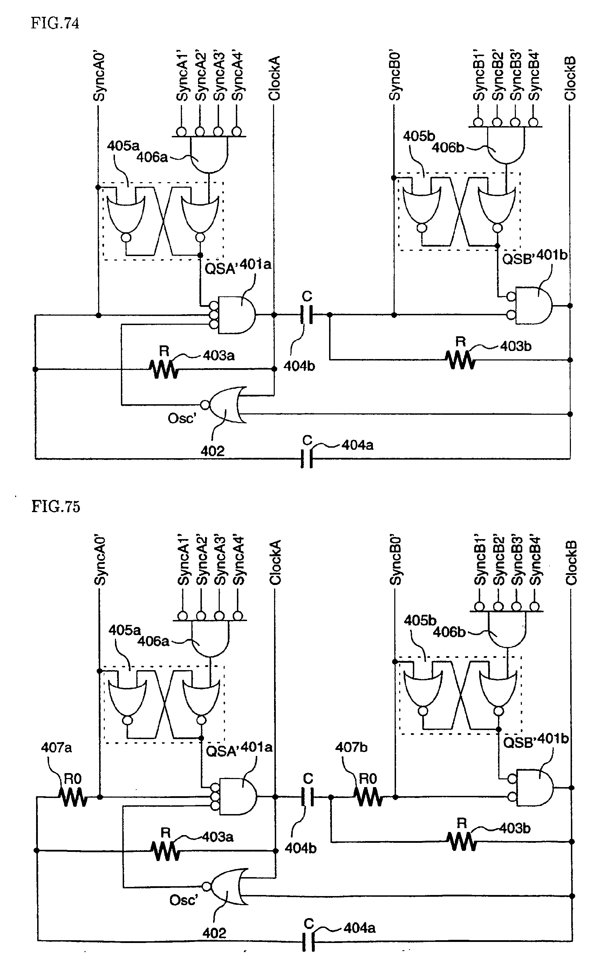

As shown in FIG.74, first, a synchronous oscillation circuit 410 consists of an oscillation part, a synchronous part and a NOR gate for initialization 402, and the oscillation part and the synchronous part are classified into two sides, A-side and B-side, respectively. In addition, in FIG.74, suppose that the synchronous oscillation circuit 410 inputs eight synchronous signals, SyncA1', SyncA2', SyncA3', SyncA4', SyncB1', SyncB2', SyncB3' and SyncB4', from four synchronous oscillation circuits 410.

In the oscillation part, a NOR gate for A-side oscillation 401a, a capacitor for A-side oscillation 404a, a NOR gate for B-side oscillation 401b and a capacitor for B-side oscillation 404b are connected circularly, and moreover two outputs and two inputs of the NOR gate for A-side oscillation 401a and the NOR gate for B-side oscillation 401b are connected via a resistor for A-side oscillation 403a and a resistor for B-side oscillation 403b, respectively. Let both resistances of the resistor for A-side oscillation 403a and the resistor for B-side oscillation 403b be R ohms, and both capacity values of the capacitor for A-side oscillation 404a and the capacitor for B-side oscillation 404b be C farads. The oscillation part can generate two clock signals, ClockA and ClockB, and two synchronous signals, SyncA0' and SyncB0', by self-oscillating according to a time constant value, RC. In the synchronous part, a latch circuit for A-side oscillation 405a and a NOR gate for A-side synchronization 406a controls the NOR gate for A-side oscillation 401a, and a latch circuit for B-side oscillation 405b and a NOR gate for B-side synchronization 406b controls the NOR gate for B-side oscillation 401b, according to the synchronous signals, SyncA1', SyncA2', SyncA3', SyncA4', SyncB1', SyncB2', SyncB3' and SyncB4'. In the synchronous part, therefore, phases and cycles of the synchronous signals, SyncA0' and SyncB0', can coincide with phases and cycles of the synchronous signals, SyncA1', SyncA2', SyncA3', SyncA4', SyncB1', SyncB2', SyncB3' and SyncB4'. The NOR gate for initialization 402 decides the phase of the synchronous signal, SyncB0', by controlling the NOR gate for A-side oscillation 401a at a time when a power is supplied and so on. Although FIG.74 shows a case that the synchronous oscillation circuit 410 inputs four synchronous signals from four synchronous oscillation circuits 410, the number of inputs of the NOR gate for A-side synchronization 406a and the NOR gate for B-side synchronization 406b can be changed according to the number of synchronous oscillation circuits 410 connected with them. Otherwise, unnecessary inputs of the NOR gate for A-side synchronization 406a and the NOR gate for B-side synchronization 406b only have to be carried out the pull-down.

The synchronous oscillation circuit 410 in FIG.74 can be implemented by many kinds of semicondunctor technology like TTL (Transister-Transister Logic), ECL (Emitter-Coupled Logic) and so on. In a case of using FET (Field-Effect Transistor) like CMOS (Complementary Metal Oxide Semiconductor), however, some NOR gates may be destroyed if electric charge stored by the capacitor for A-side oscillation 404a and the capacitor for B-side oscillation 404b flows to input terminals of the NOR gates simultaneously. As shown in FIG.75, the synchronous oscillation circuit 410 uses an input resistor for A-side 407a and an input resistor for B-side 407b in order to avoid this problem. Thus, all electric charges stored by the capacitor for A-side oscillation 404a and the capacitor for B-side oscillation 404b do not flow to some input terminals of all NOR gates simultaneously. In addition, since current which flows to input terminals of the NOR gate for A-side oscillation 401a and the NOR gate for B-side oscillation 401b decreases because of the input resistor for A-side 407a and the input resistor for B-side 407b, both accuracy of a time constant value derived from the input resistor for A-side 407a and the capacitor for A-side oscillation 404a, and accuracy of a time constant value derived from the input resistor for B-side 407b and the capacitor for B-side oscillation 404b also go up. Note that both resistances of the resistor for A-side oscillation 403a and the resistor for B-side oscillation 403b are R ohms, and registance, R0, is decided, refering to power supply voltage, input characteristics and capacity value, C.

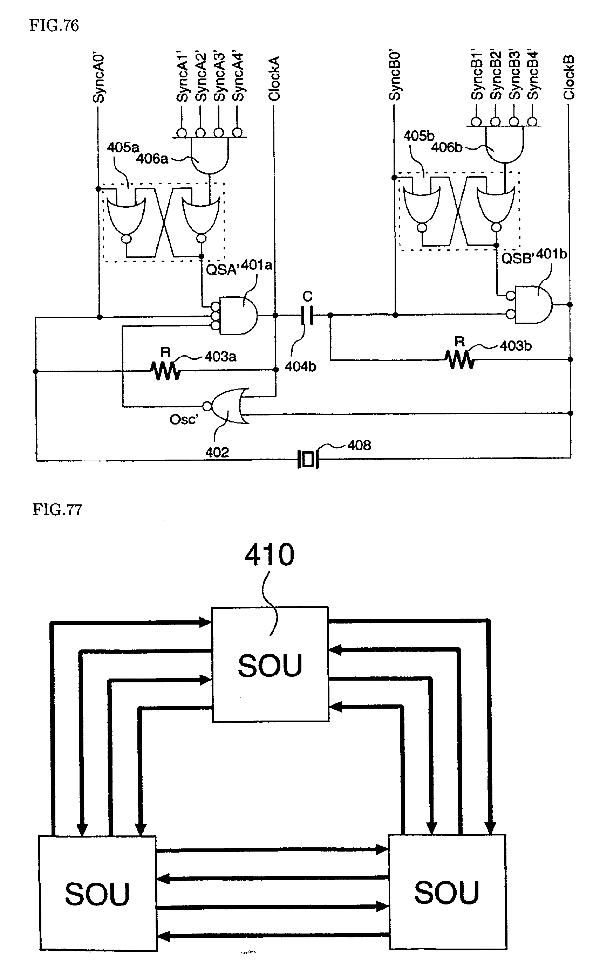

Now, even though not only NOR gates but also resistors and capacitors were implemented by LSI technology, variation arises for performance of each electronic part of FIG.74 and FIG.75. Furthermore, it is difficult for us to make the synchronous oscillation circuit 410 to genenrate the desired frequency of a clock signal. As shown in FIG.76, the synchronous oscillation circuit 410 can self-oscillate, coinciding to pitch of a crystal oscillator 408, by using the crystal oscillator 408 instead of the capacitor for A-side oscillation 404a. Note that the capacity value, C, of the capacitor for B-side oscillation 404b has to be set to such a value as the synchronous oscillation circuit 410 self-oscillates with about pitch of the crystal oscillator 408.

It has been described above about a circuit composition of only the synchronous oscillation circuit 410. It is explained here how some synchronous oscillation circuits 410 are synchronized with each other in a case that they are connected each other, with refering to some timing charts. Note that the timing charts below are illustrated bearing CMOS in mind, because input impedance of the CMOS is high and threshold value of input voltage can be set to the center between power supply voltage and ground level. Even in cases of TTL, ECL and so on, however, timing charts show similar waveform.

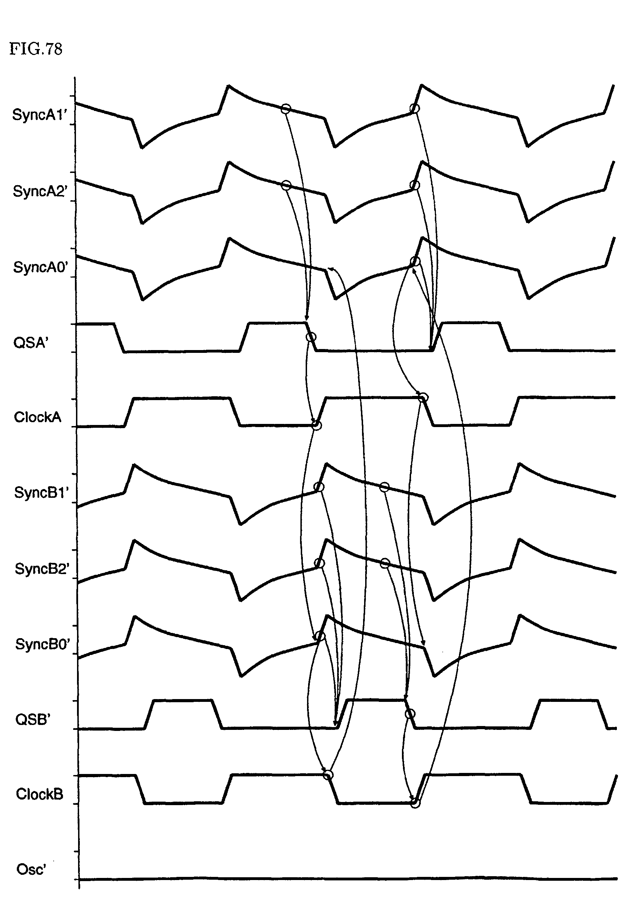

As shown in FIG.77, first, suppose that three synchronous oscillation circuits 410 are connected each other. Note that the synchronous oscillation circuit is denoted as *SOU* in FIG.77. Two synchronous signal, SyncA0' and SyncB0' of each synchronous oscillation circuit 410 is inputted to a NOR gate for A-side synchronization 406a and a NOR gate for B-side synchronization 406b of the remaining synchronous oscillation circuits 410. Therefore, the NOR gate for A-side synchronization 406a and the NOR gate for B-side synchronization 406b only have to be a two-input NOR gate. FIG.78 shows a timing chart of either one of three synchronous oscillation circuits 410 in a case that their self-oscillation is stabilized. Since all interblocked counters 416 are symmetrical, timing charts of the remaining synchronous oscillation circuits 410 are similar to the above.

As is clear by FIG.78, in a case that the synchronous oscillation circuit 410 self-oscillates, two clock signals, ClockA and ClockB, never become High level (H-level), simultaneously. Therefore, an output of a NOR gate for initialization 402 is always Low level (L-level). In addition, according to asymmetry of truth tables of the NOR gate for A-side oscillation 401a and the NOR gate for B-side oscillation 401b, the synchronous oscillation circuit 410 start self-oscillating from a time when voltages of the capacitor for A-side oscillation 404a and the capacitor for B-side oscillation 404b arrive at a threshold value of input voltages of the NOR gate for A-side oscillation 401a and the NOR gate for B-side oscillation 401b, because of electric discharge.

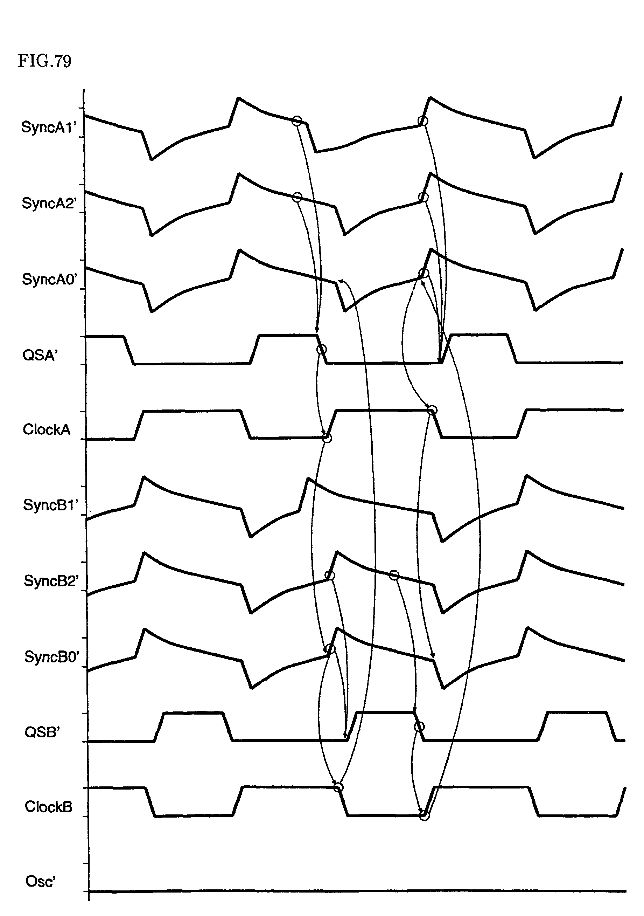

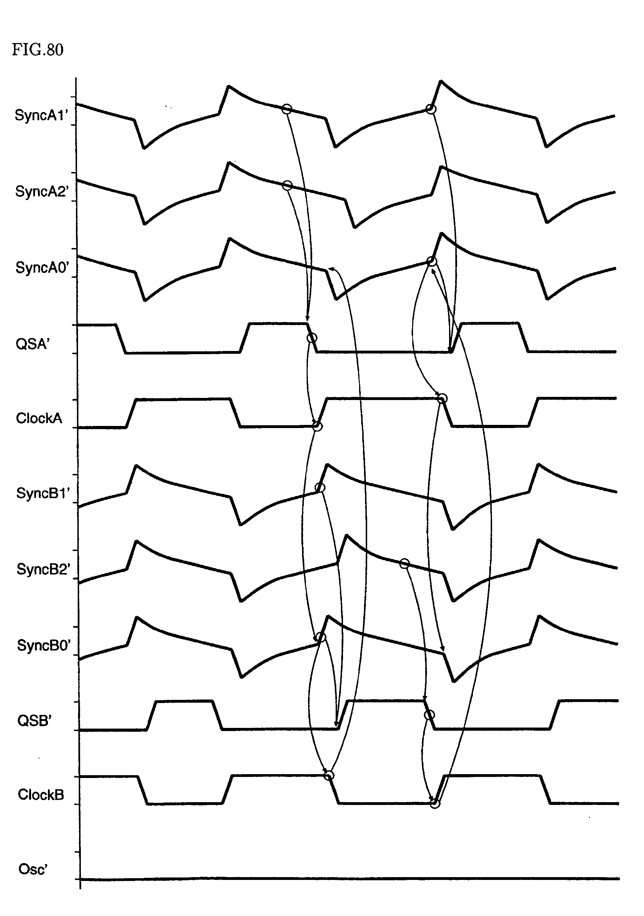

When waveforms of the synchronous signals, SyncA1' and SyncB1', become short for a certain reason, as shown in FIG.79, the synchronous oscillation circuit 410 operates regardless of the synchronous signal, SyncA1' and SyncB1'. Therefore, the synchronous signals, SyncA1' and SyncB1', do not influence the clock signals, ClockA and ClockB. Note that the synchronous oscillation circuit 410 generating the synchronous signals, SyncA1' and SyncB1', operates as phases of the synchronous signals, SyncA1' and SyncB1', coincide with phases of the synchronous signals, SyncA0', SyncA2', SyncB0' and SyncB2', respectively.
When waveforms of the synchronous signals, SyncA1' and SyncB1', become long for a certain reason, as shown in FIG.80, the synchronous oscillation circuit 410 operates as phase of the synchronous signal, SyncB0' (or SyncA0'), coincides with phase of the synchronous signal, SyncB2' (or SyncA2'). Therefore, cycles of the clock signals, ClockA and ClockB, become long as they coincide with a cycle of the synchronous signal, SyncB2' (or SyncA2').

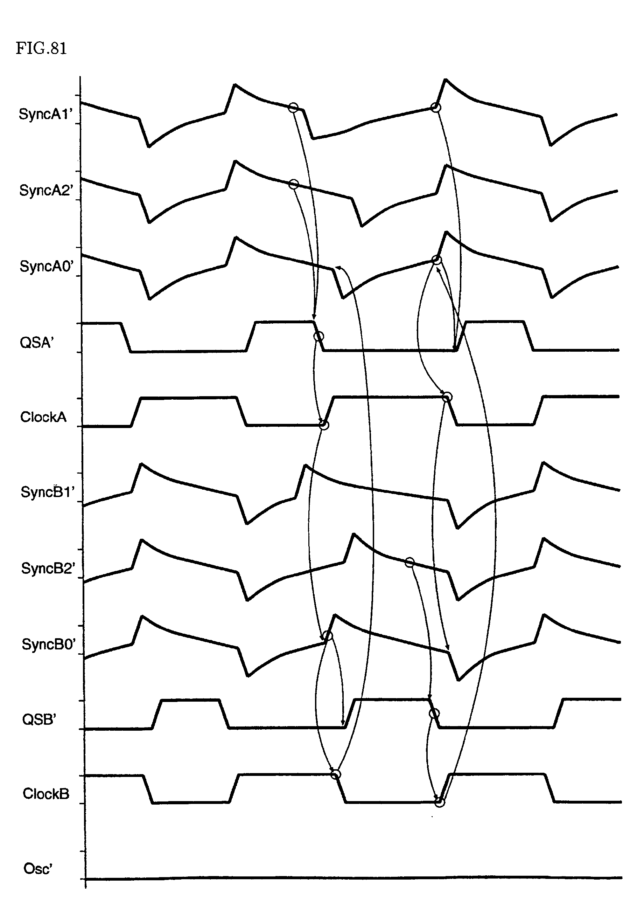

When waveforms of the synchronous signals, SyncA1' and SyncB1', become short for a certain reason, and waveforms of the synchronous signals, SyncA2' and SyncB2', become long for a certain reason, as shown in FIG.81, the synchronous oscillation circuit 410 operates as phase of the synchronous signal, SyncB0' (or SyncA0'), coincides with phase of the synchronous signal, SyncB2' (or SyncA2'). Therefore, cycles of the clock signals, ClockA and ClockB, become long as they coincide with a cycle of the synchronous signal, SyncB2' (or SyncA2').

It is clear by the above timing charts that these synchronous oscillation circuits 410 synchronize with a synchronous oscillation circuit 410 whose cycle is the longest amoung them. This fact is also realized in a case that three synchronous oscillation circuits 410, whose time constant values are different a little from each other, are connected.

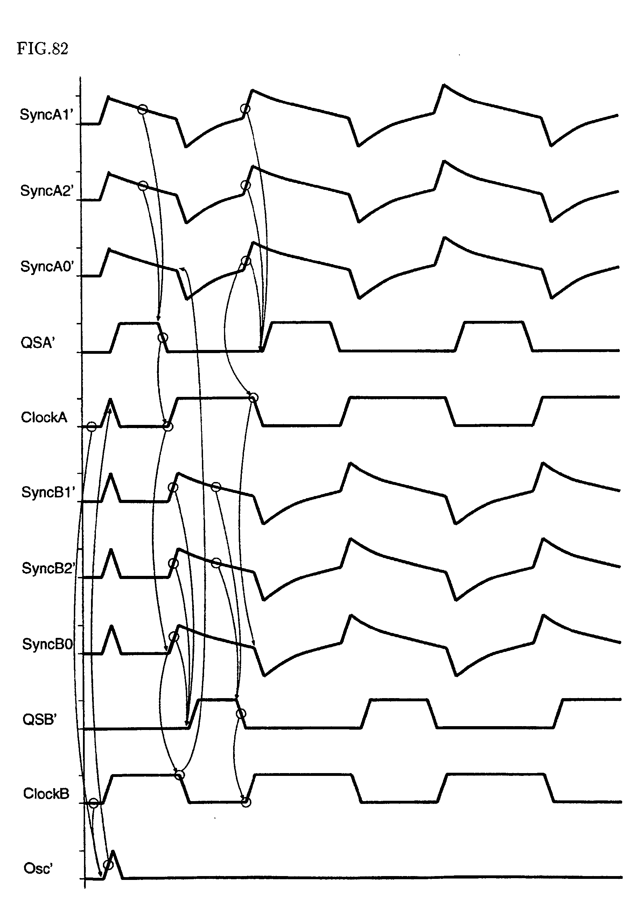

As shown in FIG.82, since all signals become zero bolt when a power is supplied, outputs of the NOR gate for A-side oscillation 401a and the NOR gate for B-side oscillation 401b are regarded as L-level. Therefore, an output of the NOR gate for initialization 402, that is, a signal, Osc', changes to H-level soon. At this time, the outputs of the NOR gate for A-side oscillation 401a and the NOR gate for B-side oscillation 401b also change to H-level. In a case that the signal, Osc', becomes H-level, however, the output of the NOR gate for A-side oscillation 401a is changed to L-level compulsorily. As a result, only the output of the NOR gate for B-side oscillation 401b becomes H-level. In this case, the signal, Osc', becomes L-level, followed by keeping L-level. After the power was supplied, phases of the synchronous signals, SyncA0' and SyncB0'are decided directly.

Although it has been described above about some timing charts in a case that three synchronous oscillation circuits 410 are connected each other, these synchronous oscillation circuits 410, at least one of which includes a crystal oscillator 408, work similarly. Note that length of a waveform of a synchronous oscillation circuit 410 not including the crystal oscillator 408 changes preferentially as phase of the synchronous oscillation circuit 410 not including the crystal oscillator 408 coincides with phase of a synchronous oscillation circuit 410 including the crystal oscillator 408. If a network of the synchronous oscillation circuits 410 has at least one synchronous oscillation circuit 410 including the crystal oscillator 408, therefore, clock frequency of a whole network can be kept constant.

As shown in FIG.77, now, the synchronous oscillation circuit 410 does not always have to be connected with all other synchronous oscillation circuits 410. It is explained here about a case that the synchronous oscillation circuits 410 are arranged regularly.

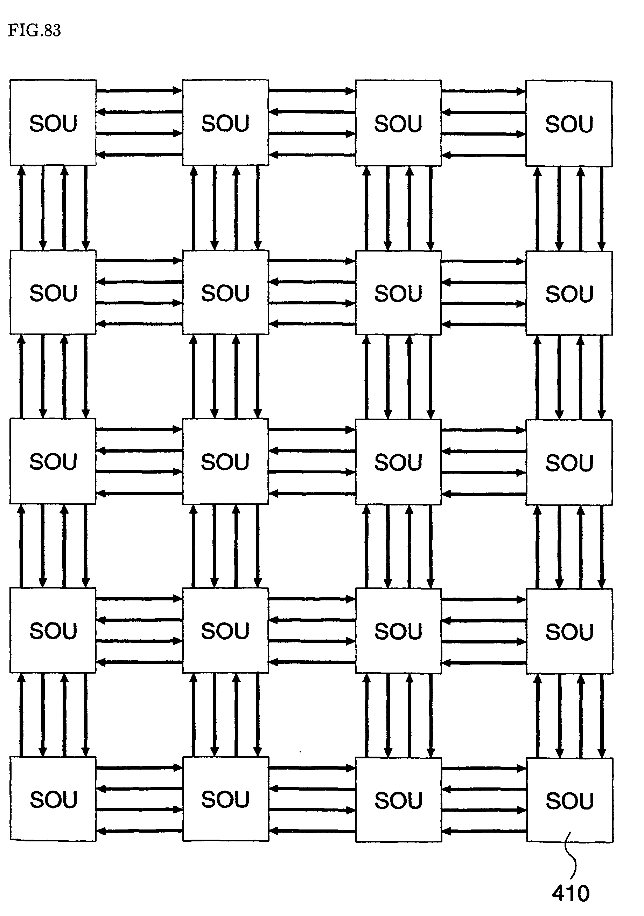

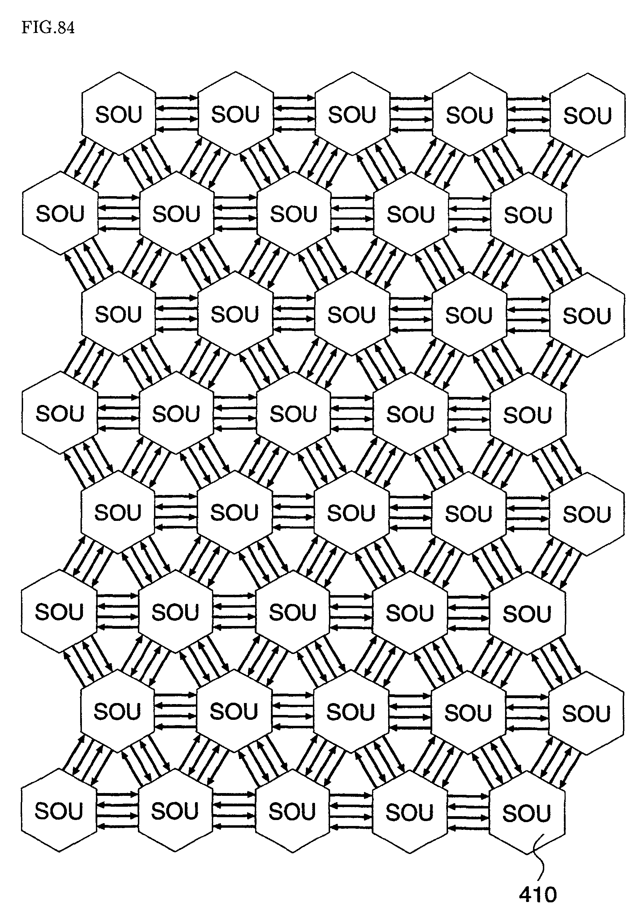

As shown in FIG.83, a two-dimensional oscillation circuit network is a network connecting the synchronous oscillation circuits 410 arranged in the shape of a square lattice each other. In this case, the number of inputs of a NOR gate for A-side synchronization 406a and the NOR gate for B-side synchronization 406b is four, respectively. Note that some inputs of the NOR gate for A-side synchronization 406a and the NOR gate for B-side synchronization 406b which are not connected are carried out pull-down, in a synchronous oscillation circuit 410 near an edge. As shown in FIG.84, the synchronous oscillation circuits 410 can be arranged in the shape of a hexagonal lattice and can be connected with each other, instead of arranging them in the shape of a square lattice. Since all lengths of signal lines for synchronous signals become almost same, by arranging the synchronous oscillation circuits 410 like this, it becomes easy for the synchronous oscillation circuits 410 to synchronize with each other. For a large-scale and regular digital circuit like a pipeline processing device, a DSP (Digital Signal Processor), a systric array, a data-flow machine and a parallel image processing device, these two-dimensional networks can supply some clock signals whose phases coincide more easily than distributing a clock signal inputted from an external part.

As described above, a three-dimensional oscillation circuit network is a network piling up some synchronous oscillation circuits 410 arranged in the shape of a square lattice and in the shape of a hexagonal lattice by 3D LSI technology. In a case of arranging them in the shape of a square lattice, the number of inputs of a NOR gate for A-side synchronization 406a and a NOR gate for B-side synchronization 406b is six, respectively. In a case of arranging them in the shape of a hexagonal lattice, the number of inputs of a NOR gate for A-side synchronization 406a and a NOR gate for B-side synchronization 406b is eight, respectively. In addition, since total length of signal lines comes to be the shortest, by uniting positions of synchronous oscillation circuits 410 between layers each other, all propagation delay time of a synchronous signal of synchronous oscillation circuits 410 become almost same, and it becomes easy for each synchronous oscillation circuit 410 to synchronize with each other. These three-dimensional oscillation circuit networks can supply efficiently some clock signals whose phases coincide, for a systric array and a parallel image processing device like carrying out pipeline processing of data processed simultaneously along a virtical direction by some processors 101 arranged in the shape of a square lattice and a hexiagonal lattice.

In distributing the clock signals, moreover, a network of the synchronous oscillation circuits 410 arranged in the shape of a square lattice and in the shape of a hexagonal lattice and such digital circuits as a processor 101 and an operation circuit can be implemented in some different layers of a 3D LSI, respectively. Arrangement of the synchronous oscillation circuits 410, thus, does not shift because of arrangement of the digital circuits, and also a line signal of the synchronous signals, SyncA0' and SyncB0', does not detour. In addition, since the synchronous oscillation circuit 410 is not influenced by noise of the digital circuits, operation of the synchronous oscillation circuit 410 is stabilized. Furthermore, since the digital circuits can input the clock signals, ClockA and ClockB, from any synchronous oscillation circuit 410 in a network of the synchronous oscillation circuits 410, design of the digital circuits comes to be easy.

Now, it has been described above about an artificial eye 1, a visual device 2, a communication device 7 and an image sensor. It is explained finally about a central control device 221.

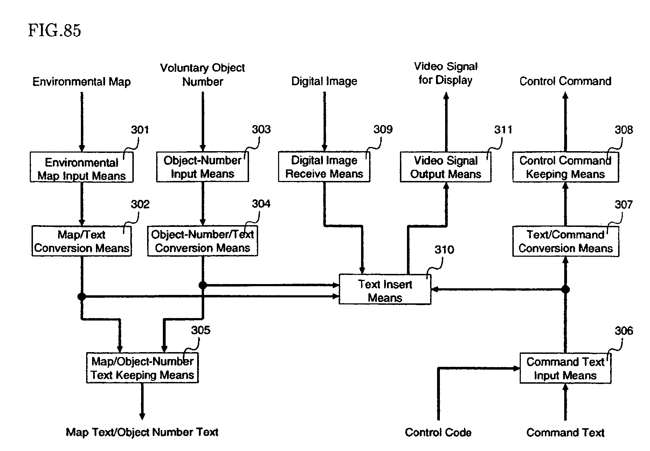

First, a central control device 221 shown in FIG.85 is explained, dividing it into three groups; a group converting an environmental map and the voluntary object number outputted by a visual device 2 to a map text and an object number text which can be inputted by a voice synthesis device 226, a group converting a command text outputted by a voice recognition device 227 to a control command which can be inputted by the visual device 2, and a group inserting the map text, the object number text and the command text in a digital image 111 outputted by the visual device 2.

First group includes an environmental map input means 301, a map/text conversion means 302, an object-number input means 303, an object-number/text conversion means 304 and a map/object-number text keeping means 305.

Whenever the environmental map consisting of some environmental data representing type and position of object areas 141 is outputted from the visual device 2, the environmental map input means 301 inputs this environmental map, and then memorizes it in a buffer sequentially. If the map/text conversion means 302 comes to be able to input the environmental data, the environmental map input means 301 outputs the environmental data one by one, according to the order of input of the environmental data. If the map/text conversion means 302 inputs the environmental data, it converts the type and the position of the object areas 141 to some strings (the map text). At this moment, the map/text conversion means 302 sets position of a user to the origin, followed by converting the position to direction in which the user always watches position and variance of the position of an object, that is, a coordinate based on the front. Furthermore, the map/text conversion means 302 converts the coordinate to some words like "front", "back", "right", "left", "up", "down", "near", "far", "approaching", "receding", "crossing", "passing each other", "passing", and so on, which are intelligible for the user. In addition, the map/text conversion means 302 converts the above position to a coordinate whose origin is position based on direction and magnification of a moving camera 10 included by the environmental map, followed by appending the coordinate to the map text after changing the coordinate into the above words. Therefore, the map text can represent position of an object area 141 by some different coordinates. The map/object-number text keeping means 305 memorizes the map text converted by the map/text conversion means 302 in a buffer sequentially, followed by outputting it to the voice synthesis device 226.

Similarly, whenever the voluntary object number representing the number of objects recorded by the environmental map in a fixed period is outputted from the visual device 2, the object-number input means 303 inputs this voluntary object number and then memorizes it in a buffer sequentially. If the object-number/text conversion means 304 comes to be able to input the voluntary object number, the object-number input means 303 outputs the voluntary object number one by one, according to the order of input of the voluntary object number. If the object-number/text conversion means 304 inputs the voluntary object number, it converts the number of the object areas 141 to some strings (the object number text). The map/object-number text keeping means 305 memorizes the object number text converted by the object-number/text conversion means 304 in a buffer sequentially, followed by outputting it to the voice synthesis device 226.

Second group includes a command text input means 306, a text/command conversion means 307 and a control command keeping means 308. First, whenever some strings (the command text) like "front", "back", "right", "left", "up", "down", "near", "far", "more", "a little more", and so on, which is a recognition result of a command directed by the user, are outputted from the voice recognition device 227, the command text input means 306 inputs this command text, and then memorizes it in a buffer sequentially. If the text/command conversion means 307 comes to be able to input the command text, the command text input means 306 outputs the command text one by one, according to the order of input of the command text. Note that the command text input means 306 also memorizes a control code assigned to a control button 223 in the buffer sequentially. If the text/command conversion means 307 inputs the command text, it converts the command text to a control command which can be inputted by the visual device 2. At this moment, the text/command conversion means 307 converts the command text to a coordinate whose origin is position based on direction of the moving camera 10, that is, a center of a display 222 and magnification of a moving camera 10, followed by calculating a transfer value relative from the current position of the moving camera 10. Therefore, the user can control the moving camera 10 easily, seeing the display 222. The control command keeping means 308 memorizes the control command converted by the text/command conversion means 307 in a buffer sequentially, followed by outputting it to the visual device 2.

Third group includes a digital image receive means 309, a text insert means 310 and a video signal output means 311. First, the digital image receive means 309 inputs the digital image 111 sent by the visual device 2, and then outputs it to the text insert means 310. Whenever the text insert means 310 carries out either inputting the map text from the map/text conversion means 302, inputting the object number text from the object-number/text conversion means 304 or inputting the command text from the command text input means 306, the text insert means 310 inserts the map text, the object number and the command text in a digital image 111, by using a software realizing function of superimposition. The text insert means 310 outputs the digital image 111 to the video signal output means 311, without asking existence of the map text, the object number text and the command text. If the video signal output means 311 inputs the digital image 111 from the text insert means 310, the video signal output means 311 converts the digital image 111 to a video signal represented in a format of NTSC, PAL, HDTV, VGA, MPEG and so on, followed by outputting the video signal to the display 222.

While the invention has been shown by example, it should be understood, however, that the description herein of specific embodiments is not intended to limit the invention to the particular forms disclosed, but on the contrary, the invention is to cover all modifications equivalents, and alternative falling within the spirit and scope of the invention as defined by the appended claims.

### INDUSTRIAL APPLICABILITY

As suggested by claim 1 and claim 3, a user of the present invention can know there are some objects whose type is specific around the artificial eye 1 via the user terminal 4 because the artificial eye 1 can send the type of the objects taken by the moving camera 10. The user can find out some objects approaching to the artificial eye 1 and can supervise some persons loitering around the artificial eye 1, by arranging some artificial eyes 1 around a car, a ship, a house, a building and a space station and so on, and by installing one or more user terminals 4 at a specific room or wearing them on the user. By using a cellular phone 211 and a personal digital assistant for the user terminal 4, especially, the user can grasp situations of the car, the ship, the house, the building, the space station and so on even though he is in a going-on place or a bedroom. For example, a driver can know there is an object at a blind spot and can grasp position of some objects simultaneously, by arranging some artificial eyes 1 around the car. In addition, the user can prevent such event as he kills his baby because of leaving the baby in his car, by arranging the artificial eye 1 as it takes an image of the inside of the car. Even though a doubtful person approaches to a car parking at a parking lot at night, the artificial eye 1 can send his image to the user terminal 4. Therefore, the user can take a quick action anywhere, and he can do this image in evidence of damage of his car later by recording the image. Moreover, if some of the user terminals 4 are used for monitoring terminals 5, the user of the user terminal 4 is free from troublesome surveillance around the artificial eyes 1, because a supervisor operating the monitoring terminals 5 always supervises around the artificial eyes 1. On the other hand, since the artificial eye 1 can notify that an object approached around them to the monitoring terminal 5, one supervisor can manage many artificial eyes 1. Thus, security companies and safety departments of companies can supervise many places by a few surveillance members.

As suggested by claim 2 and claim 3, a user of the present invention can know when and where specific type of objects are, and how many the number of the objects is, via the user terminal 4 because the artificial eye 1 can send the type of the objects taken by the moving camera 10 to the database 6. The user can investigate traffic amount of persons and cars, and can predict the traffic amount of persons and cars by statistical data, by arranging some artificial eyes 1 around a road, a mall, a shop and a station and so on. In short, a shop manager can adjust production and stock of goods, by investing traffic amount in front of his shop and the number of customers who came to his shop by the database 6. By combining the statistical data with the weather forecast, especially, this effect becomes remarkable. In addition, a driver can make a driving plan which can avoids traffic congestion, by investing lump condition of roads by the database 6. Moreover, if some of the user terminals 4 are used for monitoring terminals 5, the user of the user terminal 4 is free from troublesome surveillance of the database 6 because a supervisor operating the monitoring terminals 5 always supervises the database 6. A special knowledge analyzing the statistical data is not also necessary for the user, because the supervisor can accumulate know-how for analyzing the statistical data in the database 6. Thus, organizations of a franchise chain and so on can open shops quickly and efficiently.

As suggested by claim 4, the moving camera 10 takes a high-resolution image of objects, and moreover the visual device 2 distinguishes type of the objects and specifies position of the objects, because the visual device 2 controls the moving camera 10. By installing the present invention, a pet robot can move toward a person found out. Furthermore, if this pet robot carries a device and a program which distinguish a face of the person, the pet robot comes to be able to distinguish whether the person is its owner or not easily.

As suggested by claim 5, the moving camera 10 tracks an object automatically, because the visual device 2 controls the moving camera 10. Therefore, a user in a remote place and a computer do not always have to control the moving camera 10. In a case that the object is a person, moreover, the person does not always have to check whether the moving camera 10 takes his image suitably or not. Since the person in the remote place and the computer can do another work in vacant time, the user and the computer can work efficiently, while the communication device 7 does not always have to communicate control commands. For example, if a television reporter installs the present invention at an incident spot and an event spot, he can report and photo an interview by himself and can send it to the broadcasting station directly. In short, in a case that an individual distributes an animation image on the Internet, the present invention becomes a useful photography equipment. In addition, if the visual device 2 can judge whether there is an object in an animation image taken by the moving camera 10 or not, the communication device 7 can send a digital image 111 representing the object and the masked image 148. Therefore, even a communication device 7 whose speed is slow can send the animation image representing the object efficiently. The present invention can thus use such a media as a cellular phone 211, the capacity of whose communication circuit is limited, efficiently. Especially, since the visual device 2 can detect a face as an object area 141 easily, the user can use the present invention for an individual attestation apparatus, by connecting the cellular phone 211 to a remote computer system. Of course, by filling a suitable image in a background, the present invention protects the user's privacy, while the user can use the present invention for making a seal of his face picture pleasantly. Moreover, since the communication device 7 sends a digital image 111 and a masked image 148 only when the visual device 2 recognized an object, the user and a security company can also use the present invention for a cheap surveillance equipment, by installing the present invention on an office, a house, a factory, a road, a car and so on.

As suggested by claim 6, even though a CCD (Charge Coupled Device) camera whose degree of accumulation is same as the degree of a CCD camera fixed to glasses, is used, the artificial eye 1 can realize large view and strong eyesight, because the moving camera 10 carries out pan, tilt, roll and zoom. Moreover, since the visual device 2 finds out an object automatically, a user can perceive an object approaching to himself like a pedestrian 324, a bicycle, a car 321 and so on, and can walk in safety. Since the visual device 2 provides the user with information useful for recognizing the object, the present invention can reduce his load more than a CCD camera used in a simple way, and can provide him with a comfortable life. In addition, if electric stimuli controlling muscle moving the user's eye can be taken out from his brain directly, the visual device 2 can control the moving camera 10, using the stimuli. In a case that the moving camera 10 uses a multi-DOF motor for mechanism controlling pan, tilt and roll, moreover, the artificial eye 1 comes to be embedded in the eye socket easily because form of the multi-flexbility motor is similar to form of a real eye. Especially, in a case of a ultrasonic motor and a piezoactuator in which the multi-DOF motor uses piezo elements, the multi-DOF motor can realize space saving, low weight and low power consumption, and the user can reduce sense of incongruity brought by loss, unexpected event and its weight. In a case that the artificial eye 1 was embedded in the user's eye socket, it is difficult for a facing person to see the artificial eye 1 because the user wears sunglasses. Therefore, mental load of both of them can be reduced. Moreover, a doctor does not have to vacate a hole for the user's skull and the user does not have to care about wiring which comes out from his skull, by embedding an electrode array terminal 214 in an optic nerve, a lateral geniculate nucleus, an occipital lobe, a temporal lobe and a parietal lobe. Thus, the present invention can reduse load of the user.

As suggested by claim 7, almost all parts of image processing carried out by the visual device 2 are implemented in a photographic part of the moving camera 10. In short, the present invention can carry out image processing fast, in spite of space saving and low power consumption. The present invention can make maintenance of the artificial eye 1 easy, reducing load of the user.

As suggested by claim 8, the position/size/inclination detection means 44 can detect position, size and inclination of an object from a formed edge-information image 115, an object-area image 142 and a color-information image 172, by processing in parallel for each pixel. Even though form of the object is not clear beforehand, the position/size/inclination detection 44 can derive inclination of the object. The position/size/inclination detection 44 can be used even for pretreatment for recognizing some objects from a frame image of an animation image taken by a video camera or a still image either taken by the video camera or captured by a scanner, and can also realize an algorithm of pattern recognition of the animation image and the still image fast and cheaply. Moreover, the position/size/inclination detection means 44 can be used for pretreatment for distinguishing texture. Since the array operation unit 100 does not output eight transfer-source redundant information 183, a system inputting a redundant-information image 132 and an inclination angle from the position/size/inclination detection means 44 can make communication mechanism simple.

As suggested by claim 9, the array operation unit 100 can transmit a lot of data for a short time to some neighbor array operation units 100. In a case that a lot of data like a transfer-source redundant-information image 184 must be transmitted to the neighbors, thus, the present invention can realize the invention described in claim 8, without dropping performance by bottleneck of communication. Even in a case of carrying out some kinds of local and parallel image processing simultaneously, the present invention can carry out them efficiently. Moreover, since each controller 103 has a front input data register 61 and a resutl data register 62, the array operation unit 100 can input and output some data simultaneously. Especially, the present invention is efficient for such an edge-information generation device and an area normalization device as carrying out local and parallel image processing which uses some images. In addition, an LSI designer can use bumps of a 3D LSI, by using some front input data registers 61 and some result data registers 62 in some controllers 103 in communicating between array operation units 100 in some different layers.

As suggested by claim 10, the array operation unit 100 can transmit a lot of data for a short time to some neighbor array operation units 100. In a case that a lot of data like a transfer-source redundant-information image 184 must be transmitted to the neighbors, thus, the present invention can realize the invention described in claim 8, without dropping performance by bottleneck of communication. Even in a case of carrying out some kinds of local and parallel image processing simultaneously, the present invention can carry out them efficiently. Since the present invention implements some controllers 103 in some independent layers, respectively, and the controller 103 communicates with a processor 101 and a memory 102 via address bus 51 and data bus 52, an LSI designer can improve communication performance between array operation units 100, only by increasing the number of layers implementing the controllers 103 if desired. Note that an LSI can accumulate the controllers 103 with high density, by combining the invention of claim 9 and the invention of claim 10.

As suggested by claim 11, in a case that the visual device 2 processes some animation images, the number of whose pixels is constant, the visual device 2 needs only few virtual array operation units 105, if it is compared with a visual device 2 using the array operation units 100. In short, in a case that the number of the array operation units 100 which can be implemented by conventional LSI (Large-scale Integrated Circuit) technology is less than the number of pixels of the animation images, an LSI designer can implement an LSI by using some virtual array operatin units 105. Moreover, in a case that the array operation unit 100 must communicate a lot of data with some adjoining array operation units 100, as shown by the position/size/inclination detection means 44, the LSI designer can also operate the visual device 2 fast, by deciding the number of the array operation units 100 assigned in the virtual array operation unit 105 suitably, because the virtual array operation unit 105 only has to refer these data in a memory 102. Since the array operation units 100 can also share a program and some look-up tables in the virtual array operation unit 105, a data processing device 100 can reduce the total amount of consumption of the memory 102.

As suggested by claim 12, claim 13 and claim 14, a maker of CCD (Charge Coupled Device) and CMOS (Complementary Metal Oxide Semiconductor) image sensors can make high efficient image sensors, using LSI, CCD and CMOS manufacturing technology which the maker has as it is. Since the maker can make the high efficient image sensors cheaply for a short time, a user of the present invention comes to be able to use the high efficient image sensors cheaply for various uses like a surveillance equipment, a security equipment, a search equipment, a watch equipment, a tracking equipment, a counting equipment, a pet robot, a receptionist robot, a work robot, a welfare robot, and so on, in a house, a convenience store, a supermarket, an office, a factory, a road, a parking, a station, a public-benefit organization, a car, a ship and a space station. In the present invention, in addition, desiners of CCD and CMOS image sensors can design high efficient image sensors which can take suitable size of images easily, only by designing one funcitional column 201 and arranging many funcitional columns 201 in the share of a two-dimensional lattice. Thus, these designers can design the high efficient image sensors cheaply for a short time.

As suggested by claim 15 and claim 16, count numbers of all interblocked counters 416 can coincide by distributing the interblocked counters 416 in a whole LSI as propagation delay time is less than a cycle of the clock signals, even though frequency of the clock signals became high. By using some synchronous oscillation circuits 410 in order to generate the clock signal, especially, the clock signals are synchronized in a whole LSI even though the frequency of the clock signals is high. Therefore, all of the interblocked counters 416 can be synchronized. Since the interblocked counters 416 and the synchronous oscillation circuits 410 can be separated from other digital circuits easily, an LSI designer can make a group of the interblocked counters 416 and the synchronous oscillation circuits 410, and digital circuits except the interblocked counters 416 and the synchronous oscillation circuits 410 fast, respectively. Thus, the LSI designer comes to be able to design an LSI corresponding to high frequency of a clock signal easily. The present invention can supply dividing signals and timer interrupt signals synchronized with the clock signal to a whole parallel system, the larger the scale of which becomes, the more its performance improves, like a pipeline processing device, a DSP (Digital Signal Processor), a systric array, a data-flow machine, a parallel image processing device, and so on. Therefore, the LSI designer can design a large-scale parallel system, avoiding a problem of the propagation delay time.

As suggested by claim 17, digital circuits arranged in a whole LSI can receive simultaneously a signal which is sent from any place in the LSI. Especially, in a case that some functional blocks are implemented in an LSI, like a system LSI, the higher the clock frequency becomes, the more difficult the design of each functional block becomes as timing of a reset signal, an interrupt signal, input signals and output signals coincides in all of the functional blocks. However, since the present invention can control the timing of the reset signal, the interrupt signal, the input signals and the output signals, by considering only the maximum propagation delay time, regardless of arrangement of each functional block, an LSI designer comes to be able to implement these functional blocks in an LSI, without changing most design of the functional blocks. Moreover, in a case that many processors 101 input the same command like SIMD (Single Instruction Stream Multi Data Stream)-type multiprocessors, all processors 101 must operate to the same timing in spite of difference of propagation delay time of signals from a memory 102 memorizing some commands to each processor 101. However, since the present invention can supply a command to all processors 101 simultaneously without depending on clock frequency, the LSI designer comes to be able to design the processors 101 easily.

As suggested by claim 18 and claim 19, digital circuits in a whole LSI (Large-scale Integrated Circuit) can be synchronized by appending only simple circuits, regardless of such semiconductor manufacturing technology as bipolar semiconductors like TTL (Transister-Transister Logic) and ECL (Emitter-Coupled Logic), and CMOS (Complementary Metal Oxide Semiconductor). Especially, since clock frequency has recently become high because of improvement in the speed of the digital circuits, it came to be difficult to hold synchronization in a whole LSI. By using the present invention, then, a maker of semiconductors comes to be able to design processors 101 and measurement apparatus which must operates fast easily. Moreover, if some synchronous oscillation devices 410 in a part of an interblocked device input some synchronous signals from an oscillation circuit stable like a crystal oscillator 408, clock frequency of a whole interblocked device can coincide with frequency of the crystal oscillator 408. The present invention can supply clock signals which are synchronized to a whole parallel system, the larger the scale of which becomes, the more its performance improves, like a pipeline processing device, a DSP (Digital Signal Processor), a systric array, a data-flow machine, a parallel image processing device, and so on. Therefore, an LSI designer can design a large-scale parallel system, avoiding a problem of the propagation delay time.

## Claims

1. A data acquisition system comprising one or more artificial eyes and one or more user terminals connected to a communication network,
wherein said artificial eyes have moving cameras, visual devices and communication devices,
wherein said moving cameras have mechanism carrying out at least one of pan, tilt, roll and zoom,
wherein said visual devices carry out:
capturing digital images from animation images taken by said moving cameras;
generating type, position and the number of objects in said digital images;
controlling said mechanism carrying out at least one of said pan, said tilt, said roll and said zoom,
wherein said communication devices comprise:
sending at least one of said digital images, said type, said position and said number to said user terminals;
receiving control commands corresponding to said pan, said tilt, said roll and said zoom from said user terminals, and sending said control commands to said visual devices,
wherein said user terminals comprise central control devices, displays and control buttons,
wherein said central control devices receive at least one of said digital images, said type, said position and said number from said communication devices,
wherein said displays display at least one of said digital images, said type, said position and said number,
wherein said user terminals generate said control commands assigned to said control buttons,
wherein said central control devices send said control commands to said communication devices.

2. A data acquisition system comprising one or more artificial eyes, a data base and one or more user terminals,
wherein said artificial eyes have moving cameras, visual devices and communication devices,
wherein said moving cameras have mechanism carrying out at least one of pan, tilt, roll and zoom,
wherein said visual devices carry out:
capturing digital images from animation images taken by said moving cameras;
generating type, position and the number of objects in said digital images;
wherein said communication devices send at least one of said digital images, said type, said position and said number to said data base,
wherein said data base comprises:
accumulating said digital images, said type, said position and said number;
generating statistical data from said digital images, said type, said position and said number;
searching said digital images, said type, said position, said number and said statistical data, by using search keys;
wherein said user terminals comprise central control devices, displays and control buttons,
wherein said central control devices receive at least one of said digital images, said type, said position, said number and said statistical data from said communication devices,
wherein said displays display at least one of said digital images, said type, said position, said number and said statistical data,
wherein said user terminals generate said search keys directed by said control buttons,
wherein said central control devices send said search keys to said communication devices.

3. A data acquisition system according to claim 1 or 2, wherein said user terminals have at least one of a voice synthesis device having a speaker and a voice recognition device having a microphone,
said voice synthesis device converts said type, said position, said number and said statistical data to a voice signal, and
said voice recognition device converts a voice collected by said microphone to said control commands and said search keys.

4. An artificial eye having a moving camera and a visual device,
wherein said moving camera has at least one of mechanisms carrying out pan, tilt, roll and zoom, and
said visual device comprises:
means for capturing digital images from an animation image taken by said moving camera;
means for distinguishing type of objects in said digital images;
means for detecting position, size and inclination of said objects;
means for counting the number of said objects;
means for controlling said mechanisms carrying out said pan, said tilt, said roll and said zoom; and
means for outputting said digital images, said type, said position and said number.

5. An artificial eye according to claim 4, having a communication device,
wherein said communication device comprises:
means for compressing said digital images; and
means for sending compressed said digital images, said type, said position and said number via a communication network.

6. An artificial eye according to claim 4, having a stimulus generating device, an electrode array terminal, a connector and a battery,
wherein said stimulus generating device converts a normalized image, said type, said position, said size and variance of said position of said objects to electric stimuli, and
said electrode array terminal tells said electric stimuli to a brain via said connector.

7. An artificial eye according to claim 4, 5 or 6,
wherein said moving camera carries an image sensor that accumulates photodetectors, A/D converters and said visual device.

8. A visual device, wherein each of array operation units arranged in the shape of a lattice comprises:
means for initializing said array operation unit;
means for finishing processing if there is no binary information to be inputted;
means for inputting said binary information;
means for transforming said binary information into redundant information;
means for calculating gravity center from neighbors of a band-pixel value in a redundant-information image representing said redundant information, and converting a transfer value derived from said gravity center to a band-pixel value of a transfer-value image by operating imagery of position;
means for transferring each of band-pixel values in a transfer-source redundant-information image representing transfer-source redundant information to transfer position, according to said transfer value, for each transfer source;
means for transferring said band-pixel value in said redundant-information image to said transfer position, according to said transfer value;
means for updating each of said band-pixel values in said transfer-source redundant-information image to a summation of a summation of all of said band-pixel values in said transfer-source redundant-information image which have already been transferred and a value corresponding to said band-pixel value in said redundant-information image which have already been transferred, for each of said transfer-sources;
means for updating said band-pixel value in said redundant-information image to a summation of all of said band-pixel values in said redundant-information image which have already been transferred;
means for calculating an inclination angle from all of said band-pixel values in said transfer-source redundant-information image; and
means for outputting said band-pixel value in said redundant-information image and said inclination angle.

9. A visual device including array operation units arranged in the shape of a lattice, each of which has a processor, a memory and a plurality of controllers comprising;
means for distinguishing said array operation unit that sends data transmitted between said array operation units; and
means for distinguishing type of said data transmitted,
wherein each of said array operation units communicates a plurality of said data simultaneously to said adjoining array operation unit, by connecting each of said controllers to one of said controllers in said adjoining array operation unit by signal lines.

10. A visual device according to claim 9,
wherein said signal lines between said array operation units do not cross, by stacking all of said controllers in each of said array operation units.

11. A visual device comprising a plurality of virtual array operation units arranged in the shape of a lattice, each of which has a processor, a memory and a plurality of controllers, each of which has a front input register set that has one or more front input registers which are shift registers and one or more counters,
wherein, in each of said virtual array operation units,
said processor carries out programs of a plurality of array operation units arranged in the shape of a lattice;
said controller communicates with said controllers in said adjoining virtual array operation units;
said shift register inputs a plurality of result data arranged in the shape of a lattice in order and memorizes them;
said counter counts the number of said result data; and
said processor selects one of said result data and inputs it.

12. An image sensor including functional blocks arranged in the shape of a lattice,
in each of which,
there are one or more photodetectors, one or more A/D converters and one or more array operation units;
said photodetectors and said A/D converters are connected one by one;
all of said array operation units input digital signals from at least one of all of said A/D converters and all of said array operation units; and
all of said array operation units input clock signals,
wherein said array operation units carry out image processing for an animation image taken by said photodetectors, by connecting said array operation units between said adjoining functional blocks one by one.

13. An image sensor including functional blocks arranged in the shape of a lattice,
in each of which,
there are a plurality of photodetectors, a plurality of A/D converters, one or more parallel/serial converters and one or more virtual array operation units;
said photodetectors and said A/D converters are connected one by one;
said A/D converters and said parallel/serial converter are connected every band of photodetectors;
all of said virtual array operation units input digital signals from at least one of all of said parallel/serial converters and all of said virtual array operation units; and
all of said virtual array operation units input clock signals,
wherein said virtual array operation units carry out image processing for an animation image taken by said photodetectors, by connecting said virtual array operation units between said adjoining functional blocks one by one.

14. An image sensor according to claim 12 or 13,
in which each of said functional blocks includes:
a synchronous oscillation circuit generating said clock signal; and
an interblocked counter counting the number of pulses of said clock signal,
wherein the first interblocked device comprises said synchronous oscillation circuits arranged in the shape of a lattice, by connecting them with said adjoining synchronous oscillation circuits, respectively, and
the second interblocked device comprises said interblocked counters arranged in the shape of a lattice, by connecting them with said adjoining interblocked counters, respectively.

15. An interblocked device comprising interblocked counters arranged in the shape of a square lattice and in the shape of a hexagonal lattice,
each of said interblocked counters includes:
a synchronous counter;
a NOT gate for end-value judgment;
a latch circuit for interblocking;
a NOR gate for interblocking; and
a NOR gate for counting,
wherein count numbers of all of said interblocked counters coincide, by stopping counting of said adjoining interblocked counters by an interblocked signal outputted by said NOT gate for end-value judgement in each of said interblocked counters.

16. An interblocked device according to claim 15,
wherein each of said interblocked counters has said NOR gate for end-value judgement that judge an end value of said count number, and
each of said synchronous counters has:
synchronous clear means; and
synchronous load means.

17. An interblocked device according to claim 15 or 16,
wherein one or more said interblocked counters have:
a decoder for signal distribution;
a latch circuit for signal distribution;
a NOR gate for signal distribution; and
a flip-flop circuit for signal distribution,
and form an input signal into a signal whose cycles are positive times of a clock signal.

18. An interblocked device comprising synchronous oscillation circuits arranged in the shape of a square lattice and in the shape of a hexagonal lattice,
each of said synchronous oscillation circuits includes:
two NOR gates for oscillation;
two resistors for oscillation;
two capacitors for oscillation;
two latch circuits for oscillation;
two NOR gates for synchronization; and
a NOR gate for initialization,
wherein phases of said clock signals of all said synchronous oscillation circuits coincide, by shifting said phases of said clock signals of said adjoining synchronous oscillation circuits by synchronous signals outputted from said capacitors for oscillation in each of said synchronous oscillation circuits.

19. An interblocked device according to claim 18,
wherein each of said synchronous oscillation circuits includes two input resistors.
